(19) Europäisches Patentamt / European Patent Office / Office européen des brevets

(11) **EP 3 684 488 B1**

(12) **EUROPEAN PATENT SPECIFICATION**

(45) Date of publication and mention
of the grant of the patent:
**20.12.2023   Bulletin 2023/51**

(21) Application number: **18871054.5**

(22) Date of filing: **26.10.2018**

(51) International Patent Classification (IPC):
**B01D 15/08** (2006.01)    **B01D 15/16** (2006.01)
**G01N 29/44** (2006.01)    **G01N 30/02** (2006.01)
**G01N 30/86** (2006.01)    **G05B 13/02** (2006.01)

(52) Cooperative Patent Classification (CPC):
**B01D 15/08; B01D 15/3828; B01D 15/422;**
**G01N 30/8658;** G01N 30/8693

(86) International application number:
**PCT/US2018/057712**

(87) International publication number:
**WO 2019/084404 (02.05.2019 Gazette 2019/18)**

(54) **METHOD FOR DESIGNING AN EFFICIENT PREPARATIVE CHROMATOGRAPHIC SEPARATION PROCESS**

VERFAHREN ZUM ENTWURF EINES EFFIZIENTEN PRÄPARATIVEN CHROMATOGRAPHISCHEN TRENNVERFAHRENS

PROCÉDÉ DE CONCEPTION D'UN PROCÉDÉ DE SÉPARATION CHROMATOGRAPHIQUE PRÉPARATIVE EFFICACE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.10.2017   US 201762578434 P**

(43) Date of publication of application:
**29.07.2020   Bulletin 2020/31**

(73) Proprietor: **Purdue Research Foundation**
**West Lafayette, IN 47906 (US)**

(72) Inventors:
• **WANG, Nien-Hwa Linda**
  **West Lafayette**
  **Indiana 47906 (US)**
• **CHOI, Hoon**
  **Miami, FL 33156 (US)**
• **HARVEY, David**
  **Las Vegas, NV 89141 (US)**

(74) Representative: **Strehlke, Ingo Kurt**
**Von Rohr**
**Patentanwälte Partnerschaft mbB**
**Rüttenscheider Straße 62**
**45130 Essen (DE)**

(56) References cited:
**EP-A1- 1 970 108**      **US-A- 4 579 663**
**US-A1- 2003 010 716**   **US-A1- 2012 227 043**
**US-A1- 2017 241 992**

• **JEN S ET AL: "Theory of optimization of ideal displacement chromatography of binary mixtures",** JOURNAL OF CHROMATOGRAPHY A, ELSEVIER, AMSTERDAM, NL, vol. 590, no. 1, 24 January 1992 (1992-01-24), pages 3-15, XP026514466, ISSN: 0021-9673, DOI: 10.1016/0021-9673(92)87002-P [retrieved on 1992-01-24]
• **LING LEI ET AL: "Ligand-assisted elution chromatography for separation of lanthanides",** JOURNAL OF CHROMATOGRAPHY A, ELSEVIER, AMSTERDAM, NL, vol. 1389, 11 February 2015 (2015-02-11), pages 28-38, XP029204489, ISSN: 0021-9673, DOI: 10.1016/J.CHROMA.2015.02.004

**Description**

The present invention relates to a method for designing an efficient separation process according to claim 1. Furthermore, the present invention also relates to a manufacture process incorporating the method for designing an efficient separation process in isolation and purification of a material of industrial importance according to claim 15.

GOVERNMENT SUPPORT CLAUSE

TECHNICAL FIELD

The present application relates a method for designing an efficient preparative chromatographic separation process for a multicomponent mixture using an algorithm based on a set of analytical testing data.

BACKGROUND

This section introduces aspects that may help facilitate a better understanding of the disclosure. Accordingly, these statements are to be read in this light and are not to be understood as admissions about what is or is not prior art.

Rare earth elements (REE) are scandium, yttrium, and 15 other elements in the lanthanide series. Because of their unique physicochemical properties, REE have been widely used in high technology products such as catalysts, batteries, magnets, phosphors, high-performance motors, and turbines (Abraham, DS, The Elements of Power: Gadgets, Guns, and the Struggle for a Sustainable Future in the Rare Metal Age (Yale University Press, 2015). Although the total amounts of REE are small, 160,000 tons in 2016, they are critical materials for high-tech industries. Despite their significance, more than 83 % of the global REE supply has been controlled by China. The U.S. does not produce any REE currently, and 72% of REE consumption in the U.S. was imported from China as of 2016. This is largely because REE concentrations are low in the ores and their similar physicochemical properties make it difficult to separate REE. Particularly, REE purification step is the most difficult step in the production process (Ling, L et al., J. Chromatogr. A 2015, 1389, 28-38).

The conventional methods of producing high-purity REE are mainly based on extraction of them from ores. Mining, grinding, physical separation, magnetic separation, strong acid leaching, neutralization, and precipitation are required to obtain a crude mixture of REE. REE have the same valence and little differences in size or other physical and chemical properties. They cannot be separated using conventional ion exchange or chromatography processes. The conventional technologies for REE purification are based on two-phase liquid-liquid extraction (Xie F., et al., Miner. Eng. 2014, 56, 10-28). They require large amounts of solvents/extractants and 1,200 to 1,800 mixer-settler units in sequence or in parallel to produce high-purity REE from ores. The conventional methods are inefficient and generate large amounts of toxic wastes, which cannot be economically recycled. About 2,000 tons of tailing is produced for each ton of REE oxide produced. The current method is inefficient, not easily adaptable to different feed compositions, and not environmentally sustainable. Since the U.S. has the strict environmental regulations, the current extraction process is not feasible in the U.S.

Ligand-assisted chromatography separates REE by utilizing complexation reactions between REE and ligands. Although most adsorbents or ion exchange resins have no selectivity for REE, several commercially available ligands have significant selectivity for REE (Powell, JE et al., Trans. Metall. Soc. AIME 1959, 215, 457-463). Ligand-assisted chromatography has shown feasibility for REE purification on the lab scale and preparative chromatography scale. Ling and Wang developed a ligand-assisted elution (LAE) process, which reduces the processing volume and the amount of chemicals of liquid-liquid extraction by an order of magnitude.

Ligand-assisted displacement chromatography (LAD) was developed by Spedding and Powell in the 1950' s (Spedding, FH et al., J. Am. Chem. Soc. 1947, 69, 2786-2792; Spedding, FH et al., J. Am. Chem. Soc. 1947, 69, 2812-2818; Spedding, FH et al., J. Am. Chem. Soc. 1950, 72, 2349-2354; Spedding, FH et al., J. Am. Chem. Soc. 1950, 72, 2354-2361). They introduced citrate ligand in the mobile phase and used strong cation exchange beds to separate REE mixtures. Successive research has been done with other ligands which have higher selectivity for REE such as EDTA and HEDTA (James DB et al., . Inorg. Nucl. Chem. 1961, 19, 133-141; Spedding FH et al., J. Am. Chem. Soc. 1956, 1503, 34-37). Similar systems with EDTA and sulfonic resins or iminodiacetic acid resins were conducted by Lindstrom and Moore, respectively (Lindstrom RE, Separation of Rare-earth Elements in Bastnasite by Ion Exchange (University of Michigan Library, 1959); Moore BW, et al., Rapid Separation of Heavy Rare-earth Elements (U.S. Dept. Of the Interior, Bureau of Mines, 1995)). LAD is advantageous because the column can be fully utilized for separation and the feed concentration is not diluted by elution. The REE were recovered with a relatively high purity (> 99%) and yield (> 83%). However, each separation run took several months, resulting in a poor sorbent productivity. Since the separation mechanisms of LAD were not well understood, currently all the literature LAD processes were designed by trial and error. Furthermore, no rate models or general design/optimization methods exist. For these reasons, LAD has not been developed or used for large scale production of REE. There are unmet needs for further development of the LAD chromatographic separation process.

Jen S. et al: "Theory of optimization of ideal displacement chromatography of binary mixtures" deals with the optimization of the displacement chromatographic separation of binary mixtures for maximizing the column throughput.

Ling Lei et al: "Ligand-assisted elution chromatography for separation of lanthanides" discloses a ligand-assisted elution chromatography process for the separation of Ln's for titania.

It is an object of the present invention to provide a method for designing an efficient separation process of compositions of a feed mixture.

The above object is achieved with a method according to claim 1. Beneficial aspects of the claimed method are subject of the subclaims.

## SUMMARY

This invention relates to a method for designing an efficient separation process comprising the steps of:

> a. analyzing compositions of a feed mixture;
> b. selecting a sorbent, a displacer, and a presaturant;
> c. testing for intrinsic parameters of said sorbent and effective selectivity between any two components of said feed mixture;
> d. optimizing separation parameters using an algorithm based on the intrinsic parameters of selected sorbent, effective selectivity, components of said feed mixture, targeted yield and purity; and
> e. conducting said efficient separation process according to the optimized separation parameters,

wherein said algorithm for obtaining optimized parameters for said effective separation process comprises the steps of:

> a. collecting column radius, particle size, column capacity, bed void, particle porosity, displacer concentration, diffusivity coefficients, feed concentration and composition, selectivity, target yield, pressure limit, and purity cut;
> b. calculating an overall mass transfer coefficient;
> c. determining a nonideal factor from an empirical correlation;
> d. calculating a loading fraction based said nonideal factor;
> e. calculating a flow rate for a plurality of column lengths based on said mass transfer coefficient;
> f. verifying that said flow rate is permissible under a specified pressure limit;
> g. determining productivity and selecting the highest productivity system; and
> h. generating a set of optimized parameters for said efficient separation process.

Using those parameters, our algorithm is able to provide the optimum values of dimensionless groups, including feed loading volume, column length, linear velocity, and the maximum ligand concentration to reach the maximum productivity for a given yield and purity from the dimensionless groups. Furthermore, for the given specific column size (ID), the algorithm will project the flow rate, feed loading volume, and the maximum ligand concentration in order to obtain the best separation productivity. This present invention can be used to predict operating parameters to give the highest productivity for a constant pattern isotachic train at a given yield. This method can also be applied to a continuous process as a "multi-zone LAD process" using multi-columns, especially for separating REE having order of magnitude different compositions.

Parts of this disclosure have been published: Hoon Choi, David Harvey, Yi Ding, Nien-Hwa Linda Wang, "Key parameters controlling the development of constant-pattern isotachic trains of two rare earth elements in ligand-assisted displacement chromatography" J. Chromatogr. A 2018, 1563, 47-61; Hoon Choi, David Harvey, Yi Ding, Nien-Hwa Linda Wang, "Constant-pattern design method for the separation of ternary mixtures of rare earth elements using ligand-assisted displacement chromatography, Journal of Chromatography A (2018), https://doi.Org/10.1016/j.chroma.2018.09.056.

## BRIEF DESCRIPTION OF THE DRAWINGS

Fig. 1 (a) Development of an isotachic train in an ideal system and (b) development of a constant pattern isotachic train in a nonideal system in conventional displacement chromatography.

Fig. 2. (a) Operation and separation mechanisms of adsorption and reaction for LAD separation of $REE_1$ and $REE_2$; (b) Column profiles showing the development of a constant-pattern "isotachic train" in LAD at $t_8$.

Fig. 3. Overview of the approach to develop a general map. The method is based on dimensionless group analysis of the minimum column length to develop an isotachic train in an ideal system $L_{c,iso}$ based on the wave interference theory (left), the constant-pattern mass transfer zone length for non-ideal systems $L_{MTZ,CP}$ from Shock layer analysis of binary pairs (right), and the transient (non-constant pattern) mass transfer zone length $L_{MIZ,T}$ estimated from rate model simulations (center).

Fig. 4. Definition of $L_{feed}$, $L_{c,iso}$, compared with $L_c$

Fig. 5. Definition of mass transfer zone. $t_{MTZ}$ is shown in effluent histories.

Fig. 6. Dimensionless groups which govern the mass transfer zone length for constant-pattern mass transfer zone length $L_{MTZ,CP}$ and transient (non-constant-pattern) mass transfer zone length $L_{MTZ,T}$ as a function of the key dimensionless group of Eq. (11). $L_f$ is the loading fraction, $\alpha$ the effective selectivity for the binary pair, $\theta$ is the cut point defining the mass transfer zone length, $\phi$ is the dimensionless column length, $\phi = L_c/L_{c,iso}$. $L_{iso}$ is the minimum column length for an ideal system to reach the isotachic state.

Fig. 7. A general map indicating the constant pattern region (shaded in blue) for the formation of constant-pattern isotachic train versus the non-constant-pattern region. The $\phi$ in the y-axis is the dimensionless column length, $\phi = L_c/L_{c,iso}$, where $L_c$ is the column length, and $L_{c,iso}$ is the column length for an ideal system to reach isotachic state.

It is also $L_f^{id}/L_f$ . $L_f^{ic}$ is the loading fraction of an ideal system to reach isotactic state, and $L_f$ is the loading fraction of a non-ideal system. $\alpha^e$ is the effective selectivity for the binary pair in the mass transfer zone.

Fig. 8. Yield at constant-pattern isotachic state (a) for an ideal system $Y_2$ is 1 for a middle component; (b) for a non-ideal system $Y_2$ is determined from the two mass transfer zone lengths of two adjacent bands in the column effluent, $Y_2 = L_x/L_i$, where $L_i$ is the effluent band width for an ideal system.

Fig. 9a shows the yield of the middle component as a function of $\alpha_{ij}$ of the binary pairs in the mass transfer zones (see Fig. 8) and $L_f k_f^*$, the effective overall mass transfer efficiency, for xi=0.33 (feed is a ternary mixture) and $\theta$=0.05;

Fig. 9b shows the effect of feed composition on the yield, when $\theta$=0.05 and selectivity term is 6.

Figs. 10a-10d show the validation of rate model simulations (dashed curves) using LAD data from Purdue (solid curves). Fig. 10a depicts the separation of Sm and Nd using ammonium citrate solution. Fig. 10b shows the separation of Sm, Nd, and Pr using ammonium citrate solution. Fig. 10c shows the separation of Sm, Nd, and Pr using EDTA solution. Fig. 10d shows the separation of Sm, Nd, and Pr using EDTA solution.

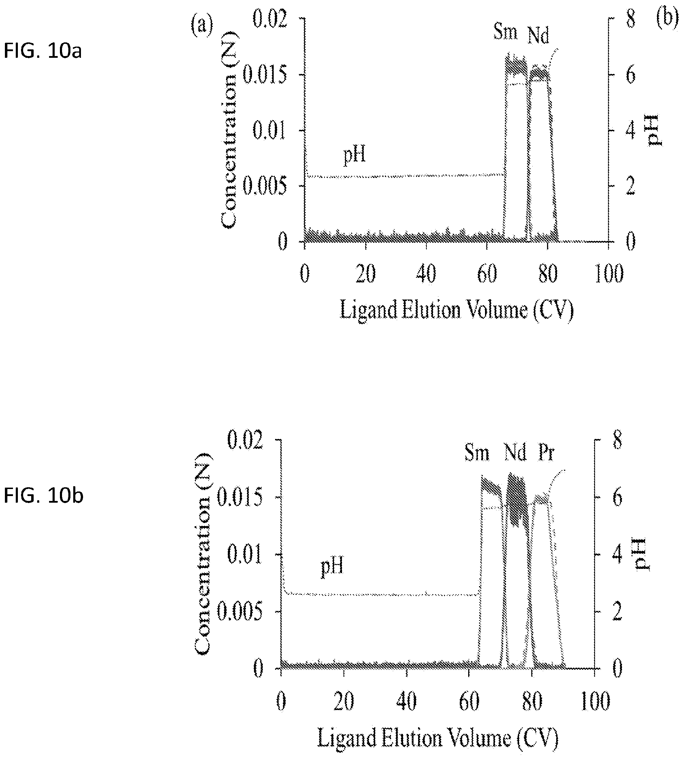

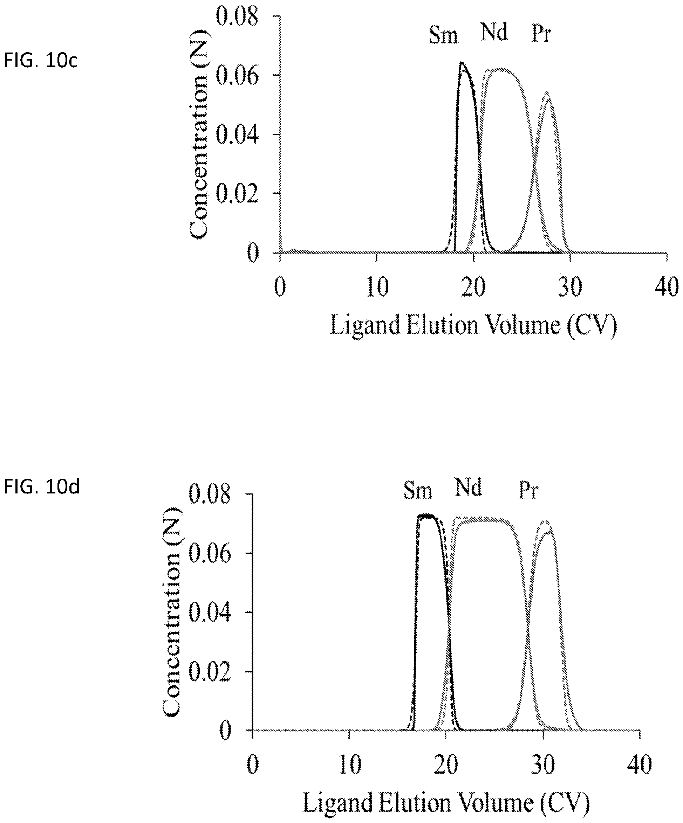

Sorbent: DOWEX™ 50WX8; Lc: (Figs. 10a-b) 47 cm, (Fig. 10c) 30.5 cm, (Fig. 10d) 36.4 cm;
Feed concentration: (Fig. 10a) 0.02 N Sm/Nd, (Fig. 10b) 0.02 N Sm/Nd/Pr, (Fig. 10c-10d) 0.161N Sm/0.377N Nd/0.161N Pr;
Loading volume: (Figs. 10a-10b): 300 mL, (c): 30 mL, (d) 56 mL;
Displacer: (Figs. 10a-10b) 0.01 M NH₄citrate (pH 7.0), (Figs. 10c-10d) 0.03 M EDTA-NH₄ (pH 8.4);
Superficial velocity: (Figs. 10a-10b) 2 cm/min, (Figs. 10c-10d) 1.5 cm/min.

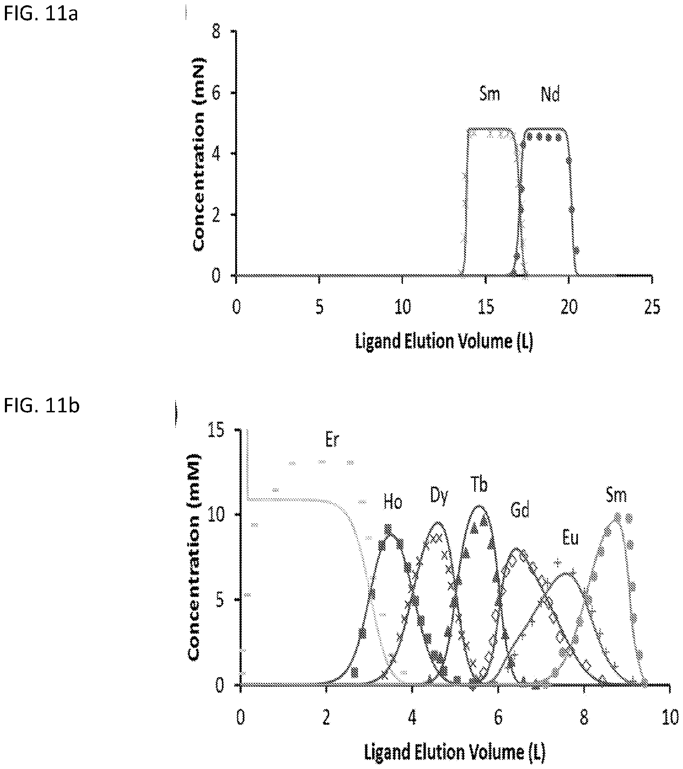

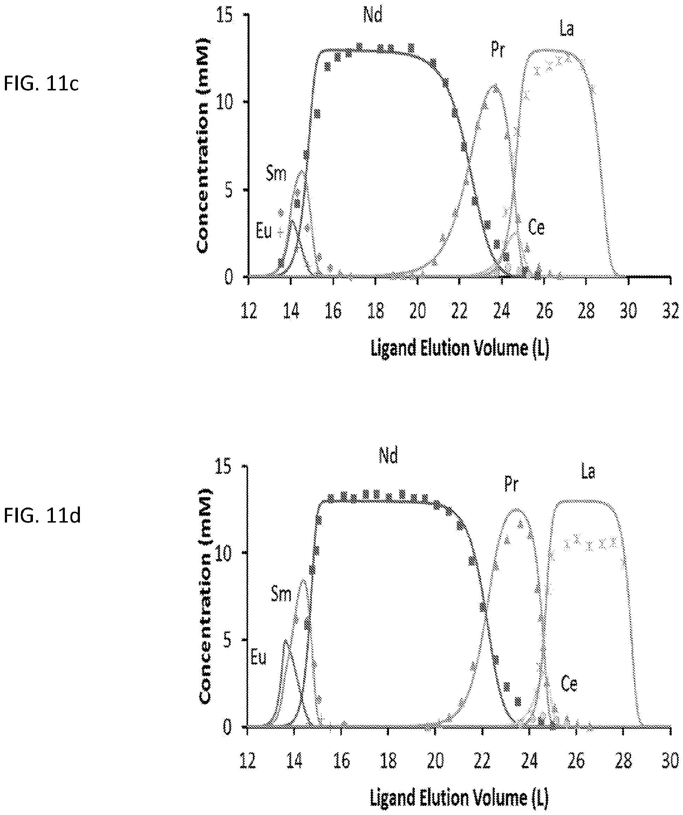

Figs. 11a-11d show the validation of rate model simulations (solid lines) with literature data (dots). Fig. 11a is the chromatogram of Sm and Nd separation using citric acid, Spedding and Powell (1950); Fig. 11b shows the chromatogram of the separation of heavy REE suing EDTA, Moore et al (1995); Figs. 11c and 11d depict the chromatograms of the separation of light REE, Lindstrom (1959) (Spedding, FH et al., J. Am. Chem. Soc. 1950, 72, 2349-2354; Lindstrom RE, Separation of Rare-earth Elements in Bastnasite by Ion Exchange (University of Michigan Library, 1959); Moore BW, et al., Rapid Separation of Heavy Rare-earth Elements (U.S. Dept. Of the Interior, Bureau of Mines, 1995)).

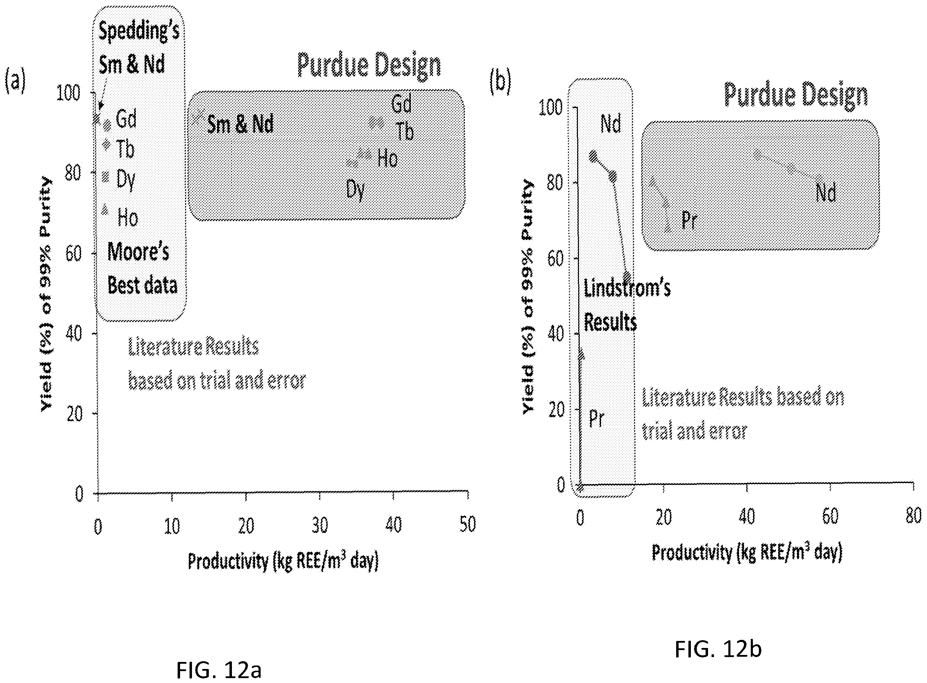

Fig. 12. Productivity vs. yield plot comparing the results of the proposed designs with literature (Lindstrom, Spedding, and Moore) results (Spedding, FH et al., J. Am. Chem. Soc. 1950, 72, 2349-2354; Lindstrom RE, Separation of Rare-earth Elements in Bastnasite by Ion Exchange (University of Michigan Library, 1959); Moore BW, et al., Rapid Separation of Heavy Rare-earth Elements (U.S. Dept. Of the Interior, Bureau of Mines, 1995).

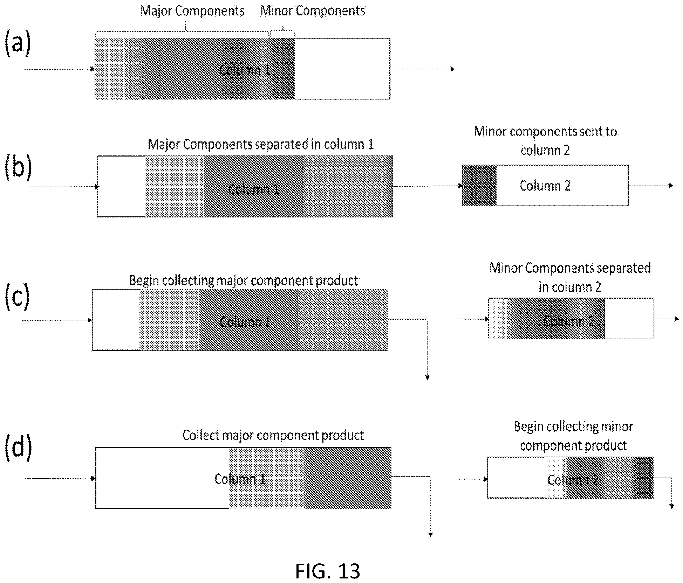

Fig. 13 shows a scheme of multi-zone LAD process. Major components are separated in the main column (column 1) and minor components are separated in the sub column (column 2).

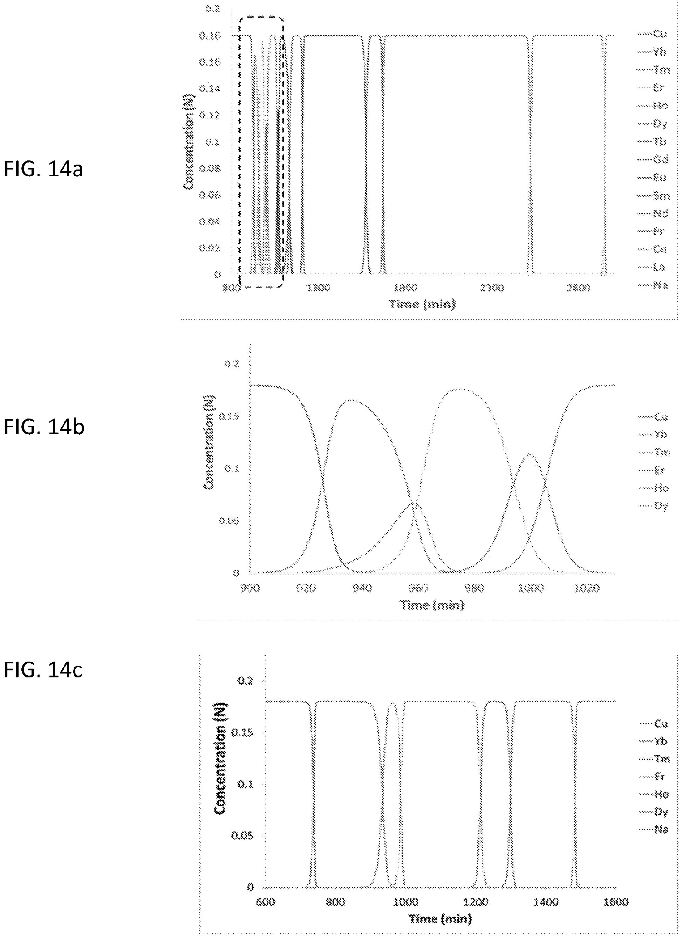

Fig. 14. (a) Separation of REE mixture that has coal fly ash compositions as in Table 1; (b) enlarged part of the minor species parts in the front of the isotachic train in (a). Major components are easily separated but minor components are spread out in mass transfer zones; (c) Separation of the minor components in a secondary column.

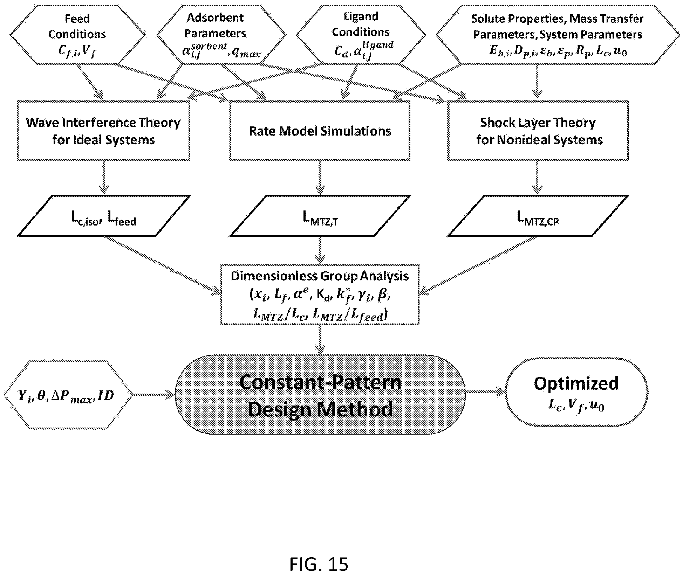

Fig. 15. Research approach to develop constant-pattern design method for ternary separation.

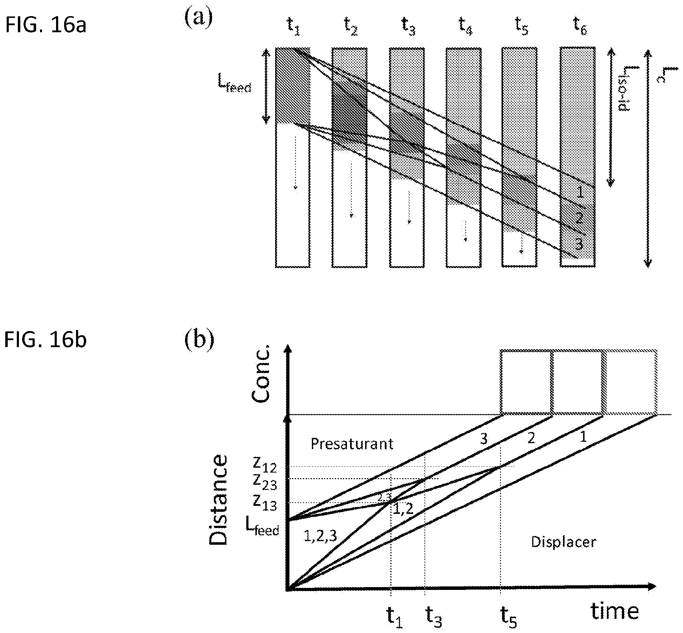

Fig. 16a shows separation of three components by loading a displacer.

Fig. 16b shows the corresponding band migrations on a distance-time diagram.

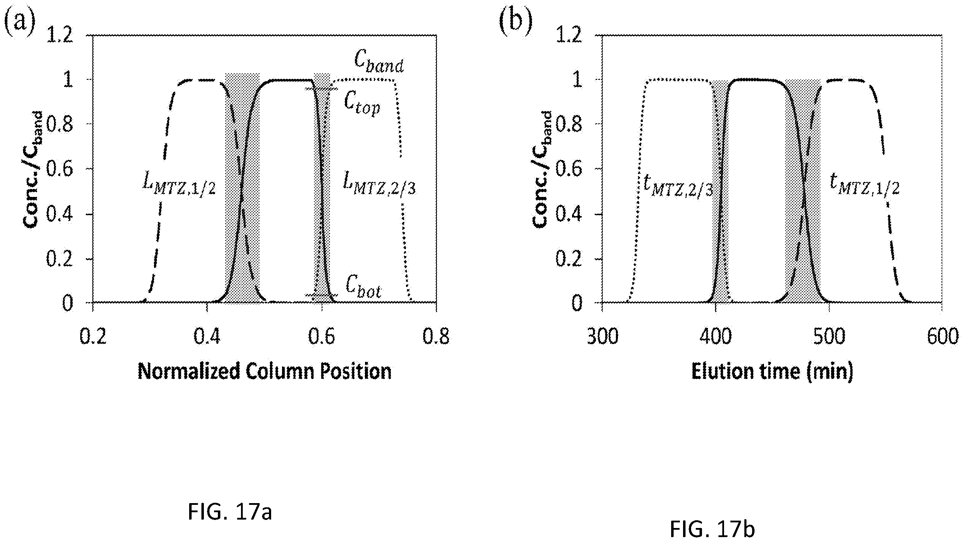

Figs. 17a-17b depict the definition of mass transfer zone length: (17a) $L_{MTZ}$ in column length and (17b) $t_{MTZ}$ in effluent histories. The shaded regions are the lengths of the mass transfer zones for a specific cut $\theta$.

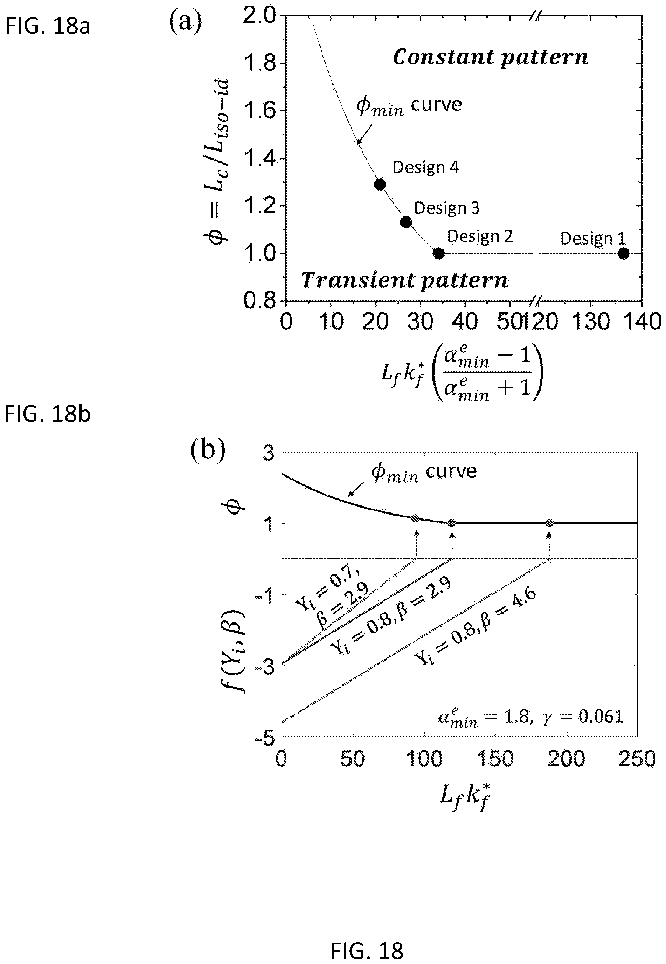

Fig. 18a shows the general map identifying constant-pattern and transient pattern regions.

Fig. 18b shows effects of $Y_i$ and $\theta$ on $L_f k_f^*$ values and corresponding $\phi$ values. The designed experiments (Design 1-4) are marked along the $\phi_{min}$ curve in (18a).

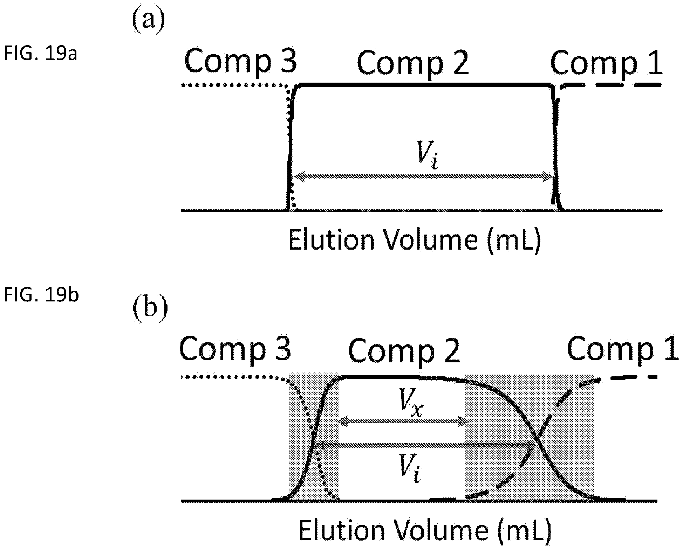

Fig. 19a shows the yield of a middle component from an isotachic band in an ideal system.

Fig. 19b shows the yield of a middle component from an isotachic band in a nonideal system

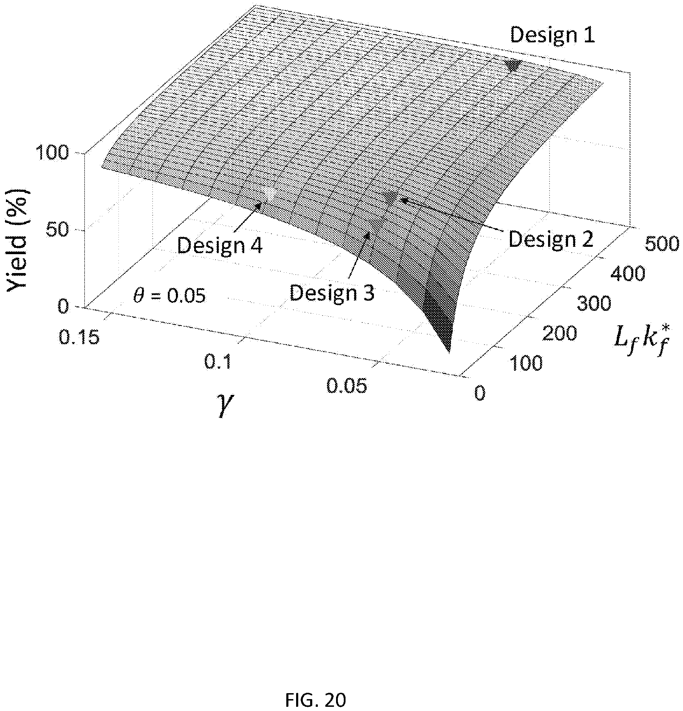

Fig. 20 shows the yield correlation with combined dimensionless groups $L_f k_f^*$ and selectivity weighted composition factor $\gamma$ as shown in Eq. (41b).

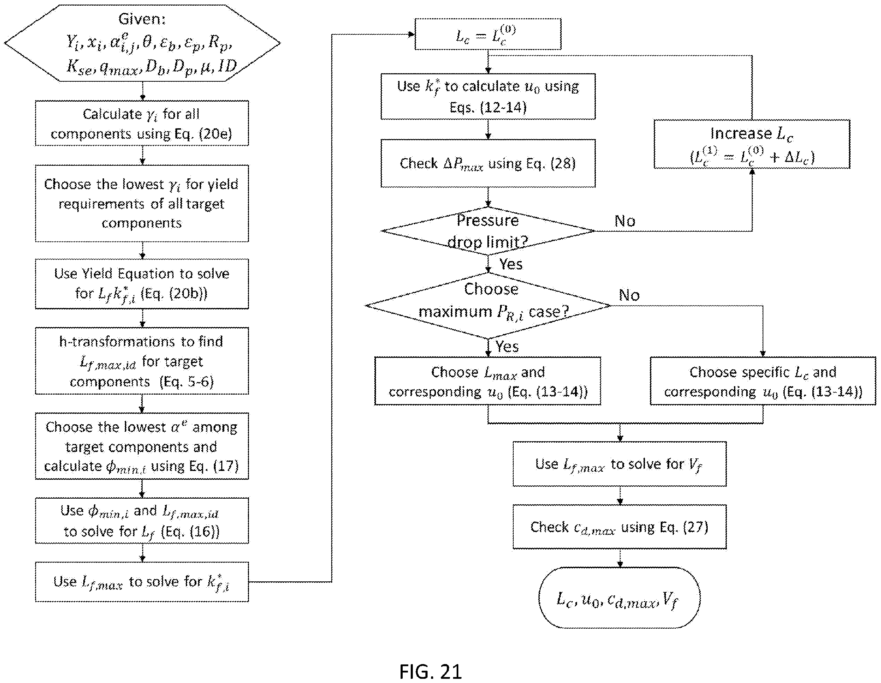

Fig. 21 shows the scheme of constant-pattern design method for ternary separations.

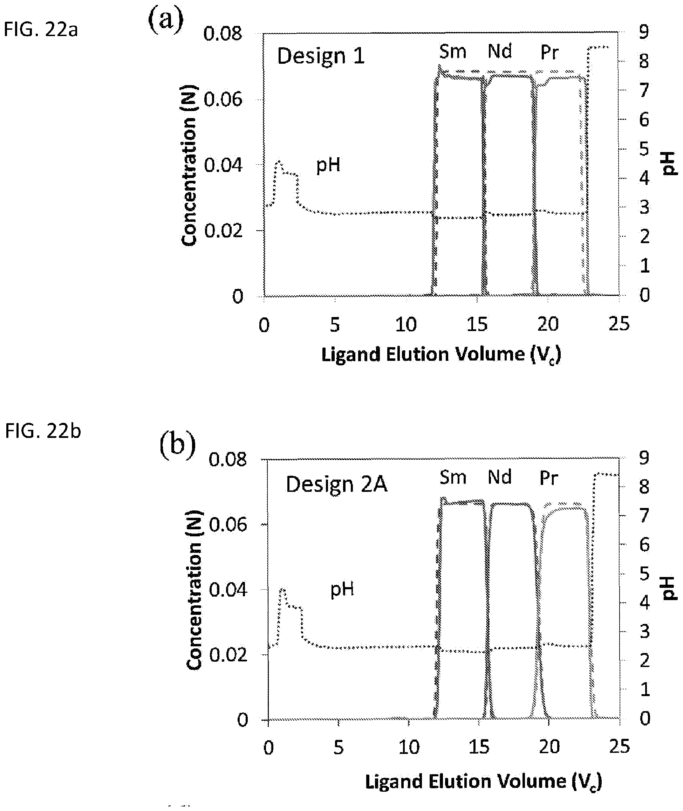

Figs. 22a-22d depict LAD separation experiments designed for the minimum target yield (22a) 95%, (22b) 80%, and (22c) 70%, respectively, for (>99%) purity ($\theta$: 0.05); and (22d) comparison of the yield and productivity of the middle component (Nd) (dashed line) estimated from the design method with experimental results and literature data; Sm (round), Nd (triangle), Pr (square); Solid lines are effluent histories and dashed lines are simulation results. Literature data obtained from [19] is enlarged at the corner.

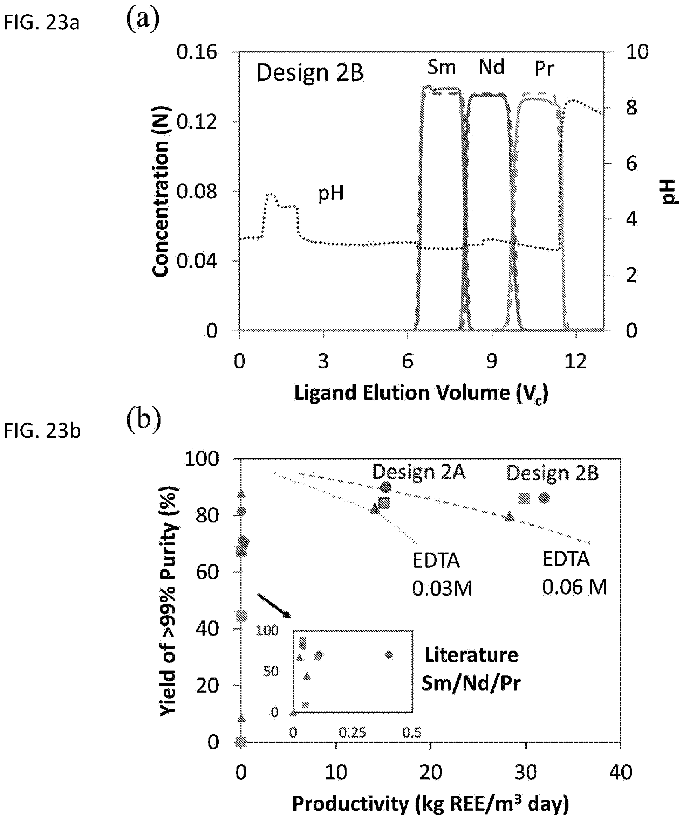

Fig. 23a depicts LAD chromatograms using doubled ligand concentration for the same target yield as Design 2A (Fig. 22b).

Fig. 23b shows comparison of the yield and productivity for different ligand concentrations; Sm (round), Nd (triangle), Pr (square); Solid lines are effluent histories and dashed lines are simulation results. Literature data obtained from [19] is enlarged at the corner.

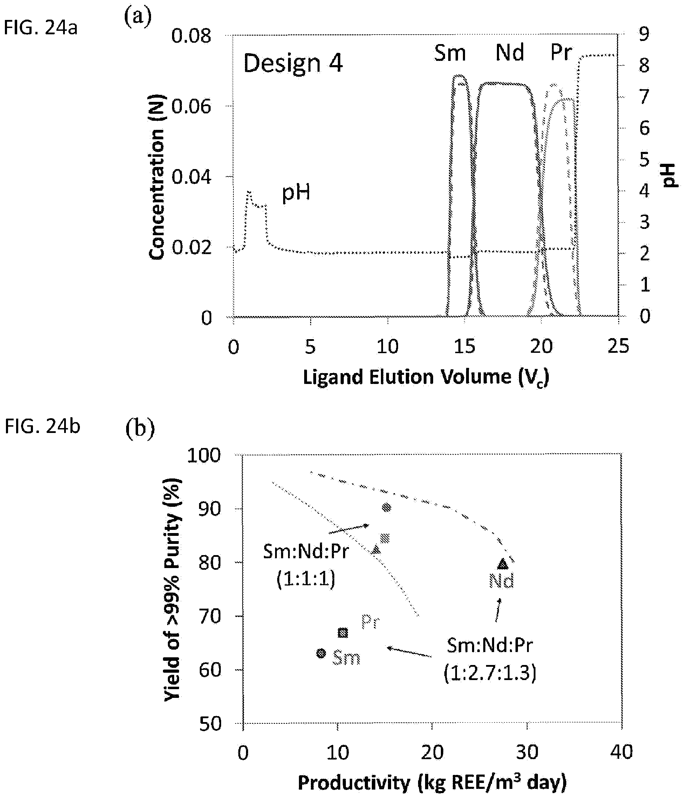

Fig. 24a depicts LAD chromatograms using different feed composition (Sm:Nd:Pr = 1:2.7:1.3) when designed a process for target yield of 80% for Nd with >99% purity.

Fig. 24b shows a yield-productivity plot comparing different feed composition with equimolar composition feed mixture.

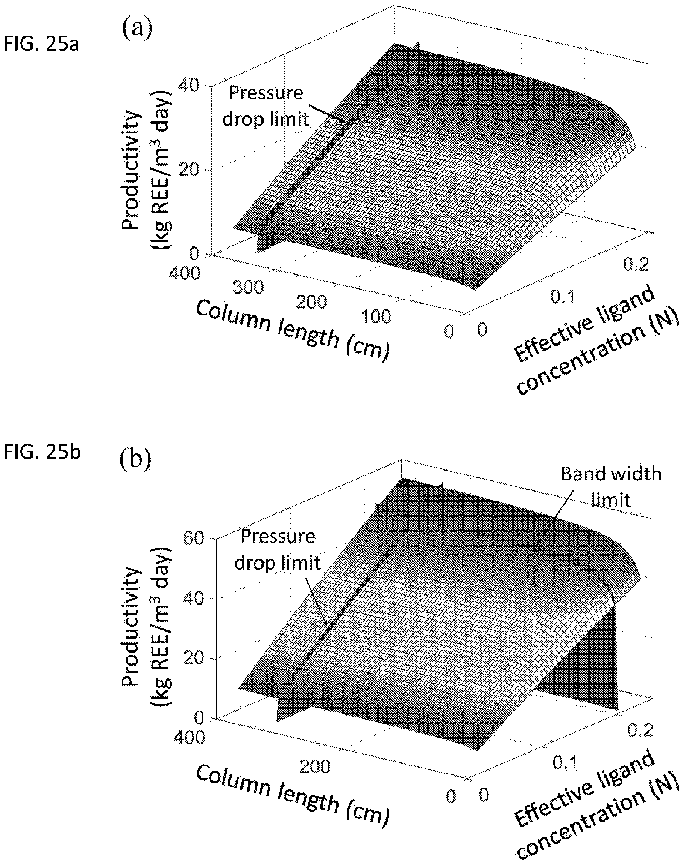

Fig. 25a shows the productivity plot versus column length and effective ligand concentration for the target yield (80%) of the middle component (a) in Design 2A, the equimolar case (1:1:1).

Fig. 25b shows the productivity plot versus column length and effective ligand concentration for the target yield (80%) of the middle component in Design 4, the different feed composition case (1:2.7:1.3).

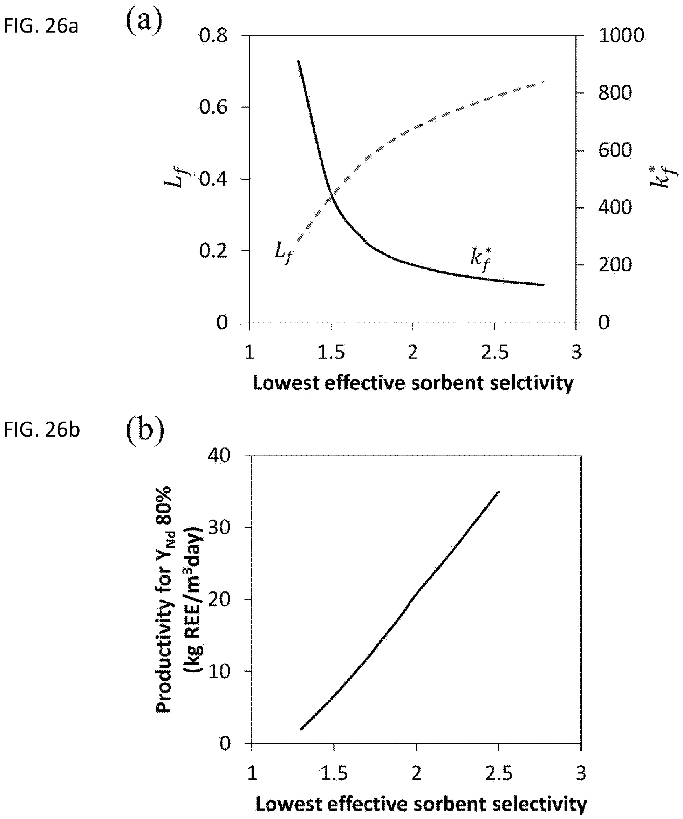

Fig. 26a shows the effects of the lowest sorbent selectivity on the loading fraction ($L_f$) and dimensionless overall mass transfer coefficient ($k_f^*$) for the target yield of 80% for Nd with >99% purity (Design 2A case).

Fig. 26b shows the effects of the lowest sorbent selectivity on the productivity for target yield (80%).

## DETAILED DESCRIPTION

The present invention relates to a method for designing an efficient chromatographic separation process for a multicomponent mixture, such as a mixture of rare earth elements (REE), a production mixture from a pharmaceutical manufacturing or biotechnology production process, employing the concept of constant pattern mass transfer zone length ($L_{MTZ,CP}$) in a non-ideal system having significant spreading of the concentration waves. This present invention can be used for ligand-assisted displacement chromatographic (LAD) as well as conventional displacement chromatographic separation processes. Since this method uses dimensionless groups, it may find applications in the design of various scales of separation processes. This method may also find applications in a continuous process as a "multi-zone LAD process" using multiple columns.

The present invention relates to a method for designing an efficient separation process comprising the steps of:

a. analyzing compositions of a feed mixture;
b. selecting a sorbent, a displacer, and a presaturant;
c. testing for intrinsic parameters of said sorbent and effective selectivity between any two components of said feed mixture;
d. optimizing separation parameters using an algorithm based on the intrinsic parameters of selected sorbent, effective selectivity, components of said feed mixture, targeted yield and purity; and
e. conducting said efficient separation process according to the optimized separation parameters.

In some illustrative embodiments, the present invention relates to a method for designing an efficient separation process disclosed herein further comprising a step of computational simulation for verification of the optimized separation parameters before conducting said efficient separation process of step e.

In some illustrative embodiments, the present invention relates to a method for designing an efficient separation process disclosed herein further comprising a step of computational simulation for verification of the optimized separation parameters before conducting said efficient separation process of step e, wherein said computational simulation is a versatile reaction and separation (VERSE) model simulation.

In some illustrative embodiments, the present invention relates to a method for designing an efficient separation process disclosed herein, wherein testing for intrinsic parameters of said sorbent and effective selectivity between any two components of said feed mixture is carried out using a testing column of said sorbent.

In some illustrative embodiments, the present invention relates to a method for designing an efficient separation process disclosed herein, wherein said intrinsic parameters for the testing column comprises particle radius, particle porosity, bed void fraction, phase ratio, intra-particle diffusion coefficient, axial dispersion coefficient, interstitial velocity, viscosity, and column capacity.

In some illustrative embodiments, the present invention relates to a method for designing an efficient separation process disclosed herein, wherein said efficient separation process according to the optimized separation parameters is carried out using a column of specific inner diameter (ID) and length packed with said sorbent.

In some illustrative embodiments, the present invention relates to a method for designing an efficient separation process disclosed herein, wherein said composition analysis of a feed mixture comprises concentration of individual components, feeding volume, pH, and molar ratio of individual components.

In some illustrative embodiments, the present invention relates to a method for designing an efficient separation process disclosed herein, wherein said optimized separation parameters comprises feed loading volume, column length, linear velocity, and maximum displacer concentration.

In some illustrative embodiments, the present invention relates to a method for designing an efficient separation process disclosed herein, wherein said method for designing an efficient separation process provides a minimum product loss with a high productivity.

In some illustrative embodiments, the present invention relates to a method for designing an efficient separation process disclosed herein, wherein said efficient separation process is a displacement chromatographic separation process.

In some illustrative embodiments, the present invention relates to a method for designing an efficient separation process disclosed herein, wherein said displacement chromatographic separation process is a ligand assisted displacement chromatographic separation process.

In some illustrative embodiments, the present invention relates to a method for designing an efficient separation process disclosed herein, wherein said efficient separation process is a binary, ternary or multicomponent chromatographic separation process.

In some illustrative embodiments, the present invention relates to a method for designing an efficient separation process disclosed herein, wherein said efficient separation process is a ligand assisted displacement chromatographic separation process.

In some illustrative embodiments, the present invention relates to a method for designing an efficient separation process disclosed herein, wherein said efficient separation process is a batch wise process.

In some illustrative embodiments, the present invention relates to a method for designing an efficient separation process disclosed herein, wherein said efficient separation process is a continuous process.

In some illustrative embodiments, the present invention relates to a method for designing an efficient separation process disclosed herein, wherein said efficient separation is a multi-zone process, wherein major components of said feed mixture are separated and purified with a first preparation column and minor components of the feed mixture are separated and purified with a second preparation column.

In some illustrative embodiments, the present invention relates to a method for designing an efficient separation process disclosed herein, wherein said efficient separation is a two-step preparation process, wherein major components of the feed mixture are separated and purified with a first preparation column and minor components of the feed mixture are separated and purified with a second preparation column.

In some illustrative embodiments, the present invention relates to a method for designing an efficient separation process disclosed herein, wherein said efficient separation is a multistep preparation process, wherein components of said feed mixture are divided into a plurality of groups with components of each group having a similar concentration, and components of each group are separated and purified together with one preparation column using said optimized separation parameters.

In some illustrative embodiments, the present invention relates to a method for designing an efficient separation process disclosed herein, wherein said efficient separation process is a multi-zone process, wherein components of similar concentrations are grouped and separated on one column using said optimized separation parameters.

A method for designing an efficient separation process is described, wherein said algorithm for obtaining optimized parameters for said effective separation process comprises the steps of:

    a. collecting column radius, particle size, column capacity, bed void, particle porosity, displacer concentration, diffusivity coefficients, feed concentration and composition, selectivity, target yield, pressure limit, and purity cut;

b. calculating an overall mass transfer coefficient;

c. determining a nonideal factor from an empirical correlation;

d. calculating a loading fraction based said nonideal factor; #

e. calculating a flow rate for a plurality of column lengths based on said mass transfer coefficient;

f. verifying that said flow rate is permissible under a specified pressure limit;

g. determining productivity and selecting the highest productivity system; and

h. generating a set of optimized parameters for said efficient separation process.

A computer program performing the methods for designing an efficient separation process is disclosed herein.

In some other illustrative embodiments, the present invention relates to a manufacture process incorporating the methods disclosed herein in isolation and purification of a material of industrial importance.

In some other illustrative embodiments, the present invention relates to a product manufactured according to the process disclosed herein in isolation and purification of said product of industrial importance.

An algorithm for obtaining a set of optimized parameters for an efficient chromatographic separation process is described, comprising the steps of:

a. collecting column radius, particle size, column capacity, bed void, particle porosity, displacer concentration, diffusivity coefficients, feed concentration and composition, selectivity, target yield, pressure limit, and purity cut;

b. calculating an overall mass transfer coefficient;

c. determining a nonideal factor from an empirical correlation;

d. calculating a loading fraction from said nonideal factor;

e. calculating a flow rate for a plurality of column lengths based on said mass transfer coefficient;

f. verifying that said flow rate is permissible under a specified pressure limit;

g. determining a plurality of productivities and selecting the highest productivity system; and

h. outputting a set of optimized parameters for said efficient chromatographic separation process.

An algorithm for obtaining a set of optimized parameters for an efficient chromatographic separation process is disclosed herein, wherein the algorithm is for a displacement chromatographic separation process.

An algorithm for obtaining a set of optimized parameters for an efficient chromatographic separation process is disclosed herein, wherein the algorithm is for a ligand assisted displacement chromatographic separation process.

A computer program performing the algorithm for obtaining a set of optimized parameters for an efficient chromatographic separation process is described herein.

In some other illustrative embodiments, the present invention relates to a manufacture process incorporating the algorithm for obtaining a set of optimized parameters for an efficient chromatographic separation process as disclosed herein.

A product manufactured according to a process incorporating the algorithm for obtaining a set of optimized parameters for an efficient chromatographic separation process is described herein.

An algorithm for obtaining a set of optimized parameters for a separation process based a production goal comprising the steps of is described herein:

a. collecting particle size, column capacity, bed void, particle porosity, displacer concentration, diffusivity coefficients, feed concentration and composition, selectivity, target yield, pressure limit, and purity cut;

b. calculating an overall mass transfer coefficient;

c. determining a nonideal factor from an empirical correlation;

d. calculating a loading fraction from said nonideal factor;

e. calculating a flow rate for a plurality of column lengths based on said mass transfer coefficient;

f. verifying said flow rate is permissible under a specified pressure limit;

g. determining a productivity for each column length and selecting a highest productivity system; and

h. determining an inner diameter for a column required for said production goal;

i. outputting a set of optimized parameters for said production chromatographic separation process.

An algorithm for obtaining optimized parameters for a separation process based on a column comprising the steps of is described herein:

a. collecting particle size, column capacity, bed void, particle porosity, displacer concentration, diffusivity coefficients, feed concentration and composition, selectivity, target yield, pressure limit, and purity cut;

b. calculating an overall mass transfer coefficient;

c. determining a nonideal factor from an empirical correlation;

d. calculating a loading fraction from said nonideal factor;

e. calculating a flow rate for column length of said column based on said mass transfer coefficient;

f. verifying said flow rate is permissible under specified pressure limit for said column; otherwise, setting a flow rate at the pressure limit;

g. outputting a set of optimized parameters for the preparative chromatographic separation process.

A method for designing an efficient preparative chromatographic separation process is described herein further comprising an optional step of verification of the optimized separation parameters using VERSE simulation after step e.

In some illustrative embodiments, the present invention relates to a method for designing an efficient preparative chromatographic separation process, wherein said composition analysis of a feed mixture comprises the concentration of individual components, feeding volume, pH, and mole ratio of individual components.

In some illustrative embodiments, the present invention relates to a method for designing an efficient preparative chromatographic separation process, wherein said intrinsic parameters of packed analytical testing column comprises particle radius, particle porosity, bed void fraction, phase ratio, intra-particle diffusion coefficient, axial dispersion coefficient, interstitial velocity, viscosity, and column capacity.

An algorithm for obtaining optimized parameters for a preparative chromatographic separation process, wherein said algorithm is for a displacement chromatographic separation process is described herein.

An algorithm for obtaining a set of optimized parameters for a preparative chromatographic separation process, wherein the algorithm is for a ligand assisted displacement chromatographic separation process is described herein.

In the present disclosure the term "about" can allow for a degree of variability in a value or range, for example, within 20%, within 10%, within 5%, or within 1% of a stated value or of a stated limit of a range. In the present disclosure the term "substantially" can allow for a degree of variability in a value or range, for example, within 70%, within 80%, within 90%, within 95%, or within 99% of a stated value or of a stated limit of a range.

**Nomenclatures and Abbreviations:**

$L_{feed}$: Feed length, the column volume occupied by feed components
$C_{f,i}$: the concentration of component i in the feed
$V_f$: feed loading volume
$q_{max}$: column capacity
$V_c$: column volume
$L_{c,iso}$: the minimum column length to develop an isotachic train in an ideal system

$\alpha^e$: effective selectivity

$\alpha_{i,j}^{sorbent}$ : sorbent selectivity of component i to component j

$\alpha_{i,j}^{ligand}$ : ligand selectivity of component i to component j $x_i$: mole fraction of component i in the feed

$\phi$: nonideal factor

$\phi_m$ : minimum nonideal factor to form a constant pattern isotachic train

$L_c$: Column length

$L_{c,min}$: minimum column length to form a constant pattern isotachic train

$L_f$: loading factor ($Lf_{eed}/L_c$)

$L_{f,ideal}$: ideal loading factor

$C_{band}$ : isotachic band concentration

$C_{bot}$ : arbitrary concentration, smaller than $C_{band}$; bottom cut of a mass transfer zone

$\theta$: cut point of breakthrough curve

$C^*$: upper cut of a mass transfer zone

$t_{MTZ}$: a mass transfer zone in effluent histories as time units

$L_{MTZ}$: the length of a mass transfer zone in the column

$u_d$: shock wave velocity of a displacer

$K_d$: dimensionless group for displacer concentration change in the column

P: phase ratio, the ratio of the space occupied with solution to the space occupied with particles in the column. ( $= \dfrac{(1-\varepsilon_b)}{\varepsilon_b}$ )

$\varepsilon_b$ : bed void fraction

$\varepsilon_p$: particle porosity

$\dfrac{\Delta q_d}{\Delta c_d} \left( = \dfrac{q_d}{c_d} \right)$ : the ratio of solid phase concentration change to the mobile phase concentration change.

$q_d$: the column capacity ($q_{max}$) in an ion exchange system.

$L_{MTZ,CP}$: constant pattern mass transfer zone length

$L_{MTZ,T}$: transient mass transfer zone length

$Pe_b$: Peclet number for axial dispersion in a column; the ratio of the convection rate to the axial dispersion rate

$N_D$: dimensionless group of the ratio of intraparticle diffusion rate to the convection rate

$k_f^*$ : dimensionless overall mass transfer coefficient.

$u_0$: interstitial velocity. Note that $\varepsilon_b u_0 = u_s$ (superficial velocity)

$E_b$: axial dispersion rate

$R_p$: particle radius

$t_C$: convection time ( $= \dfrac{L_c}{u_o}$ )

$t_D$: intra-particle diffusion time

$D_p$ : the intraparticle diffusion coefficient

Yi : yield of component i

$C_d$ : effective ligand concentration

qi: the concentration in the solid phase in equilibrium

$C_{P,i}$ : the concentration in the stationary phase in equilibrium

**Presaturant-** A high ligand-affinity solute that is pre-loaded onto a column in a ligand-assisted displacement chromatography. For a presaturant to be used in an LAD system, two key conditions must be met. The presaturant must have a lower affinity for the sorbent than the Rare Earth Elements (or other components to be separated using this technology). If this is not true, then the REEs will not load onto the column properly because they will not displace the presaturant on the sorbent. The other condition is that the presaturant must have the lowest effective sorbent selectivity. This usually is the result of it having a higher ligand affinity than the rare earth elements. If it does not, then the boundary will not be sharp at the front of the isotachic train. An **effective sorbent selectivity** is the overall selectivity when both the selectivity of the ligand and the selectivity of the sorbent is accounted for.

**Ligand-assisted displacement (LAD) chromatography-** A chromatographic separation technique in which solutes are separated based on complexation reactions with a ligand in the mobile phase. The presaturant in this method has the highest affinity for the ligand. The formation of the ligand-presaturant complex causes migration and separation of the solute bands and therefore the separation of each individual solute of a mixture. A ligand in a ligand-assisted displacement chromatography acts as a displacer for a traditional **displacement chromatography.** In other words, a displacer in a displacement chromatographic separation system becomes a ligand in a ligand-assisted displacement chromatographic separation system.

**A displacement chromatography** is a chromatography technique in which a sample is placed onto the head of a column and is then displaced by a solute **(displacer)** that is more strongly sorbed than the components of the original mixture. The result is that the components are resolved into consecutive "rectangular" zones of highly concentrated pure substances rather than solvent-separated "peaks". It is primarily a preparative technique; higher product concentration, higher purity, and increased throughput may be obtained compared to other modes of chromatography. **A displacer-** a high sorbent affinity component that is used to displace components in the feed bound to the column sorbent.

**Displacement chromatography** was first discovered by Tiselius, who also classified the three modes of chromatography as frontal, elution, and displacement (A. Tiseliu,. Ark. Kemi. Mineral Geol. 16A: 1-18 (1943)). This technique was further developed by Horvath employing the modern high-performance columns and equipment (C.S. Horvath, et al. J. Chromatogr. 218, 365-393(1981)). The principle of displacement chromatography for separation is based on the Langmuir isotherm. Only a finite number of sites are on the chromatographic support (stationary phase) for the binding of sample components, and if a site is occupied by one molecule, it is not available to the other sample components. Because the number of binding sites is limited, they are saturated when the concentration of the molecules in the sample is large in comparison to the dissociation constant for the sites. The displacer is a molecule with a high affinity to the given chromatographic support, and it will compete more effectively for binding sites. It causes the displacement of the sample molecules and their enrichment in the lower-affinity solute.

Solutes separated in the displacement mode form sharp-edged zones, and peak spreading is less emphasized. The separated zones in this kind of chromatography are self-sharpening. This means that, if a component gets ahead of its band, it enters a zone in which it is more strongly retained and runs more slowly until the original zone catches up. Furthermore, since the loadings in displacement chromatography are deliberately high, more material can be separated on a smaller column, with the purified components recovered at significantly higher concentrations. The displacer is selected to have higher an affinity for the stationary phase than the sample components. The retention conditions in displacement chromatography depend on the displacer concentration. Consequently, the conditions that allow high retention can be employed without a gradient operation, and the displacement pushes all components of the sample out of the column in the designed run time.

One of the biggest advantages of displacement chromatography, is that this chromatography mode is well suited for the purification of components from dilute solutions. The disadvantages are the formation of overlapping zones between the separated components, and additionally, the removal of the displacer and column regeneration frequently limits the throughput.

**Displacement chromatography** is a very efficient technique for the purification of proteins from complex mixtures at high column loadings. An important advance in the development of displacement chromatography was the discovery of low molecular-mass displacers such as 4-toluenesulfonic acid salts, streptomycin sulfate A (and similar substances), chloroquine diphosphate, and other small molecules instead of the large polyelectrolyte polymers. These displacers can be readily separated from the protein after the separation, such as by size-exclusion chromatography or simple ultrafiltration. Their adsorption is also salt dependent, and it significantly facilitates the column regeneration. Displacement chromatography is well suited for the preparative separation of large quantities of proteins from complex mixtures by use of relatively small columns. This mode of chromatography can be performed with a variety of chromatographic resins, such as ion exchange, hydrophobic interaction, reversed phase, hydroxyapatite and pseudo affinity mode phases, and by use of particle-based as well as monolithic supports, for the separation of variety of proteins.

**Non-ideal systems**- A system has significant mass transfer resistance due to axial dispersion or intra-particle diffusion that causes spreading of the concentration waves.

**Isotachic state** - A state in which an isotachic train has been formed on a column in displacement chromatography. **Isotachic train-** A series of product bands formed in displacement chromatography in which all the band boundaries migrate at the same velocity.

**Dimensionless group and dimensionless group analysis** - A group of variables that makes the value have no dimension. Important variables are grouped together as dimensionless groups to be used in the rate model equations. Thus, the results analyzed based on those dimensionless groups can provide a general separation solution to various conditions.

**Column sorbent productivity** - The amount of product that can be separated and produced per unit sorbent volume per time.

**Mixer settlers** are a class of mineral process equipment used in the solvent extraction process. A **mixer settler** consists of a first stage that *mixes* the phases together followed by a quiescent *settling* stage that allows the phases to separate by gravity. Industrial **mixer settlers** are commonly used in the copper, nickel, uranium, lanthanide, and cobalt hydrometallurgy industries, when solvent extraction processes are applied. **Mixer-settler unit** refers to a unit operation in which a multiple-phase liquid system is mixed and then allowed to separate into different layers. **Conventional mixer-settler unit** refers to a unit operation that is used in industry where a multiple-phase liquid system is mixed and then allowed to separate into different layers through.

**Processing volume of LAD**- Equivalent to the column volume required.

**Wave spreading**- The spreading of a solute's band boundary due to mass transfer effects. **Wave:** the region of concentration change in the column; it migrates through the column as a function of time. In the absence of ligand in the mobile phase, a shock wave (ideal system) or self-sharping wave (non-ideal system) forms if a high-sorbent-affinity solute displaces a low-sorbent-affinity solute. In the presence of a ligand in the mobile phase, a shock wave or self-sharpening wave forms if a high-"effective"-sorbent selectivity solute displaces a low-"effective"-sorbent selectivity solute

where $\alpha^e = \dfrac{\alpha^{sorbent}}{\alpha^{ligand}}$ ; the ligand has the highest effective selectivity for the sorbent.

**Effective separation factor**- Synonymous with effective selectivity.

**Productivity** - Amount of a solute (such as REE) produced per column volume per time, usually at a defined purity of 99% of the product.

**Purdue Productivity** - productivity calculated from the simulation results when the system designed using Purdue design method

**Loading factor/ideal loading factor**- Fraction of total column capacity loaded with a mixture of solutes, such as a mixture of rare earth elements. Fraction of total column capacity loaded in an ideal system.

**Testing column:** a testing column is a column used for the purposes of determining the intrinsic parameters of a sorbent, a ligand, and the components to be separated. Often this is accomplished by running a series of binary separations.

**Empirical correlation:** Empirical correlation is the curve used to relate the "phi" value which was defined as the non-ideal factor in the provisional patent application to the dimensionless groups Lf, kf*, and alpha.

**A Model** is an equations that can be solved analytically or numerically in order to use it for design a process. **Simulation** is a way of solving the model equations using numerical calculations for a given set of input parameters so that a chromatography separation results can be projected. In our research, we used VERSE model equations and simulator of VERSE model to run simulations. In VERSE model, some of mass transfer coefficients were found using widely-used correlations (S. F. Chung and C. Y. Wen. AIChE Journal. 1968, 14(6), 857-866; E. J. Wilson and C. J. Geankoplis. Industrial & Engineering Chemistry Fundamentals, 1966, 5(1), 9-14.).

**The VERSE model** was developed by Wang's group (Berninger, et al, Computers and Chemical Engineering, 1991, 11(11), 749-768.) and had been used for previous studies for various types of chromatography processes. This model considers detailed mass transfer effects, reaction mechanisms, and incorporates various adsorption isotherms. This model is based on rate model of pore diffusion, where the detailed mass transfer effects include axial dispersion in bulk phase (void fraction in the column), the film diffusion from bulk phase to pore phase, the pore diffusion in pore phase, and the surface diffusion in solid phase. The VERSE model equations were derived from a general differential mass balance equation for each solute in the bulk phase, the pore phase, and the solid phase for the pore diffusion model. In simulations, those partial differential equations are solved numerically with the proper boundary and initial conditions.

**Mass transfer coefficients-** In engineering, the mass transfer coefficient is a diffusion rate constant that relates the mass transfer rate, mass transfer area, and concentration change as driving force. This can be used to quantify the mass transfer between phases, immiscible and partially miscible fluid mixtures (or between a fluid and a porous solid). Quantifying mass transfer allows for design and manufacture of separation process equipment that can meet specified requirements, estimate what will happen in real life situations (chemical spill), etc. Mass transfer coefficients can be estimated from many different theoretical equations, correlations, and analogies that are functions of material properties, intensive properties and flow regime (laminar or turbulent flow). Selection of the most applicable model is dependent on the materials and the system, or environment, being studied.

**The mass transfer coefficient** equals (mass transfer rate)/[(cross sectional area)*(concentration change)]. There are three major mass transfer coefficients for each component in VERSE model - axial dispersion coefficient ($E_b$), film mass transfer coefficient ($k_{fl}$), intra-particle pore diffusivity ($D_p$).

1) Axial dispersion coefficient ($E_b$) can be estimated using **Chung and Wen correlation.**

$$Pe_b = \frac{u_0 L_c}{E_b} = \frac{L_c}{2\varepsilon_b R_p}(0.2 + 0.011 Re^{0.48})$$

In preparative chromatography, Reynolds number is small (<<1) such that $Pe_b$ becomes

$$Pe_b = \frac{L_c}{10\varepsilon_b R_p}$$

2) Film mass transfer coefficient ($k_{fl}$) can be estimated using **Wilson and Geankoplis correlation.**

$$\frac{k_{fl}}{u_0} Sc^{2/3} = 1.09 Re^{-2/3}$$

3) Intra-particle pore diffusivity ($D_p$) can be estimated by fitting the simulations results with experimental data. We assume that pore diffusivity is intrinsic parameters so it is constant for each component even in different operation conditions.

Overall mass transfer coefficient ($k_f$) relates to three major diffusion effects in linear isotherm system.

$$\frac{1}{k_f} = \frac{R_p^2}{15\varepsilon_p D_p} + \frac{R_p}{3k_{fl}} + \frac{E_b(1-\varepsilon_b)}{\varepsilon_b u_0^2} = \frac{(1-\varepsilon_b)L_c}{\varepsilon_b u_0} * \left( \frac{1}{15N_D} + \frac{1}{N_f} + \frac{1}{Pe_b} \right)$$

Since we analyzed the results based on the dimensionless groups, $N_D$ and $Pe_b$ because in preparative chromatography, film mass transfer resistance is negligible. Thus, to simplify the results, we define the dimensionless overall mass transfer coefficient. The dimensionless overall mass transfer coefficient ($k_f^*$) is defined as

$$\frac{1}{k_f^*} = \frac{1}{15N_D} + \frac{1}{N_f} + \frac{1}{Pe_b}$$

**Film mass transfer and film mass transfer coefficient-** The mass transfer across the surface film of the particles. A constant proportional to the rate of mass transfer across the surface film of the particles.

Displacement Chromatography is a chromatographic separation technique in which a low sorbent affinity solute is displaced by a high sorbent affinity solute, whereby each component in a feed mixture is separated into successive pure individual band. The sorbent column is first pre-saturated with a solute (e.g. presaturant), which has lower affinity than all the components in the feed mixture. A feed mixture is then loaded onto the column, followed by a displacer, which has a higher affinity than all the components in the feed mixture. Displacement of a low affinity solute by a high affinity solute results in a sharp boundary between the adjacent bands. If the column length is sufficiently long, this displacement chromatographic process allows the separation of the solutes (such as rare earth elements of an ore extraction) in the feed mixture and formation of successive pure solute band on the column according to their affinity to the column sorbent. Since the solute band migration is driven by the displacer, all the solute bands migrate at the same speed, just like the boxcars of a train, and hence this pattern is called an "isotachic train."

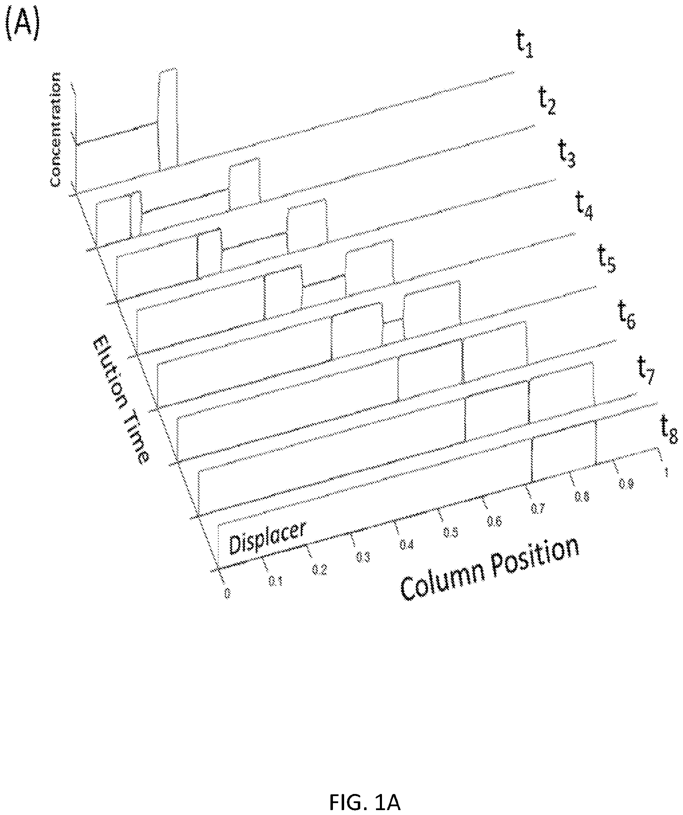

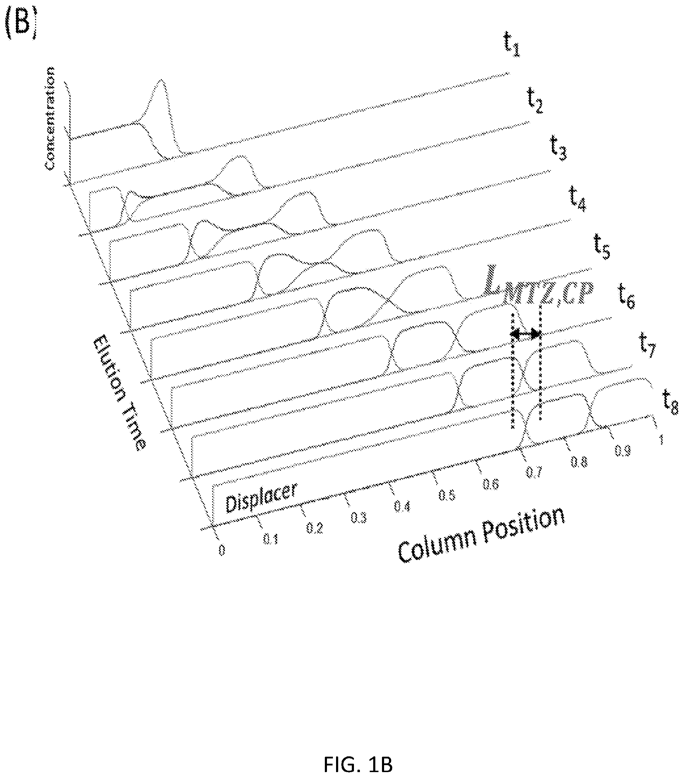

When the column is long enough, previously we have reported that a constant pattern isotachic train (CPIT) was observed in LAD like those in conventional displacement (S) (Spedding, FH et al., J. Am. Chem. Soc. 1950, 72, 2354-2361; Spedding, FH et al., J. Am. Chem. Soc. 1951, 73, 4840-4847). Here, we define an isotachic train and a constant pattern isotachic train separately. The former, isotachic train, would be developed in an ideal system and the latter, constant pattern isotachic train, would be formed in a nonideal system as described in Fig. 1.

## Development of an Isotachic Train vs. a Constant Pattern Isotachic Train in Conventional Displacement

Fig. 1a shows an example of the isotachic train formation for an ideal ion exchange system. When the feed mixture is loaded onto the column, the solutes in the feed adsorb in the top of the column, displacing the presaturant ($t_1$). When a displacer, which has higher sorbent affinity than solutes, is fed into the column, the adsorbed solutes are displaced by high-sorbent affinity components in the mobile phase. Because the weakly adsorbed components are continuously displaced by the stronger adsorbed components, the solutes are separated into successive pure bands with sharp boundaries as they move through the column. Since they are moving the same velocity as that of displacer, this is called an "isotachic train" in displacement chromatography. In Fig. 1a, two components migrate through the column as they are displaced by a high affinity displacer and form an isotachic train, which can be first seen at $t_6$. $L_{c,iso}$ is defined as the minimum column length to develop an isotachic train.

In a nonideal system, the boundaries of two adjacent bands form a mixed band region called the mass transfer zone (MTZ). This mixed band region forms due to spreading caused by mass transfer effects. In Fig. 1b, the bands appear to be separated at $t_6$ as in an ideal systems, but the length of MTZ ($L_{MTZ}$) continues to decrease over time until it reaches a constant $L_{MTZ}$ ($L_{MTZ,CP}$) at $t_8$. In this state, all parts of the wave migrate at the same velocity, forming a constant pattern isotachic train (CPIT). The formation of a CPIT for a nonideal system takes at least the amount of time to develop of an isotachic train for an ideal system. Therefore, the required column length for developing a CPIT in nonideal systems ($L_{c,min}$), is longer than or equal to $L_{c,iso}$.

**Development of a constant pattern isotachic train (CPIT) in LAD**

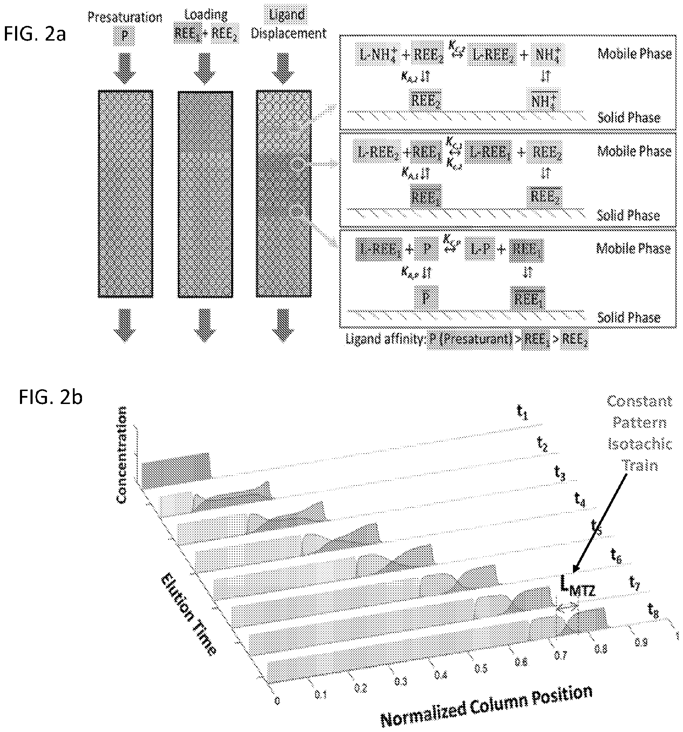

To show the development of a CPIT in LAD, an example of separation of two REE in LAD is shown in Fig. 2. A cation exchange column, which has no selectivity for $REE_1$ (pink) or $REE_2$ (green), is pre-saturated with a pre-saturant (e.g. Cu++, blue), which has a higher affinity for the ligand than REE. As a mixture of $REE_1$ and $REE_2$ is loaded into the column, the REE displaces the pre-saturant Cu++ to form a mixed REE band (brown) near the column inlet (Fig. 2a). As the ligand enters the column, it competes with the resin for REE and forms a complex with REE, causing REE to be released into the mobile phase and migrate downstream. As the REE-ligand complex enters the resin zone loaded with Cu++, the ligand forms a complex with Cu++ and releases REE, which is then reloaded into the resin. This mechanism causes faster migration of the REE1, which has a higher affinity for the ligand than REE2 (Fig. 2b). As this process continues, if the column length is sufficiently long (Fig. 2b), The two REE bands eventually separate in the column and both bands migrate at the same speed, as two box cars in a train, called the "isotachic train", Fig. 2b. The overlapping region of the two bands is defined as the mass transfer zone length, $L_{MTZ}$. Notice in Fig. 2b, the mass transfer zone lengths eventually reach a constant length (compare the bands at $t_7$ and ts), defined here as the "constant-pattern mass transfer zone length, $L_{MTZ,CP}$." At this point, wave spreading is counter-balanced by thermodynamic sharpening in a nonlinear system to reach the constant-pattern state. The profiles at $t_5$ to $t_8$ indicate that after the formation of the constant-pattern state, the $L_{MTZ}$ reaches a minimum length, which results in high yields of pure REE products.

**A general map to predict the formation of a constant pattern isotachic train**

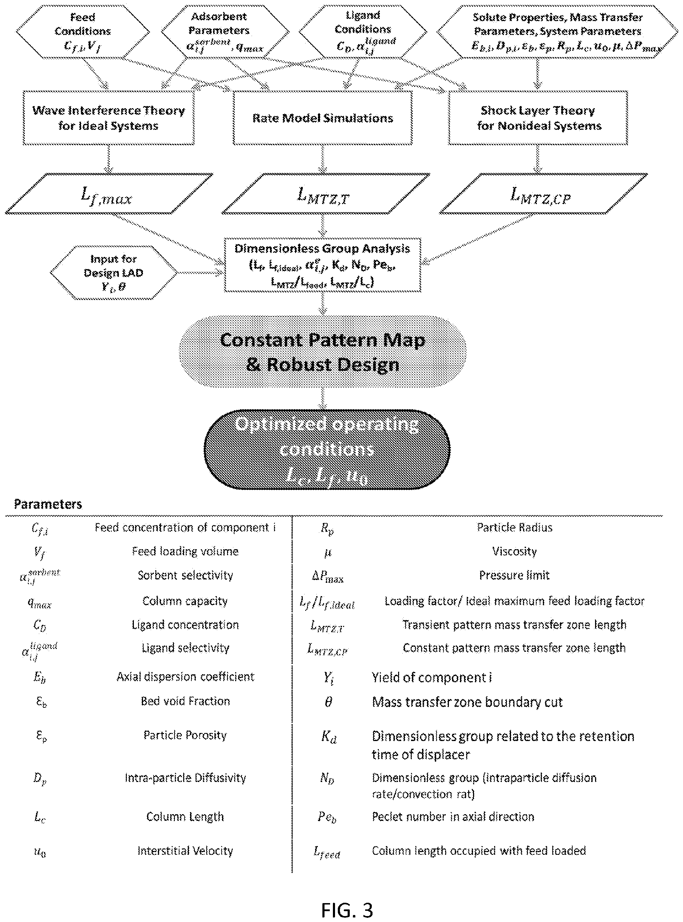

The development of a constant-pattern isotachic trains (CPIT) in LAD is important for high purity and high yield. However, the conditions to develop a CPIT were previously unknown because there was no rate model or analytical solutions for predicting the transition from nonconstant pattern to constant pattern. Therefore, we recently developed an efficient rate model and model simulations to elucidate the separation mechanisms in LAD. The simulations were verified with major experimental results from the literature and from our laboratory. We then used the rate model simulations to develop a dimensionless group analysis to generate a general "map" which can be used to predict the conditions required for the formation of the CPIT. This map is then incorporated into a design method to maximize the ligand efficiency and sorbent productivity for LAD as shown in Fig. 3. The method is based on dimensionless group analysis of the minimum column length to develop an isotachic train in an ideal system $L_{c,iso}$ based on the wave interference theory (left), the constant-pattern mass transfer zone length for non-ideal systems $L_{MTZ,CP}$ from Shock layer analysis of binary pairs (right), and the transient (non-constant pattern). mass transfer zone length $L_{MTZ,T}$ estimated from rate model simulations (center).

**Theoretical backgrounds**

The creation of a coherent method for the design of LAD systems required the synthesis of two separate theories. As such, the theoretical background for the two theories used for developing a map is explained. First, $L_{c,iso}$ in an ideal system is explained. Second, the $L_{MTZ,CP}$ equation is explained. Additionally, the estimation of the yield and the productivity from $L_{MTZ,CP}$ are explained. Lastly, a detailed rate model simulation using VERSE is explained and verified with the experimental data.

**$L_{c,iso}$ in an ideal system**

The $L_{c,iso}/L_{feed}$ in an ideal system is calculated using h-transformation method based on wave interference theory (Helfferich F et al., J. Chromatogr. 1970, 46, 1-28). $L_{c,iso}$ for a binary separation is determined by the feed length ($L_{feed}$) (see Eq. (1)) and the effective selectivity ($\alpha_e$) as seen in Eq. (2).

$$L_{feed} = \frac{\sum_{i=1}^{N} C_{f,i} V_f}{q_{max} V_c} \qquad (1)$$

$$\frac{L_{c,iso}}{L_{feed}} = \frac{\alpha^e}{\alpha^e - 1} \qquad (2)$$

The effective selectivity ($\alpha_e$) in LAD is the ratio of the sorbent selectivity to the ligand selectivity, as shown in Eq. (3). When solutes do not have sorbent selectivity, the effective selectivity is inverse of the ligand selectivity.

$$\alpha_{i,j}^e = \frac{\alpha_{i,j}^{sobent}}{\alpha_{i,j}^{ligand}} \approx \frac{1}{\alpha_{i,j}^{ligand}} \qquad (3)$$

In multicomponent systems, $L_{c,iso}/L_{feed}$ is a function of both composition ($x_i$) and $\alpha^e$, because the "h" values are affected by the composition. Since an isotachic train forms at $L_{c,iso}$ but a constant pattern isotachic train is developed at $L_{c,min}$ in a nonideal system, we define the nonideal factor ($\phi$) to show the deviation of a nonideal system from the ideal system. The nonideal factor ($\phi$) is defined as the ratio of column length to $L_{c,iso}$ or the ratio of the ideal loading factor ($L_{f,ideal}$) to the actual loading factor ($L_f$), Eq. (4).

$$\phi = \frac{L_c}{L_{c,iso}} = \frac{L_c/L_{feed}}{L_{c,iso}/L_{feed}} = \frac{L_{f,ideal}}{L_f} \qquad (4)$$

where the loading factor ($L_f$) is the feed length divided by the column length, and $\phi$ shows the deviation of a nonideal system from an ideal system. If the system approaches to an ideal system, $\phi$ approaches to 1.

### $L_{MTZ,CP}$ in a nonideal system

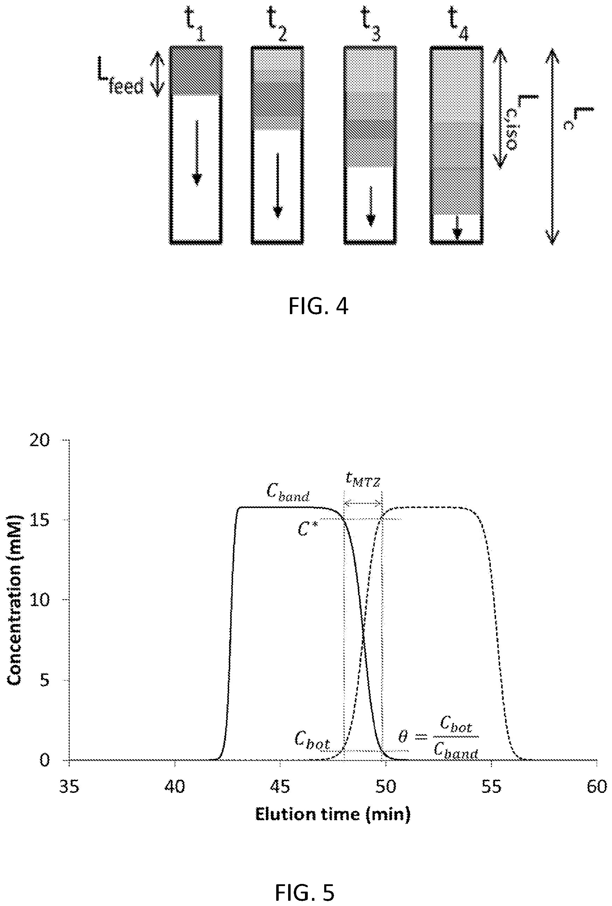

As illustrated in Fig. 5, if the concentration boundaries, $C^*$ and $C_{bot}$, are defined, then the length of the mass transfer zone ($L_{MTZ}$) and the $t_{MTZ,CP}$ can be defined.

$$\frac{C_{bot}}{C_{band}} = \theta \qquad (5a)$$

$$\frac{C_{bot}}{C_{band}} = 1 - \theta \qquad (5b)$$

$$t_{MTZ} = \left| t(C_i^*) - t(C_{i,bot}) \right| \qquad (6a)$$

$$L_{MTZ} = u_d \, t_{MTZ} \qquad (6b)$$

where $\theta$ is the arbitrarily selected breakthrough concentration relative to the band concentration. The wave velocity of a CPIT is equal to the displacer wave velocity ($u_d$).

$$u_d = \frac{u_0}{1 + K_d} \qquad (7)$$

where

$$K_d = P \left( \varepsilon_p + (1 - \varepsilon_p) \frac{\Delta q_d}{\Delta c_d} \right) \qquad (8)$$

where $u_0$ is the linear (interstitial) velocity, P is phase ratio, and $\varepsilon_p$ is particle porosity, and $\frac{\Delta q_d}{\Delta c_d}\ \left(= \frac{q_d}{c_d}\right)$ is the ratio of solid phase concentration change to the mobile phase concentration change. Note that $q_d$ is the column capacity ($q_{max}$) in an ion exchange system.

According to the shock layer analysis for the constant pattern $L_{MTZ,CP}$ is defined as below (Zhu, J et al., Biotechnol. Prog. 1993, 9, 421-428):

$$\frac{L_{MTZ,CP}}{L_c} = \left[\frac{1}{Pe_b} + \frac{1}{15 N_D}\right]\left(\frac{\alpha+1}{\alpha-1}\right)\ ln\left|\frac{1-\theta}{\theta}\right| = 1/k_f^*\left(\frac{\alpha+1}{\alpha-1}\right)\ ln\left|\frac{1-\theta}{\theta}\right| \qquad (9)$$

If we choose $L_{feed}$ instead of $L_c$ as the characteristic length, Eq. (1) becomes

$$\frac{L_{MTZ,CP}}{L_{feed}} = \left[\frac{1}{k_f^* L_f}\right]\left(\frac{\alpha+1}{\alpha-1}\right)\ ln\left|\frac{1-\theta}{\theta}\right| \qquad (10)$$

where $L_f$ is the loading fraction, $L_f = L_{feed}/L_c$, $\alpha$ is the effective selectivity for the binary pair, and $\theta$ is the cut point defining the mass transfer zone length. $k_f^*$ is dimensionless overall mass transfer coefficient, which is related to $Pe_b$ and $N_D$.

$$1/k_f^* = 1/Pe_b + 1/15\ N_D \qquad (11a)$$

The Peclet number is defined as convention rate divided by axial dispersion rate. For low Reynolds number (<1), the Chung and Wen correlation gives $E_b = 10\varepsilon_b R_p u_0$ so that $Pe_b$ is reduced to

$$Pe_b = \frac{u_0 L_c}{E_b} = \frac{u_0 L_c}{10\varepsilon_b R_p u_0} = \frac{L_c}{10\varepsilon_b R_p} \qquad (11b)$$

The dimensionless diffusion rate $N_D$ is defined as the ratio of a characteristic convection time $t_c$ relative to a characteristic diffusion time $t_D$.

$$N_D = \frac{t_c}{t_D} = \left(\frac{L_c}{u_0}\right)\frac{1}{t_D} = \frac{K_{se}(1-\varepsilon_b)\varepsilon_p D_p L_c}{\varepsilon_b u_0 R_p^2} \qquad (11c)$$

where $K_{se}$ is size exclusion factor, $\varepsilon_b$ is bed void fraction, $\varepsilon_p$ is the particle porosity, $D_p$ is the intraparticle diffusion coefficient, $R_p$ is the particle radius, $u_0$ is interstitial velocity (linear velocity).

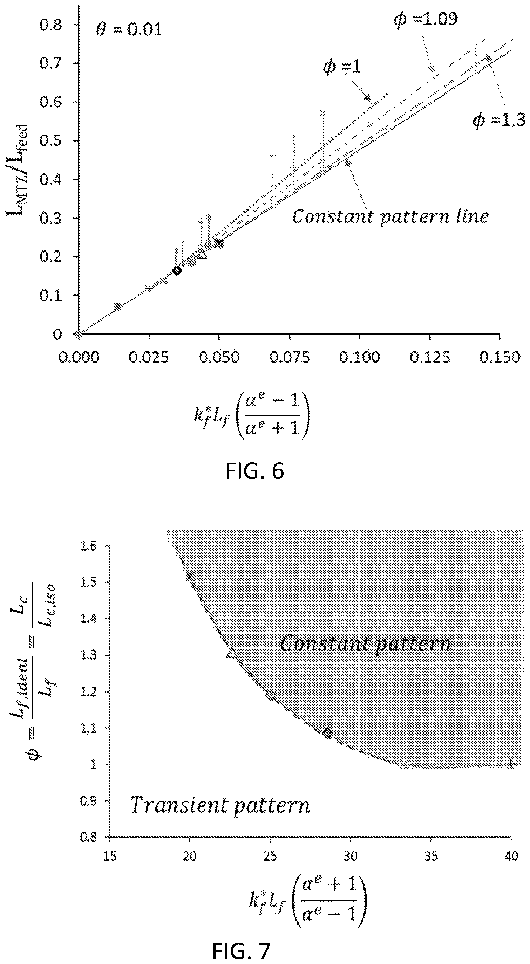

According to Eq. (10), the dimensionless constant pattern mass transfer zone length $L_{MTZ,CP}/L_{feed}$ should yield a straight line when it is plotted against the terms on the right hand side of Eq. (10). We used rate model simulations to generate the dimensionless transient mass transfer zone lengths over a wide range of the parameters in the x-axis. As expected, the dimensionless constant pattern-mass transfer zone lengths $L_{MTZ,CP}/L_{feed}$ form a straight line, whereas the transient mass transfer zone length $L_{MTZ,T}/L_{feed}$ fall above this straight line, Fig. 6. In the transient state, $L_{MTZ,T}/L_{feed}$ are shown in the region above the CP line. When different $L_{MTZ,T}/L_{feet}$ for the same $\phi$ are connected, a nonideal factor line appears above the CP line. As $\phi$ increases, the slope of the $\phi$ lines approach that of the CP line. As the mass transfer resistance reduces, each $\phi$ line intersects with the CP line at a specific different point, indicating the minimum $\phi$ for the $L_{MTZ,CP}$ ($\phi_{min}$) or $L_{c,min}/L_{c,iso}$. This allows us to plot $\phi_{min}$ versus the intersection points of the x-axis values of Fig. 6 to generate the map as shown in Fig. 7. Although Fig. 6 was generated for $\theta=0.01$, the $\phi_{min}$ remains the same for other $\theta$ values. The $\phi_{min}$ in different conditions was found as an exponential curve and the correlation for the $\phi_{min}$ curve was found.

$$\phi_{min} = 14.31 * exp\left(-0.1598 * k_f^* L_f\left(\frac{\alpha-1}{\alpha+1}\right)\right) + 0.9293 \qquad (if\ x < 33) \qquad (12)$$

Notice that the constant-pattern curve represents the minimum column lengths to reach the constant pattern state for the various x-axis values. Increasing x-values represent increasing mass transfer rates. The region above this curve represents the systems with column lengths which are longer than the required lengths to reach constant pattern. For a fixed x-axis value, after the column length is sufficiently long to reach constant pattern, further increase in column length will not increase the yield, but the excess length will only reduce sorbent productivity. The region below the curve represents the systems with column length which is too short to form constant pattern. As a result, the yield is smaller than that at the constant-pattern state. Therefore, the constant pattern-line represents the minimum column lengths for achieving the maximum yield of the high purity products at a given mass transfer efficiency (x-axis value). Without this map, it is difficult to design a system by trial and error to reach a constant-pattern state for a non-ideal system. For this reason, most of the literature data are in the non-constant pattern region, Fig. 6.

In Fig. 7, as the x-axis value increases, the effective mass transfer efficiency increases, the value of the y-axis, $\phi$, eventually approaches 1, as the x-axis value is about 33. This result indicates that the loading fraction to reach constant pattern state for a non-ideal system approaches that of an ideal system. At this point, the isotachic bands have little wave spreading, and they are separated as in an ideal system, and the yield of pure product approaches 1. As one reduces the x-axis value, the mass transfer efficiency decreases, the length of the mass transfer zone increases, the dimensionless loading for a non-ideal system has to be reduced to reach a constant-pattern state. As a result, the $\phi$ value increases. The yield at the constant-pattern state also decreases with decreasing mass transfer efficiency along the constant-pattern $\phi_{\text{min}}$ curve.

### Yield and productivity estimation based on L<sub>MTZ,CP</sub>

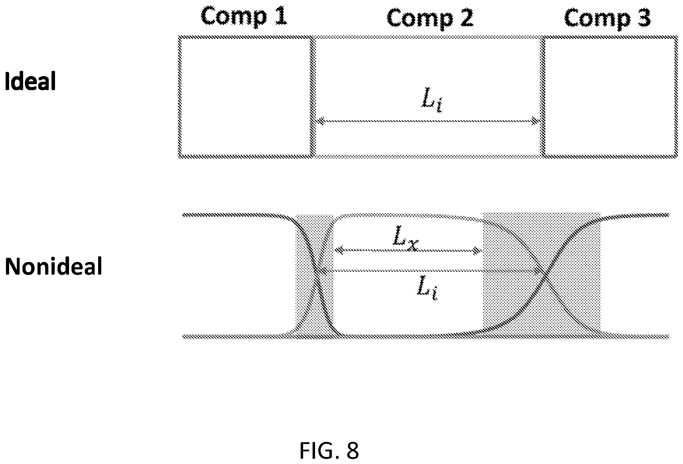

One can derive the yield of a middle component in an isotachic train. An example of a three component system is shown in Fig. 8. For an ideal system, the yield is 1 for all three components (Fig. 8a). For a non-ideal system, the yield of the middle component can be determined from the two mass transfer zone lengths between the adjacent bands in the effluent, $Y_2 = L_x/L_i$, where $L_i$ is the effluent band width for an ideal system, and $L_x$ corresponds to the effluent band of the high-purity product (Fig. 8b).

$$Y_2 = \frac{L_x}{L_i} = 1 - \frac{1}{2x_2 k_f^* L_f}\left(\frac{\alpha_{21}+1}{\alpha_{21}-1} + \frac{\alpha_{32}+1}{\alpha_{32}-1}\right) ln\left|\frac{1-\theta}{\theta}\right| \tag{13}$$

where $x_2$ is the fraction of component 2 in the feed; $L_f$ is the loading fraction; $\alpha_{ij}^e$ is the effective separation factor of component $i$ relative component $j$.

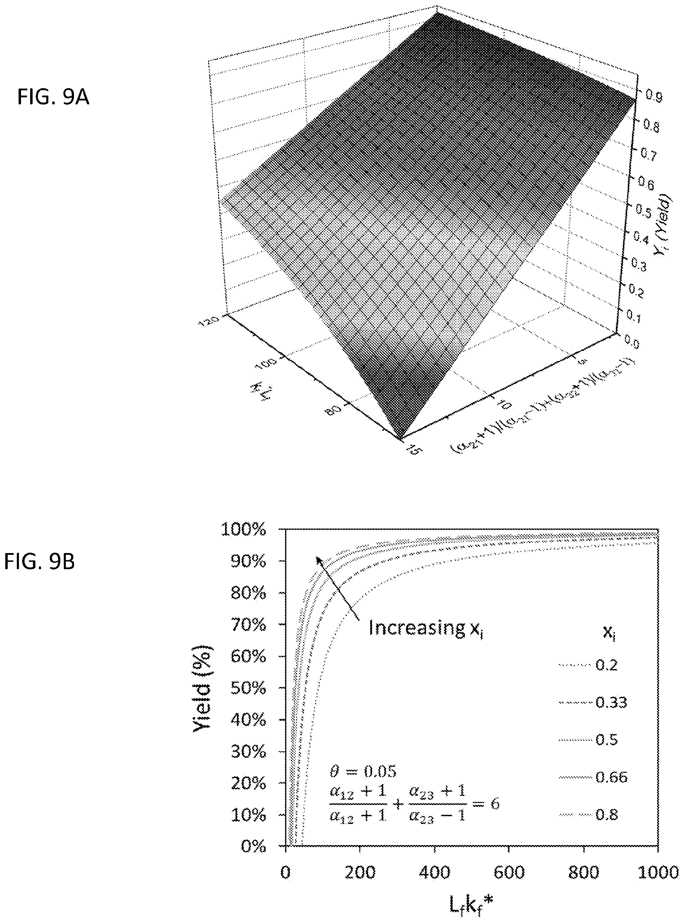

Fig. 9a shows that the yield of a middle component is a strong function of the effective separation factors $\alpha_{ij}$. For the given $\theta$ (0.05) and $x_i$ (0.33), the yield of the middle component can approach zero for small mass transfer efficiency (x-axis) and small separation factors (y-axis). The solutions of the constant pattern state exist only within the boundaries shown. The point of zero yield of the middle component indicates that the sum of the two constant pattern mass transfer zone lengths equal to the isotachic band length for an ideal system, which means the flat top of the band in the non-ideal system no longer exists. One can extend the analysis to the leading component (component 1) and the trailing component (component 3) by substituting the different separation factors. Fig. 9b shows the effect of feed composition on the yield. The component having the larger mole fraction in the feed has a higher yield than that of other component at the fixed $L_f k_f^*$. It can be clearly seen in Fig. 10c and 10d, where Nd has higher composition than Sm and Pr and thus, the Nd yield is higher than that of Sm and Pr.

The equation connecting productivity to yield and other parameters was developed as Eq. (13). The unit sorbent productivity for component i is defined in Eq. (5a). The productivity is proportional to the yield. The yield in the equation is replaced with Eq. (3) to obtain:

$$P_{R_i} \approx \frac{C_{f,i} V_f Y_i}{V_c t_{elution}} = \frac{q_{max} x_i u_0 L_f}{L_C K_d}\left(1 - \frac{1}{2x_i k_f^* L_f}\left(\frac{\alpha_{21}+1}{\alpha_{21}-1} + \frac{\alpha_{32}+1}{\alpha_{32}-1}\right) ln\left|\frac{1-\theta}{\theta}\right|\right) \qquad \text{Eq. (14a)}$$

The productivity can also be expressed in terms of the ligand concentration $C_D$ and the convention time $t_c$:

$$P_R = x_i L_f C_d \left(\frac{1}{t_c}\right)\left(1 - \frac{1}{2x_i k_f^* L_f}\left(\frac{\alpha_{21}+1}{\alpha_{21}-1} + \frac{\alpha_{32}+1}{\alpha_{32}-1}\right) ln\left|\frac{1-\theta}{\theta}\right|\right) \qquad \text{Eq. (14b)}$$

This equation demonstrates that productivity increases as ligand concentration increases or the convection time decreases. Notice that increasing column length to the maximum reduces the value of $1/Pe_b$. For a fixed value of $k_f^*$, as column length increases, the $t_c$ value solved from Eq. (11) becomes smaller.

**Rate model simulations using VERSE**

The VErsatile Reaction and SEparation (VERSE) model and simulation were developed by Berninger *et al.* in 1991 (Berninger, R. D. Whitley, X. Zhang, and N.-H. L. Wang. Computers and Chemical Engineering. 1991, Vol. 11(11), 749-768). The VERSE simulation package has been employed in various types of chromatography processes and verified in published papers. This model considers axial dispersion, film mass transfer, and intraparticle diffusion in chromatography. It includes various adsorption isotherms such as Langmuir, Bi-Langmuir, Freundlich, Mass action, and constant separation factor. Additionally, it considers reactions in the mobile or in the stationary phase. The VERSE model can calculate the partial differential equations numerically for component mass balances based on the local equilibrium theory. The completed simulation results show the column profiles and the effluent histories which will be used to compare with experimental data to verify the model and the parameters used in the simulations. The rate model simulations were employed to observe the constant pattern $L_{MTZ}$ development in LAD and to find the influence of key parameters after they were verified using experimental and literature data.

Here we have developed a detailed rate model and associated simulations for LAD for the first time based on dynamic differential mass balances of convection, axial dispersion, film mass transfer, intra-particle diffusion, competitive adsorption, and competitive complexation of solutes with the ligand. First, the Chung and Wen correlation was used to estimate the axial dispersion coefficient (S. F. Chung and C. Y. Wen, AIChE Journal. 1968 Vol. 14(6), 857-866). And Wilson and Geankoplis correlation was used to estimate the film mass transfer coefficient (E. J. Wilson and C. J. Geankoplis, Industrial & Engineering Chemistry Fundamentals 1966 Vol 5(1), 9-14). The isotherm used in this study was constant separation factor equilibrium, which has advantage of using fewer variables to specify from experimental data because column capacity ($q_{max}$) is constant for all components. Since it assumes monovalent ion exchange, the equivalent (N) unit is used.

$$q_i = \frac{q_{max}\alpha_{i,ref}C_{p,i}}{\sum_{j=1}^{N_c}\alpha_{j,ref}C_{p,j}} \quad (15)$$

where $q_{max}$ is the column capacity (mequiv./mL bed volume), $C_{p,i}$ is the concentration of component i in the stationary phase, and $\alpha_{i,ref}$ is the separation factor which is defined as:

$$\alpha_{i,ref} = \frac{q_i C_{p,ref}}{C_{p,i}q_{ref}} \quad (16)$$

For LAD, the effective selectivity is used for the separation factor. Since the presaturant separation factor is 1, each solute's separation factor can be increased by multiplying the effective selectivity to the adjacent separation factor from the presaturant.

The model and simulations have been verified with our own data depicted in Fig. 10 and major literature data as shown in Fig. 11. Fig. 10 compares the rate model simulations (dashed curves) with our own data (solid curves) for the separation of Sm, Nd, and Pr using citric acid or EDTA as the ligand and DOWEX50WX8 (strong cation exchange resin) as the stationary phase. Fig. 11 compares the simulations (solid curves) with published data for (a) separation of Sm and Nd (discrete symbols) using citric acid, Spedding and Powell (1950), (b) separation of heavy REE using EDTA, Moore et al. (1995), (c) and (d) separation of light REE using EDTA, Lindstrom (1959) (Spedding, FH et al., J. Am. Chem. Soc. 1950, 72, 2349-2354; Lindstrom RE, Separation of Rare-earth Elements in Bastnasite by Ion Exchange (University of Michigan Library, 1959); Moore BW, et al., Rapid Separation of Heavy Rare-earth Elements (U.S. Dept. Of the Interior, Bureau of Mines, 1995). The operating parameters for the simulations for the literature data were based on either reported parameters or estimated based on their reported information. It is evident from Figs. 10 and 11 that the model and the simulations are capable of reproducing accurately the chromatograms. The simulations closely match the chromatograms for the various LAD systems with different types of ligands, sorbents, ligand concentration, feed compositions, column lengths, and linear velocities. Each simulation only takes a few minutes using a personal computer.

**Robust Constant-Pattern Design Method**

A design method employing constant pattern mass transfer zones was developed. This method finds the minimum required column length to develop a $L_{MTZ,CP}$ for a given feed mixture and yield requirements. The minimum required values for the dimensionless column length are found using a general map. The limit of the constant pattern region, which is the $\phi_{min}$ curve, can give the minimum required column length and the maximize yield. Therefore, the design method finds the corresponding value of $\phi_{min}$ for the given parameters - the intrinsic adsorption (selectivity constants), diffusion, and other mass transfer parameters. Those parameters are found by performing a few preliminary tests, which are done experimentally and then compared with rate model simulations using the VERSE simulation package. For a desired feed volume and feed composition, pressure limit, and sorbent particle size, it can predict the conditions (column length, velocity, ligand concentration, and feed loading) to obtain isotachic bands with constant-pattern mass transfer zones. The designs which give the highest yields can be obtained without experimental trial and errors. The scheme of design method is shown in Scheme 1.

**Assumptions used in the algorithm development**

Since this method is designed to develop a constant pattern mass transfer zone between each isotachic band, there are a few assumptions to meet the theoretical requirements. First, a system in the column is in local equilibrium conditions. Second, the amount of feed loading is sufficiently large to develop rectangular-shaped isotachic bands. Third, the mass transfer coefficients are the same for all components. Lastly, the mass transfer zones are symmetric. This method may be used when some of the assumptions are not met, as a way of an approximation. These assumptions are generally considered reasonable. The asymmetric mass transfer zone occurs in specific conditions so that the correction factor is considered as safety factor ($K_{SF}$).

**Scheme 1.** (a) Scheme of the developed design method, (b) Procedure for preliminary tests, and (c) Procedure to design a system using the developed design algorithm:

(a)

Preliminary tests to obtain input parameters in ⇒ Purdue Deign ⇒ Verification with Simulations and Lab scale experiments ⇒ Large scale Process test

(b)

Preliminary Test for Obtaining Input Parameters

Feed Composition Analysis (x$_i$) ⇒ Sorbent/Ligand/Presaturant Screening (Stability, Capacity, Selectivity) ⇒ Small column test: Pulse/frontal test ⇒ Binary LAD Tests: $\alpha^2_{i,j}$ & $c_D^{eff}/c_D$

⇓ ⇓

Obtain intrinsic Parameters: $R_p$, $q_{max}$, $\varepsilon_b$, $\varepsilon_p$, $D_{p,i}$, $E_{b,i}$, $\mu$ ⇒ VERSE Simulations

**Parameters**

| $x_i$ | Feed composition of component I | $\alpha_{i,j}^e$ | $\varepsilon_p$ | Particle Porosity |
| | Effective selectivity | | $D_p$ | Intra-particle Diffusivity |
| $q_{max}$ | Column capacity | | $R_p$ | Particle Radius |
| $C_D$ | | | $u_0$ | Interstitial Velocity |
| | Ligand concentration $C_D^{eff}$ | | | |
| | Effective ligand concentration | | $R_p$ | Particle Radius |
| $E_b$ | Axial dispersion coefficient | | $\mu$ | Viscosity |
| $\varepsilon_b$ | Bed void Fraction | | $\Delta P_{max}$ | Pressure limit |

(c)

**Parameters**

| $x_i$ | Feed composition of component I $\alpha_{i,j}^e$ | $u_0$ | Interstitial Velocity |
| | Effective selectivity | $L_c$ | Column length |
| $q_{max}$ | Column capacity | $L_{max}$ | Maximum column length |
| $C_{D,max}$ | Maximum ligand concentration | $\mu$ | Viscosity |
| $C_{D,max}$ | Maximum ligand concentration | $\Delta P_{max}$ | Pressure limit |

(continued)

| | | | | |
|---|---|---|---|---|
| $Y_i$ | Yield of component i | $L_f/L_{f,ideal}$ | loading factor/ Ideal maximum feed loading factor | $\tilde{k}_f$ |
| $\theta$ | Mass transfer zone boundary cut | | Dimensionless overall mass transfer coefficient | |
| $\varepsilon_b$ | Bed void Fraction | $\phi_{min}$ | Minimum nonideal factor to develop a constant pattern mass transfer zone | |
| $\varepsilon_p$ | Particle Porosity | $K_{se}$ | Size exclusion factor | |
| $D_p$ | Intra-particle Diffusivity | $ID$ | Inner diameter | |
| $R_p$ | Particle Radius | $V_f$ | Feed loading volume | |

**Parameter estimation for LAD design**

The developed design method requires input parameters such as material properties, intrinsic parameters, and feed conditions. Therefore, preliminary tests need to be conducted to obtain the input parameters. First, the concentrations of REE and their compositions in feed need to be known. Based on the compositions in the feed, appropriate sorbent and ligand can be determined via screening tests. Sorbent stability, resin capacity, and selectivities for REE can be considered. Depending on the selected sorbent and ligand, a presaturant can also be chosen by comparing the sorbent selectivity and the ligand selectivity with those of REE. The presaturant need to have lower effective selectivity than that of REE.

The intrinsic parameters can be obtained from batch column tests. A small scale single column is packed with the selected resins. A pulse test can be performed to measure the bed void fractions ($\varepsilon_b$) and particle porosity ($\varepsilon_p$) in the column by loading a small volume of non-retained components (tracers). For example, for strong cation exchange resins, a small volume of Blue Dextran solution is fed into the column and the retention time of the tracer is observed. Blue Dextran does not adsorb on the resins nor penetrate into the pore phase due to large molecular weight so the retention volume of Blue Dextran compared to the column volume yields the bed void fraction. One can obtain the particle porosity from the manufacturer's specification. If not, particle porosity can be calculated based on the total porosity equation (Eq. 17).

$$\varepsilon_t = \varepsilon_b + (1 - \varepsilon_b)\varepsilon_p \qquad (17)$$

To measure the total porosity ($\varepsilon_t$), an acetone pulse test can be used because it does not adsorb on the resin but it can penetrate through the pore phase when the resin is in Na+ form. Column capacity ($q_{max}$) is usually given by the manufacturers' specification. If not, a frontal test, which is loading a single component in the column until the column is saturated with the component, is needed to observe a breakthrough curve and to calculate the $q_{max}$ from the center of mass of the breakthrough curve.

After pulse tests, binary LAD separation test can be performed to estimate column capacity ($q_{max}$), pore diffusivity coefficients ($D_{p,i}$), Brownian diffusivities ($D_{b,i}$), $\alpha^e_{i,j}$, and the effective ligand concentration ($c_D$). First, the effective selectivities are estimated as the inverse of ligand selectivities, which can be estimated from the stability constants in the literature. Based on this initial estimation, we can calculate the ideal loading factor. Since the estimated $q_{max}$ is given by the manufacturers' specification, we can calculate the feed loading volume. If $q_{max}$ is not given, a loading test with single component is needed to observe a breakthrough curve. One can calculate the $q_{max}$ from the center of mass of the breakthrough curve. It is recommended to use less than 2 % of the $q_{max}$ for the ligand concentration in the initial test.

The linear velocity for the initial test is recommended to give an $N_D$ value higher than 50. When an effluent history from the initial LAD test is obtained, the result can be compared with the rate model simulations using VERSE. By adjusting the parameters in the VERSE simulations, one can obtain the intrinsic parameters ($q_{max}$, $D_{p,i}$, $D_{b,i}$, $\alpha^e_{i,j}$), and the ratio of effective ligand concentration to the ligand concentration. Parameter estimation need to be done for all REE pairs in the feed if the effective selectivity cannot be estimated from the stability constants. Furthermore, we may simulate LAD to obtain $L_{MTZ,CP}$ using VERSE simulations based on the estimated parameters. The obtained $L_{MTZ,CP}$ is compared with that calculated from Eq. (10). If the results is different, the deviation of the results can be accounted for by adding a safety factor ($K_{SF}$) into the yield estimation equation. That is because, in an asymmetric system, the $L_{MTZ,CP}$

of a multicomponent system may be larger than that calculated $L_{MTZ,CP}$.

**Algorithm for designing LAD**

After obtaining the required parameters, the procedure to design experimental conditions follows.

1. The estimated parameters from the preliminary tests, target yields and purity, and pressure limit can be input in the design process.
2. Based on the feed compositions and the effective selectivity, the ideal loading factor ($L_{f,ideal}$) can be calculated.
3. To achieve the target yield, the required value of $L_f k_f^*$ to develop a CPIT is found from the yield equation. This step is done for all components that have a yield requirement. As such, several values of $L_f k_f^*$ are calculated at this point.

$$Y_i = 1 - \frac{K_{SF}}{2x_i L_f k_f^*}\left(\frac{\alpha_{21}-1}{\alpha_{21}+1} + \frac{\alpha_{32}-1}{\alpha_{32}+1}\right)\ln\left|\frac{1-\theta}{\theta}\right| \qquad (18)$$

4. Using the general map (Fig. 7), one can find the corresponding $\phi_{min}$ for each calculated $L_f k_f^*$.
5. Since $\phi = L_{f,ideal}/L_f$, the actual loading factor ($L_f$) can be calculated from the $\phi_{min}$.
6. As $L_f$ is known, the value of each $k_f^*$ is calculated. The largest $k_f^*$ value is then used as the system $k_f^*$ for it is the most conservative value and will meet all the yield requirements. Since the $t_D$ is fixed for the given particle size and intraparticle diffusivity, the $k_f^*$ value corresponds to many combinations of $L_c$ and $u_0$ to reach the constant pattern-isotachic state for the non-ideal system as shown in Eq. (11). If the system has a pressure limit ($\Delta P_{max}$), the Ergun equation and the $k_f^*$ equation can be used to find the two unknowns, the $u_0$ and $L_c$, the maximum column length and the maximum velocity.

$$\Delta P_{max} = \frac{150(1-\varepsilon_b)\mu u_0 L_c}{4\varepsilon_b R_p^2} \qquad (19)$$

In a calculation loop, a wide range of column lengths are considered to calculate $u_0$. The maximum $u_0$ limited by $\Delta P_{max}$ using Eq. (11) and (19). For instance, the range of column length is from 10 cm to 500 cm. Based on two equations, a calculation loop can provide the maximum column length and the maximum velocity.
7. To prevent the collapse of isotachic bands, the maximum ligand concentration limit is calculated. The ideal bandwidth ($L_j$) of the middle component j between components i and k needs to be larger than mass transfer zones at both ends.

$$L_j > \frac{1}{2}(t_{MTZ,i/j} + t_{MTZ,j/k}) \text{ (for all components)} \qquad (20)$$

Therefore, the limit of ligand concentration is found from Eq. (19)

$$C_d^{eff} \le \frac{2\varepsilon_b A_c C_{f,i,min} V_f}{u_0(t_{MTZ,1}+t_{MTZ,2})} \qquad (21)$$

In the calculation loop, a wide range of ligand concentration is calculated iteratively to find the maximum value of $C_d^{eff}$ from Eq. (21). Note that the limit of ligand concentration is also affected by ligand solubility, which must be considered in designing LAD process. Additionally, if the ligand concentration is too high, the value of $K_d$ gets smaller, causing the assumptions in the method to apply no longer. It is suggested to use a ligand concentration in which $K_d$ is at least 50 for best results.
8. If the column diameter is specified, the required feed loading volume ($V_f$) can be calculated from $L_f$ for the given column length.

$$V_f = \frac{q_{max} L_f A_c L_f}{\sum c_{f,i}} \qquad (22)$$

If the column diameter is not specified, one can calculated the inner diameter using Eq. (1) for the given loading volume ($V_f$). The obtained values will be verified with the rate model simulation using VERSE. Then, the verified conditions can be tested in the experiments.

**Comparison of design method with literature data**

The productivity for obtaining 99% pure REE is much higher than the best results reported in the literature. Several examples are shown in Fig. 12 where we compare the results from Purdue design with studies from Spedding and Powell (1950), Moore et al. (1995) and Lindstrom (1959) (Spedding, FH et al., J. Am. Chem. Soc. 1950, 72, 2349-2354; Lindstrom RE, Separation of Rare-earth Elements in Bastnasite by Ion Exchange (University of Michigan Library, 1959); Moore BW, et al., Rapid Separation of Heavy Rare-earth Elements (U.S. Dept. Of the Interior, Bureau of Mines, 1995)). For similar yields at 99% purity, the Purdue productivities are more than an order of magnitude better than all the literature results. Specifically, they are 70x higher than Spedding's results, 25x better than Moore's results, and 12x better than Lindstrom's results which were the previous best published work.

**Multi-zone continuous LAD process**

This developed method can be extended to any feed that has varied feed compositions by using multi-column separations as shown in Fig 13. Using the multi-zone LAD process, the developed method can be used for separating all REE components in the feed and thus, the separation productivity is improved.

**Table 1** shows the compositions of two typical REE crude mixtures, which came from Bastnasite and coal fly ash, respectively. When a feed has a wide range of compositions of REE, it is difficult to separate adjacent REE pairs that have particularly low selectivities or have low molar concentrations. Thus, the separation of all the REE in a single constant-pattern isotachic train would require a very long column length and extremely low flow rate.

**Table 1.** Two typical REE crude compositions, which are similar to those of Bastnasite and Coal fly Ash, respectively.

| Light and Medium Rare earth (LREE) | La | | Ce | | Pr | | Nd | | Sm | | Eu | |
|---|---|---|---|---|---|---|---|---|---|---|---|---|
| Bastnasite, Mountain Pass [1] (wt. %) | 33.2 | | 49.1 | | 4.3 | | 12 | | 0.8 | | 0.12 | |
| Coal Fly Ash, Kentucky, U.S.[2] (wt. %) | 17.89 | | 35.78 | | 4.14 | | 15.86 | | 3.35 | | 0.32 | |
| **Heavy Rare earth (HREE)** | Gd | Tb | Dy | Ho | Er | Tm | Yb | Lu | Y |
| Bastnasite, Mountain Pass[1] (wt. %) | 0.17 | 0.16 | 0.03 | 0.005 | 0.003 | 0.001 | 0.001 | Trace | 0.09 |
| Coal Fly Ash, Kentucky, U.S.[2] (wt. %) | 2.58 | 0.44 | 2.91 | 0.58 | 1.61 | 0.39 | 1.47 | 0.04 | 12.6 |

1. C.K. Gupta and N. Krishnamurthy, "Extractive metallurgy of rare earths" (2005) CRC Press.
2. Hower et al., Coal Combustion and Gasification Products (2013) 5, 73-78.

To develop a continuous multi-zone LAD process, REE components in feed are first split into different subgroups. For REE in coal fly ash, the REE mixture is separated into two groups, major components and minor components because REE molar concentrations differ by orders of magnitude. Each group can be treated as a "pseudo component." As shown in Fig 14a, the major components are easily separated in the main column. While the minor components are spread out in mass transfer zones (see Fig. 14b). When we use a single column LAD, high purity fractions of the minor components are rarely collected. However, when we collect this "pseudo component" and transfer to it sub column (column 2), the minor components can be accumulated in the column until its amounts are sufficient to develop a constant pattern isotachic train as shown in Fig. 14c. Since minor components have different selectivities, the operating conditions can be designed based on the selectivity pairs for the most difficult separation among the group.

**Table 2** shows the comparison of single LAD process with multi-zone LAD process for separating REE from coal fly ash. With single column operation, the minor components are not separated. Even if the operation conditions are adjusted to slow the flow rate by an order of magnitude, a single column cannot produce the 99% pure products of the minor components. On the other hand, using a splitting method, minor components can be transferred to different zone (zone II) and can be separated with different operating conditions from zone I. The resulting yield shows from 12 - 95.7% yield of high purity for each minor component. This multi-zone LAD process can be performed continuously so that the overall productivity of high purity REE can be improved.

**Table 2.** Comparison of single LAD vs. 2 zone LAD for separating minor REE components in Fig 14.

| | 1 Zone System with >10x lower productivity of major products | 2 Zone System |
|---|---|---|
| Element | Yield (%) | |
| Yb | 0 | 90.8 |
| Tm | 0 | 12.0 |
| Er | 0 | 95.0 |
| Ho | 0 | 75.4 |

The following examples are provided to illustrate some practical applications of the methods disclosed herein, especially for the separations of ternary mixtures using a LAD chromatographic system. The use of the general map is extended to ternary systems, and an equation for the yield of each component is derived in terms of dimensionless groups. The yield equations allow for the specific yield of a single component or the minimum target yields for multiple components to be achieved in the design. The specific objectives of this study are (1) to develop a constant-pattern design method for ternary separation with high purity, high yield, and high productivity, (2) to verify the design method experimentally, and (3) to understand the effects of material properties, intrinsic parameters, and operating parameters on the yield and the productivity for LAD process for ternary separations.

An overview of the research approach for the development of the constant-pattern design method is shown in Fig. 15. The key variables in this figure are defined in Table 3. First, the general map based on dimensionless group analysis and rate model simulations was extended for the separation of ternary mixtures. Next, an equation for the yield of a given component in LAD in terms of dimensionless groups was derived from shock layer theory and dimensionless group analysis. The map and the yield equations were used to obtain the operating conditions required to achieve a target yield of a single component or minimum target yields of two or three components in a ternary mixture. The developed method was tested in lab scale experiments for different yields, ligand concentrations, and feed compositions. The key factors controlling the product yield and productivity were found from the derived yield and productivity equations. The effects of the key dimensionless groups on the yield, productivity, and design were examined using experiments and rate model simulations.

The highlights of this study are as follows. A robust and scalable design method was developed for the separation of ternary mixtures for non-ideal systems. Multiple variables are optimized for the desired purity and yield without any trial and error simulations or experiments. The constant-pattern design method enables two orders of magnitude higher productivity than literature values.

To design an efficient LAD process, it is necessary to understand the conditions that are required to form a constant-pattern isotachic train and then design accordingly to achieve high product purity and yield. This process is illustrated stepwise below in details. First, the complexation equilibrium of a solute with a ligand and its adsorption/desorption equilibrium in ligand-assisted displacement systems are explained and used to define an effective sorbent selectivity. Wave interference theory is used to determine the minimum column length required to form an isotachic train in ternary ideal systems. This column length is then used as the benchmark for ternary non-ideal systems. Next, the general correlation for determining the constant-pattern state for binary systems is extended for the separation of ternary mixtures. The yield equations for ternary systems are derived in terms of dimensionless groups. Finally, a description of the overall design method is given along with the limits for the application of the method. Key variables and dimensionless groups are defined and summarized in Table 3.

Table 3. Summary of key variables and definitions

| Variable | Definition |
|---|---|
| Cd | Effective ligand concentration |
| $C_{f,i}$ | Feed concentration of component i |
| Dp | Intra-particle diffusivity |
| **DV** | Extra-column dead volume |
| $E_b$ | Axial dispersion coefficient |
| Kd | Nonlinear distribution coefficient |
| $k_f^*$ | Dimensionless overall mass transfer coefficient |
| Lc | Column length |
| Lf | Loading fraction |
| $L_{feed}$ | Column length occupied with feed in ideal system |
| $L_{iso-id}$ | Minimum column length to develop an isotachic train in an ideal system |
| $L_{iso-nid}$ | Minimum column length to develop a constant-pattern isotachic train in a nonideal system |
| $L_{MTZ,CP}$ | Constant pattern mass transfer zone length |
| Lf | Loading fraction |
| $N_D$ | Ratio of intraparticle diffusion rate to convection rate |
| Nf | Ratio of film mass transfer rate to convection rate |
| $Pe_b$ | Peclet number in axial direction |
| $\Delta P_{max}$ | Pressure limit |
| $P_R$ | Productivity ($kg/m^3 day$) |
| $q_{max}$ | Column capacity |
| Rp | Particle radius |
| $t_{MTZ,CP}$ | Transient pattern mass transfer zone length |
| $u_0$ | Interstitial velocity |
| $u_d$ | Displacer shock wave velocity |
| Vc | Column volume |
| Vf | Feed loading volume |
| Yi | Yield of component i |
| $\alpha_{i,j}e$ | Effective sorbent selectivity |
| $(\alpha_{i,j}^{ligand}$ | Ligand selectivity |
| $\alpha_{i,j}^{sorbent}$ | Sorbent selectivity |
| $\beta$ | Natural log of the ratio of top band concentration cut to bottom band concentration cut |
| $\gamma$ | Selectivity weighted composition factor |
| $\varepsilon_b$ | Bed void fraction |
| $\varepsilon_p$ | Particle porosity |
| $\varepsilon_t$ | Total porosity |
| $\theta$ | Breakthrough cut |
| $\phi$ | Dimensionless column length relative to the minimum column length required to form an isotachic train in at ideal system |
| $\phi_{min}$ | Minimum dimensionless column length to form a constant-pattern isotachic train in a non-ideal system |

## 2.1 MAXIMUM LOADING FRACTION TO DEVELOP AN ISOTACHIC TRAIN FOR A TERNARY MIXTURE IN IDEAL SYSTEMS

### 2.1.1 Effective sorbent selectivity in ligand assisted displacement

In ligand-assisted chromatography the REEs are adsorbed strongly onto the sorbent. It is the reversible complexation with the ligand that drives desorption of REEs into the mobile phase. Repetitive adsorption, desorption, and complexation reactions allow the REEs that have higher affinity for the ligand to spend more time in the mobile phase and to elute from the column first. In traditional displacement chromatography, the component that has the highest affinity for the sorbent is eluted last. In ligand-assisted displacement, both the complexation of a solute with the ligand and its adsorption/desorption are in equilibrium, resulting in an overall effective sorbent selectivity ($\alpha^e$). The effective sorbent selectivity is proportional to the intrinsic sorbent selectivity $\alpha_{i,j}^{sorbent}$ and inversely proportional to the intrinsic ligand selectivity $\alpha_{i,j}^{ligand}$, Eq. (23) (H. Choi, et al., J. Chromatogr. A. 2018, 1563, 47-61. Hereafter, Choi, et al., **2018**).

$$\alpha_{i,j}^e = \frac{\alpha_{i,j}^{sorbent}}{\alpha_{i,j}^{ligand}} \qquad (23)$$

where the intrinsic ligand selectivity is defined as:

$$\alpha_{i,j}^{ligand} = \frac{K_{C,i}}{K_{C,j}} \qquad (24)$$

In Eq. (24), the $K_C$ values are the equilibrium complexation constants for the REEs with the ligand. The effective sorbent selectivities used in this study were estimated based on experimental data in a previous study (Choi, et al., **2018**). The intrinsic sorbent selectivity was measured using frontal chromatography and estimated to be 1.1 for both Nd/Sm and Pr/Nd (See Section S1 of the Supplemental Information). The ligand selectivities calculated from the experimental data using Eq. (23).

**2.1.2 Maximum loading fraction in ternary ideal systems**

Another key component of the design of LAD systems is the feed length ($L_{feed}$), which is defined as the length of the column in an ideal system that is saturated with the solutes after the feed is loaded. For an ion exchange resin, it can be defined as:

$$L_{feed} = \frac{L_c \sum_{i=1}^{N} C_{f,i} V_f}{q_{max} V_c} \qquad (25)$$

where $C_f$ is the total solute concentration in the feed, $V_f$ is the total feed volume, $q_{max}$ is the maximum column capacity on a bed volume basis, and $V_c$ is the column volume, and $L_c$ is the length of the column. Helfferich and James developed wave interference theory to determine the minimum column length relative to the feed length ($L_{iso-id}/L_{feed}$) that was required to form an isotachic train in ideal, multi-component systems [F. Helfferich, et al., J. Chromatogr. 1970, 46, 1-28]. While in binary ideal systems $L_{iso-id}$ is only a function of the effective sorbent selectivity, in ternary ideal systems, $L_{iso-id}$ is a function of both the effective sorbent selectivity and the feed composition. A separation of an equimolar mixture of three components using LAD is illustrated in Fig. 16. The column length required to separate three components of a ternary mixture ($z_{ij}$) are shown in Eq. (26a - 26c) [ F. Helfferich, et al., J. Chromatogr. 1970, 46, 1-28]:

$$\frac{z_{13}}{L_{feed}} = \frac{\alpha_{1,3}^e}{\alpha_{1,3}^e - 1} \qquad (26a)$$

$$\frac{z_{12}}{L_{feed}} = \frac{\alpha_{1,2}^e \alpha_{1,3}^e (h_2 - 1)}{h_2 (\alpha_{1,2}^e - 1)(\alpha_{1,3}^e - 1)} \qquad (26b)$$

$$\frac{z_{23}}{L_{feed}} = 1 + \frac{\alpha_{1,3}^e (\alpha_{1,3}^e - h_1)}{h_1 (\alpha_{1,3}^e - 1)(\alpha_{1,3}^e - \alpha_{1,2}^e)} \qquad (26c)$$

where hi is the non-trivial roots of the H-function of component "i". To separate all three components, the largest length calculated from Eq. (26a-26c) should be used for the value of the dimensionless minimum column length for an ideal system $L_{iso-id}/L_{feed}$ (Eq. (27a)). The inverse of that ratio is the maximum loading fraction for an ideal system to develop an isotachic train (Eq. (27b)).

$$\frac{L_{iso-id}}{L_{feed}} = \max\left(\frac{z_{13}}{L_{feed}}, \frac{z_{12}}{L_{feed}}, \frac{z_{23}}{L_{feed}}\right) \tag{27a}$$

$$L_{f,max,id} = \frac{L_{feed}}{L_{iso-id}} \tag{27b}$$

### 2.2 Constant-pattern mass transfer zone length for ternary non-ideal systems

The length of the mass transfer zone ($L_{MTZ}$) is the key to determining the yield of a non-ideal displacement process. The length of the mass transfer zone is defined as the length in the column, where the concentration of a component varies from a high value to a low value or vice versa. This is illustrated in Fig. 17a. This length can also be expressed in terms of a time period in the effluent history. In the constant-pattern state, the mass transfer zone length is equal to the time of the mass transfer zone ($t_{MTZ,CP}$) multiplied by the displacer velocity (Eq. (28) and (29)). In time, the mass transfer zone is the amount of time it takes to elute the boundary of a band from a high concentration to a low concentration or vice versa (Fig. 17b). In Figs. 17a-17b, $\theta$ is defined as the breakthrough cut. For a given chromatogram, the mass transfer zone length depends on $\theta$. A smaller $\theta$ value corresponds to a wider mass transfer zone length, or a wider mixed region between two bands.

$$L_{MTZ,CP} = t_{MTZ,CP} u_d \tag{28}$$

$$u_d = \frac{u_0}{1 + P\varepsilon_p + \frac{\Delta q_d}{\varepsilon_b \Delta C_d}} = \frac{u_0}{1 + P\varepsilon_p + \frac{q_d}{\varepsilon_b C_d}} \tag{29a}$$

$$K_d = P\varepsilon_p + \frac{\Delta q_d}{\varepsilon_b \Delta C_d} \tag{29b}$$

$$\theta = \frac{C_{bot}}{C_{band}} \tag{30}$$

wherein $u_d$ is the displacer velocity, $u_0$ is the linear interstitial velocity, $K_d$ is the nonlinear distribution coefficient defined in Eq. (29b), which in an ion exchange system is equivalent to the maximum column capacity ($q_{max}$) divided by the concentration of the displacer ($C_d$), if the $P\varepsilon_p$ term in Eq. (29b) is negligible; P is the phase ratio defined as $(1 - \varepsilon_b)/\varepsilon_b$ where $\varepsilon_b$ as the bed void fraction, $\varepsilon_p$ is the particle void fraction, $\Delta q_d$ is the change of displacer concentration in the stationary phase, and $\Delta C_d$ is the change of displacer concentration in the mobile phase across the displacer front.

Previous work by Rhee and Amundson (1970s) and Zhu and Guiochon (1994) was done to calculate the length of the mass transfer zone for a binary pair (H.K. Rhee, et al., Chem. Eng. Sci. 1974, 29, 2049-2060; J. Zhu, et al., J. Chromatogr. A. 1994, 659, 15-25). Their theory is applicable after a train reaches constant-pattern in conventional displacement chromatography. The length or time of the mass transfer zone at constant-pattern ($L_{MTZ,CP}$ or $t_{MTZ,CP}$) can be calculated based on the intrinsic properties of the system, Eq. (31a). The length of the constant-pattern mass transfer zone can be converted to the elution time corresponding to the constant-pattern mass transfer zone by dividing $L_{MTZ,CP}$ by the displacer wave velocity ($u_d$) in Eq. (31b) [J. Zhu, et al., J. Chromatogr. A. 1994, 659, 15-25].

$$L_{MTZ,CP} = \left[\frac{E_b(1+K_d)}{u_0 K_d} + \frac{u_0}{K_f(1+K_d)}\right]\left(\frac{\alpha+1}{\alpha-1}\right) ln\left|\frac{1-\theta}{\theta}\right| \tag{31a}$$

$$t_{MTZ,CP} = L_{MTZ,CP}/u_d = \left[\frac{E_b(1+K_d)^2}{u_0^2 K_d} + \frac{1}{K_f}\right]\left(\frac{\alpha+1}{\alpha-1}\right) ln\left|\frac{1-\theta}{\theta}\right| \tag{31b}$$

where $E_b$ is the axial dispersion coefficient, $K_f$ is the lumped mass transfer coefficient in the linear driving force model based on the concentration difference in the particle phase, and $\alpha$ is the selectivity between two components.

Recent work by Choi et. al. **2018,** has shown for binary systems that Eq. (31a-31b) can be manipulated to give the following equation:

$$\frac{L_{MTZ,CP}}{L_{feed}} = \frac{1}{k_f^* L_f}\left(\frac{\alpha^e+1}{\alpha^e-1}\right)\beta \tag{32a}$$

$$\frac{t_{MTZ,CP}\, u_0}{L_c} = \frac{K_d}{k_f^*}\frac{\alpha^e+1}{\alpha^e-1}\beta \tag{32b}$$

where:

$$\beta = \ln\left|\frac{1-\theta}{\theta}\right| \tag{33}$$

$$\frac{1}{k_f^*} = \frac{1}{Pe_b} + \frac{1}{15N_D} + \frac{1}{N_f} \tag{34a}$$

$$\frac{1}{k_f^*} \approx \frac{1}{Pe_b} + \frac{1}{15N_D}, \text{ if film resistance is negligible} \tag{34b}$$

$$Pe_b = \frac{L_c}{10\varepsilon_b R_p}, \text{ Chung and Wen correlation for low Reynold's number } (<1) \tag{35a}$$

$$N_D = \frac{K_{se}(1-\varepsilon_b)\varepsilon_p D_p L_c}{\varepsilon_b u_0 R_p^2} \tag{35b}$$

$$N_f = \frac{3L_c}{R_p}\frac{(1-\varepsilon_b)k_f}{\varepsilon_b u_0} \tag{35c}$$

$k_f^*$ is the dimensionless overall mass transfer coefficient, $Pe_b$ is the Peclet number in the axial direction, $N_D$ is a dimensionless group that is the ratio of the diffusion rate to the convection rate, $N_f$ is a dimensionless group that is the ratio of the film mass transfer rate to the convection rate (L. Ling, et al., J. Chromatogr. A. 2014, 1355, 86-99), $D_p$ is the intraparticle diffusion coefficient, $k_f$ is the film mass transfer coefficient, and $R_p$ is the particle radius. It was shown by Choi *et. al.* **2018** that the minimum column length that is required to form a constant-pattern isotachic train in binary nonideal systems could be predicted using a general map based on the dimensionless groups in Eq. (32).

As in binary non-ideal systems, the column length required to develop a constant-pattern isotachic train in ternary non-ideal systems is longer than the minimum column length for an ideal system $L_{iso-id}$ with the same selectivity. It is useful to define a dimensionless column length ($\phi$) using $L_{iso-id}$ as the characteristic length [Choi, et al., **2018**].

$$\phi = \frac{L_c}{L_{iso-id}} \tag{36}$$

For a constant-pattern isotachic train to form in a ternary system, all the mass transfer zones between each pair of components in the train must reach a constant-pattern state. Because the operating conditions of the column are the same for all the components in a ternary mixture, the lowest selectivity pair will require the longest column length to reach a constant-pattern. Therefore, the overall lowest value of $\alpha^e$ in a ternary system should be used to determine the minimum column length required to form a constant-pattern isotachic train when designing ternary separations. Because this is the most conservative value, all other components will also have sufficient column length to reach a constant-pattern state to form an isotachic train. The simulation parameters of this figure are based on Design 2A in Table 4.

An example of the general design map with several points from experiments in this study are shown in Fig. 18a (Choi, et al., **2018**). This map divides the constant-pattern region from the transient region by the $\phi_{min}$ curve. The $\phi_{min}$ is the minimum required column length to form a constant-pattern isotachic train in non-ideal systems ($L_{iso\text{-}nid}$) non-dimensionalized by the minimum column length to form an isotachic train in a corresponding ideal system. This $\phi_{min}$ is also the dimensionless maximum loading fraction of a non-ideal system to reach a constant-pattern state, Eq. (37)

$$\phi_{min} = \frac{L_{iso\text{-}nid}}{L_{iso\text{-}id}} = \frac{L_{iso\text{-}nid}/L_{feed}}{L_{iso\text{-}id}/L_{feed}} = \frac{L_{f,max}}{L_{f,max,id}} \tag{37}$$

**Table 4.** Parameters for design and rate model simulations **System and operating parameters**

| $L_c$ (cm) | ID (cm) | $R_p$ (μm) | DV (mL) | $\varepsilon_b$ | $\varepsilon_p$ | $q_{max}$ (meq./mL BV) | | $C_{f,i}$ (N) |
|---|---|---|---|---|---|---|---|---|
| **83** | 1.16 | 56 | 7.6 | 0.35 | 0.34 | 1.45 | | 0.18 |
| | | | **Design 1** | **Design 2 A/2B** | | **Design 3** | **Design 4** | |
| **Feed volume (mL)** | | | 115 | 115 | | 102 | 66 | |
| **$u_0$ (cm/min)** | | | 1.7 | 8.7 | | 10.6 | 10.5 | |
| | | | **Design 1** | **Design 2 A/2B** | | **Design 3** | **Design 4** | |
| | | | Case A (A1/A2/A3/A4) | | | Case B (B1/B2/B3) | Case C (C1/C2/C3) | |
| **Feed volume (mL)** | | | 115/115/125/165 | | | 97/104/107 | 112/71/71 | |
| **$u_0$ (cm/min)** | | | 2.7/1.5/1.9/2.2 | | | 8.3/9.8/9.2 | 30.4/11.9/12.5 | |

**Isotherm parameters (Constant separation factor isotherm)**

| Component | Cu (ref) | | Sm | Nd | Pr | EDTA-Na |
|---|---|---|---|---|---|---|
| $\alpha_{i,refe}$ | 1 | | 5 | 16 | 28.8 | 144 |

**Mass transfer parameters**

| Component | Brownian diffusivity, $D_b$ (cm²/min) | Pore diffusivity, $D_p$ (cm²/min) | Axial dispersion coefficient, $E_b$ (cm²/min) | Film mass transfer coefficient, $k_f$ (cm/min) |
|---|---|---|---|---|
| **All species** | $4 \times 10^{-4}$ | $9 \times 10^{-5}$ | Chung and Wen (1968) | Wilson and Geankoplis (1966) |

**Numerical parameters (unit: N)**

| Axial element | Step size ($L/u_0$) | Collocation points Axial | Particle | Tolerance Absolute | Relative |
|---|---|---|---|---|---|
| **100 250 (Table** | **4)** | 0.01 | 4 | 2 | $1 \times 10^{-4}$ | $1 \times 10^{-4}$ |

The $\phi_{min}$ curve shown in Fig. 18a has been correlated as a function of $L_f k_f^*$ and the minimum $\alpha^e$ among all the selectivity pairs for a binary system (Choi, et al., **2018**).

$$\phi_{min} = 1.745 e^{-0.04737X} + 0.6503, \; for\ X < 34 \tag{38a}$$

$$\phi_{min} = 1, \; for \; X \geq 34 \qquad (38b)$$

Where

$$X = L_f k_f^* \left( \frac{\alpha^e - 1}{\alpha^e + 1} \right) \qquad (38c)$$

In this study, we verified that Eq. (38a-38c) is applicable for ternary systems if the lowest effective sorbent selectivity between the target components and their adjacent components is used in this equation.

**Derivation of the yield equation for a given component in a ternary non-ideal system**

While the general map can determine if a separation train has reached a constant-pattern state, it cannot determine the yield of the separation. Therefore, an expression for the yield is needed for the design of effective LAD systems. The yield for component $i$ is defined as the ratio of the amount of product i collected in the effluent and the total amount of component $i$ in the feed as illustrated in Fig. 19. This can be expressed mathematically as:

$$Y_i = \frac{C_d V_x}{C_{f,i} V_f} \qquad (39)$$

where $C_d$ is the ligand concentration and $V_x$ is the elution volume of a product which can be expressed as:

$$V_x = V_i - \frac{1}{2} \left( t_{MTZ,1} + t_{MTZ,2} \right) \varepsilon_b u_0 A_c \qquad (40)$$

where $A_c$ is the cross-sectional area and $V_i$ is the volume of solution eluted between the adsorption wave center and desorption wave center. For an ideal system (without any wave spreading), then this elution volume would contain all the loaded component in the feed.

If Eq. (31b), which is the effluent time corresponding to the mass transfer zone length, and Eq. (40) are substituted into Eq. (39), the yield is derived in terms of dimensionless groups (Eq. (41a)). To further simplify this expression, the effective sorbent selectivity and mole fraction in the feed (xi) were combined into a selectivity weighted composition factor ($\gamma$) in Eq. (41b), which can be rearranged to express a function $f(Y_i, \beta)$ in Eq. (41c).

$$Y_i = 1 - \frac{\beta}{2 x_i L_f k_f^*} \left( \frac{\alpha_{i-1,i}^e + 1}{\alpha_{i-1,i}^e - 1} + \frac{\alpha_{i,i+1}^e + 1}{\alpha_{i,i+1}^e - 1} \right) \qquad (41a)$$

$$Y_i = 1 - \frac{\beta}{2 \gamma_i L_f k_f^*} \qquad (41b)$$

$$f(Y_i, \beta) = (1 - Y_i) 2 \gamma_i L_f k_f^* - \beta = 0 \qquad (41c)$$

$$L_f k_f^* = \frac{\beta}{(1 - Y_i) 2 \gamma} \qquad (41d)$$

$$\gamma_i = x_i \left( \frac{\alpha_{i-1,i}^e + 1}{\alpha_{i-1,i}^e - 1} + \frac{\alpha_{i,i+1}^e + 1}{\alpha_{i,i+1}^e - 1} \right)^{-1} \qquad (41e)$$

wherein $L_f$ is the loading fraction, or the total amount loaded divided by the total column capacity. This equation allows for the design to achieve a target yield for the component of interest. If the yields of more than one component are of interest, then the yield equation for the component with the lowest $\gamma$ should be used in the design for finding the maximum loading volume and mobile phase velocity for the given column length. If the yield for the component with the lowest $\gamma$ is achieved, all the other components will have a higher yield. Thus, the component with the lowest $\gamma$ value is defined as the controlling component. This strategy ensures that all components of interest meet the target minimum yield requirement.

When the function in Eq. (41b) is plotted as a 3-D surface for the middle component in a ternary mixture ($\theta$ = 0.05), the result is shown in Fig. 20. As evidence by the figure, the selectivity weighted composition factor $\gamma$ plays an important role in the operating conditions (loading fraction $L_f$ and dimensionless overall mass transfer coefficient $k_f^*$ ) required to reach a target yield. For a fixed $\gamma$, a larger value of $L_f k_f^*$ is needed to achieve a higher yield. As $\gamma$ increases, the same value of $L_f k_f^*$ can be used to achieve a higher yield. It is also evident from Eq. (41b) that as $\gamma$ increases, lower values of $L_f k_f^*$ can be used to achieve the same yield. This means that higher flowrates can be used, and higher productivities can be achieved.

**Constant-Pattern Design Method**

An overview of the design method is given in Fig. 21. Given a minimum target yield of a key component, a breakthrough cut value ($\theta$), feed composition, selectivities, intraparticle diffusivities, particle size, and void fractions, a value of $\gamma_i$ can be calculated from Eq. (41e) for all components. If there are multiple products of interest, this process is done for the component with the lowest $\gamma$ to give the most conservative design. The most conservative design should achieve or exceed the target minimum yield for all components. Next, based on the controlling component, which has the smallest $\gamma$, a value of $L_f k_f^*$ can be calculated from the yield equation (Eq. (41d)). Since the lowest $\alpha^e$ between target components and adjacent components determines the constant-pattern state, the lowest $\alpha^e$ and a $L_f k_f^*$ value can be applied in Eq. (38) to solve for the $\phi_{min}$ value for a non-ideal system. Then wave interference theory can be used to calculate the minimum column length to achieve the constant-pattern state for the corresponding ideal system, $L_{iso-id}$, Eq. (27a) and $L_{f,max,id}$, Eq. (27b). Once $\phi_{min}$ is calculated from the general map, then the maximum loading fraction for a non-ideal system ($L_{f,max}$) can be calculated from $\phi_{min}$ and $L_{f,max,id}$ in Eq. (37). One can then solve for $k_f^*$ from $L_{f,max}$ using Eq. (41d).

To optimize the operating conditions in the algorithm, a wide range of column lengths and their corresponding linear velocities were calculated based on the obtained $k_f^*$ using Eqs. (33-35). The operating velocity can be found from Eq. (34a) or (34b) if film resistance is negligible. The resulting operating velocity gives the target yield of the component of interest. The calculation loop continues until the pressure drop of each condition is limited by the maximum pressure drop limit (Eq. (49)). Next, one can choose optimal conditions for the maximum productivity, which has maximum column length and corresponding $u_0$, or find operating conditions for a specific column length. The loading amount used in the design is calculated based on $L_{f,max}$ and the adjusted column capacity, which considers ligand efficiency (Choi, et al., **2018**). The maximum ligand concentration for the band width limit is calculated based on the loading amount and given conditions.

**2.4.1 Productivity in LAD**

Productivity is an important design variable that can determine the size and number of columns required for a separation. Productivity is defined in this study as the amount of product produced per column volume per unit time.

$$P_{R,i} = \frac{C_{f,i} V_f Y_i}{V_C t_{cycle}} \tag{42}$$

wherein $t_{cycle}$ is the total cycle time. Because the elution time ($t_{elute}$) is much longer than the time required for loading and regeneration, the cycle time can be approximated as the elution time.

$$t_{cycle} \approx t_{elute} \tag{43}$$

wherein

$$t_{elute} = \frac{L_c(1+K_d)}{u_0} \approx \frac{L_c K_d}{u_0} \tag{44}$$

If Eq. (41), Eq. (44), and the expressions for the feed volume and column volume are substituted into Eq. (42), the resulting productivity equation is as follows:

$$P_{R,i} \approx \frac{\varepsilon_b x_i C_d u_0 L_f}{L_c}\left(1 - \frac{\beta}{2\gamma_i L_f k_f^*}\right) \tag{45}$$

### 2.4.2 Assumptions and limits for the Design Method

While Eq. (45) would suggest that raising the ligand concentration will increase the productivity without decreasing yield, there are some physical limitations to the ligand concentration that can be used. One important limit is the solubility limit of the ligand in solution. If the concentration is too close to the solubility limit, then clogging of pipes or in the column can stop flow or cause high pressures.

Another concentration limit is based on the length of the mass transfer zone. The assumption made in this analysis is that the components will form bands with flat tops. If the concentration of the ligand is sufficiently high, the elution band becomes too narrow to maintain a flat top in the presence of mass transfer spreading, then the analysis is no longer valid. Formally this maximum ligand concentration can be found using mass balance and the mass transfer zone length as follows. The input of component "j" into the column is equal to the volume of the column occupied by component "j" in an ideal system:

$$C_{f,j}V_f = L_j A_c q_{max} + \varepsilon_t C_d A_c L_j \qquad (j = 1,2,3) \tag{46}$$

Eq. (46) means that:

$$L_j = \frac{C_{f,j}V_f}{A_c(q_{max}+\varepsilon_t C_d)} \qquad (j = 1,2,3) \tag{47}$$

where $L_j$ is the length of the component "j" band in an ideal system, $\varepsilon_t$ is the total porosity. If this length is shorter than one half of the sum of the two mass transfer zone lengths, then the assumed shape of the bands is not valid, and the design will be inaccurate. This condition should be checked for all components of interest.

$$L_j = \frac{C_{f,j}V_f}{A_c(q_{max}+\varepsilon_t C_d)} \geq \frac{1}{2}\left(L_{MTZ,ij} + L_{MTZ,jk}\right) \qquad (j = 1,2,3) \tag{48}$$

When $q_{max}$ is large compared to $\varepsilon_t C_d$, the ligand concentration limit calculated by Eq. (48) is much higher than the solubility limit. Therefore, the ligand concentration is limited by solubility rather than band width.

The pressure limit is another limiting factor in this design method. For Reynold's numbers less than 1, the simplified Ergun equation gives the pressure drop,

$$\Delta P = L_c\left[150\frac{P^2\mu u_0}{4R_p^2}\right] \tag{49}$$

where P is the phase ratio, $P=(1 - \varepsilon_b)/\varepsilon_b$. In the design, the pressure limit is checked. For a specified maximum pressure drop ($\Delta P_{max}$) the maximum column length ($L_{c,max}$) for a given particle radius and velocity can be calculated (S. Ergun, J. Chem. Eng. Prog. 1952, 48, 89-94).

$$L_{c,max} = \frac{\Delta P_{max} R_p^2}{37.5 P^2 \mu u_0} \qquad\qquad (50)$$

### 2.4.3 Effects of breakthrough cut and yield on the minimum column length $\phi_{min}$ and productivity

The selected cut ($\theta$) can affect both the designed loading fraction and the operating velocity for a given system. Additionally, using lower $\theta$ values will increase the purity of the products in a LAD system, as expected from Fig. 17, but result in a larger value of $\beta$ (= $ln\left|\frac{1-\theta}{\theta}\right|$ ). It is clear from Eq. (45) that lower $\theta$ values (or higher $\beta$) will give a smaller productivity, indicating a trade-off between product purity and productivity.

Fig. 18a shows that when the x-axis value is 34 or greater, $\phi_{min}$ =1, or the loading fraction is the same as that of an ideal system, $L_{f, max}=L_{f,max,id.}$. For a fixed yield, Eq. (41d) indicates the value of $k_f^*$ is proportional to the value of $\beta$, meaning that larger $\beta$ values require larger $k_f^*$ values to achieve the same yield. Larger $k_f^*$ values correspond to longer columns, slower flowrates, thus lower productivities. This means that if yield is fixed, there is a tradeoff between product purity and productivity in the region where $\phi_{min}$ =1.

In the design method, the yield and the cut are fixed. The function f (Yi, $\beta$) in Eq. (41c) plotted versus $L_f k_f^*$ is a straight line. An example is shown in Fig. 18b. The $L_f k_f^*$ value that satisfies Eq. (41c) for a specified yield and $\beta$ is the intercept of this straight line on the x-axis. The absolute value of the intercept of this straight line on the y-axis is the $\beta$ specified in the design. The slope of the straight line is proportional to (1-$Y_i$) and $\gamma$. As the specified yield increases or $\gamma$ decreases, the slope decreases, and the $L_f k_f^*$ value increases. As the cut decreases, the $\beta$ value increases, and the straight line shifts downward, resulting in a larger $L_f k_f^*$ required in the design. Fig. 18b shows qualitatively how the key dimensionless groups affect the key design variables.

3.1. Materials and Methods

Neodymium(III) nitrate hexahydrate (Nd(NO$_3$)$_3$·6H$_2$O), samarium(III) nitrate hexahydrate (Sm(NO$_3$)$_3$·6H$_2$O), praseodymium(III) nitrate hexahydrate (Pr(NO$_3$)$_3$· 6H$_2$O), copper sulfate pentahydrate (CuSO$_4$·5H$_2$O), and ethylenedi-aminetetraacetic acid (EDTA) were purchased from Sigma-Aldrich. Hydrochloric acid (HCl, 36.5%~38%) and sodium hydroxide pellets (NaOH) were purchased from Mallinckrodt Baker. Distilled Deionized Water (DDW) was obtained from a Millipore filter system. The strong cation exchange resin, AG-MP50 resin (100-200 mesh), was purchased from Bio-Rad. Millipore glass chromatography columns (1.16 cm *ID* × 50 cm $L_C$) were purchased from VWR international. Chromatography experiments were performed using a ÄKTA explorer 100 (GE Healthcare). A diode array detector (Agilent 1260 infinity II) was attached to the column outlet to monitor the effluent absorbance at multiple wavelengths. The absorbance at 700 nm, 575 nm, 404 nm, and 444 nm were used to monitor the concentrations of Cu, Nd, Sm, and Pr, respectively in the effluent.

### 3.2. Separation of REEs using ligand-assisted displacement chromatography

Before packing, the resin was soaked in DDW and sonicated for an hour to remove air bubbles and impurities in the particle pore phase. The impurities and fines were removed by flushing with water several times. The resin was then packed in a column for pretreatment. The resin was washed by passing through 5 column volumes of 1 M NaOH, flushing with DDW, and then passing through 5 column volumes of 1 M HCl. The column was then unpacked, and the pretreated resin was removed from the column. The resin was mixed with water to form 50-60 % (v/v) slurry. Millipore columns were packed with the pretreated resin slurry using a slurry packing method, which was used in a previous study [33]. The details of the procedure and an example of the column characterization method can be found in the Supplemental Information Section S2. The packed column sizes were 1.16 cm *(ID)* × 39 cm ($L_c$), and 1.16 cm *(ID)* × 44 cm ($L_c$), respectively. The column void fractions were then characterized by pulse tests. Prior to REEs separation, the columns were pre-equilibrated with Cu$^{2+}$ by loading 0.1 M CuSO$_4$ solution (5 mL/min) until the Cu breakthrough curve appeared. Excessive copper ions in the mobile phase were removed by flushing the columns with DDW until the conductivity of effluent dropped to below 0.005 mS/cm.

To validate the design method, three experiments targeting different yields (70%, 80%, 95%) for the middle component (Nd) were carried out. The feed for the ligand-assisted displacement chromatography experiments were a synthetic mixture of $Pr^{3+}$, $Nd^{3+}$, and $Sm^{3+}$ (0.06 M each). The loading volume and linear interstitial velocity for design 95%, 80%, and 70% were 115 mL and 1.7 cm/min, 115 mL and 8.7 cm/min, and 102 mL and 10.6 cm/min, respectively. The ligand solution (EDTA-Na) was prepared by dissolving a stoichiometric amount of EDTA in DDW, titrating using sodium hydroxide solution to pH 8.4 and diluting to a final concentration of 0.03 M.

To investigate the effects of ligand concentration on the yield and productivity, another LAD experiment targeting 80% yield for the middle component (Nd) was carried out using the same conditions except the ligand concentration was raised to 0.06 M. To investigate the effects of feed composition on the yield and productivity, a 66 mL of feed mixture with concentrations of 0.0467 M $Sm^{3+}$, 0.1267 M $Nd^{3+}$, and 0.06 M $Pr^{3+}$ was loaded on the column. Then, REEs were eluted out by loading 0.03 M EDTA-Na (pH 8.4) with interstitial velocity 10.5 cm/min.

After all the REEs eluted out of the column in each LAD experiment, the column was saturated with $Na^+$. To regenerate the column, it was washed with DDW first to remove all the ligand solution in the mobile phase and then it was pre-equilibrated with a $Cu^{2+}$ solution.

## RESULTS AND DISCUSSION

The following sections discuss the erification of the design method with experiments for both equimolar and non-equimolar cases; the maximum pressure drop, and the band width limit; the effects of the effective sorbent selectivity on the productivity for the target yield; and the effects of the feed composition on the purity, yield, and productivity.

### 4.1 Experimental verification of the design method

### 4.1.1 Separation of equimolar mixtures with target yields for all three components

The constant-pattern design method was verified for the separation of three equimolar REEs with three experiments. A summary of the design procedure utilized is shown in Fig. 21 for specific column length of 83 cm. The film resistance was assumed to be negligible (Eq. (34b)). The method was tested by targeting minimum yields of 70%, 80%, and 95% for all three components in an equimolar mixture of Sm, Nd, and Pr. The minimum purity requirement was 99%. To achieve the purity requirements, a $\theta$ value of 0.05 was tested. Under the experimental conditions in this investigation, a $\theta$ value of 0.05 was sufficient to achieve purities >99%. In the equimolar case, Nd was the element with the lowest value of $\gamma$ (Table 5). For this reason, Nd was the controlling component for the design method. The yield equation for Nd was used in the design to solve for the linear velocity. The lowest overall selectivity pair in this separation was between Nd and Pr ($\alpha^e_{min} = 1.8$). The effective sorbent selectivity for the pair of Nd and Pr was used to calculate $\phi_{min}$ using the general map because it gave the most conservative estimate. The calculated values of $L_f k^*_f$ for each design case were marked in Fig. 20 as well as on the general map in Fig. 18a. The parameters used for the design and simulations are listed in Table 4. The selectivities and diffusivities for each component were verified in the previous study (Choi, et al., **2018**).

A summary of the experimental yield, purity, and productivity for the three runs is shown in Table 5 and the resulting chromatograms are shown in Figs. 22a-c. All the designed separations reached a constant-pattern state. The purity of all three components was higher than 99% when the breakthrough cut is 0.05 in all the designs. In all cases, the experimental yields of the controlling component, Nd, were achieved within experimental error (2%), demonstrating the effectiveness of the design method. Because Nd had the lowest $\gamma$, all other components had even higher yields than the target yields. By selecting the operating conditions based on the controlling component, which has the lowest $\gamma$, the yields of all other components are ensured.

**Table 5**. Yield, purity, and productivity obtained from experimental results. Designs 1-3 are based on the minimum target yields for recovering all components, while design 4 is for the recovery of only the major component, Nd, with a minimum target yield. The designs did not consider film resistance and were based on 0.8 minimum target yield. The unit of productivity ($P_R$) is kilogram per bed volume ($m^3$) per day.

| Design | Lf | kf* | $\gamma$Sm $\gamma$sm | $\gamma$Nd | $\gamma$Pr | Sm | | | Nd | | | Pr | | | Total $P_R$ |
|---|---|---|---|---|---|---|---|---|---|---|---|---|---|---|---|
| | | | | | | Yield (%) | Purity (%) | $P_R$ | Yield (%) | Purity (%) | $P_R$ | Yield (%) | Purity (%) | $P_R$ | |
| 1 | 0.49 | 975.1 | 0.097 | 0.061 | 0.066 | 97 | 99.9 | 2.8 | 95 | 99.9 | 2.8 | 95 | 99.9 | 2.8 | 8.4 |
| 2A | 0.49 | 243.8 | 0.097 | 0.061 | 0.066 | 90 | 99.1 | 15.2 | 82 | 99.7 | 14.1 | 84 | 99.9 | 15 | 44.3 |
| 3 | 0.43 | 202.4 | 0.097 | 0.061 | 0.066 | 81 | 99.7 | 20.4 | 70 | 99.3 | 16.8 | 76 | 99.4 | 18 | 55.2 |
| 2B | 0.49 | 243.8 | 0.097 | 0.061 | 0.066 | 86 | 99.8 | 31.9 | 80 | 99.4 | 28.3 | 86 | 99.7 | 29.8 | 90 |
| 4 | 0.36 | 203.7 | 0.159 | 0.100 | 0.109 | 63 | 99.5 | 8.3 | 80 | 99.6 | 27.5 | 67 | 99 | 10.6 | 46.4 |

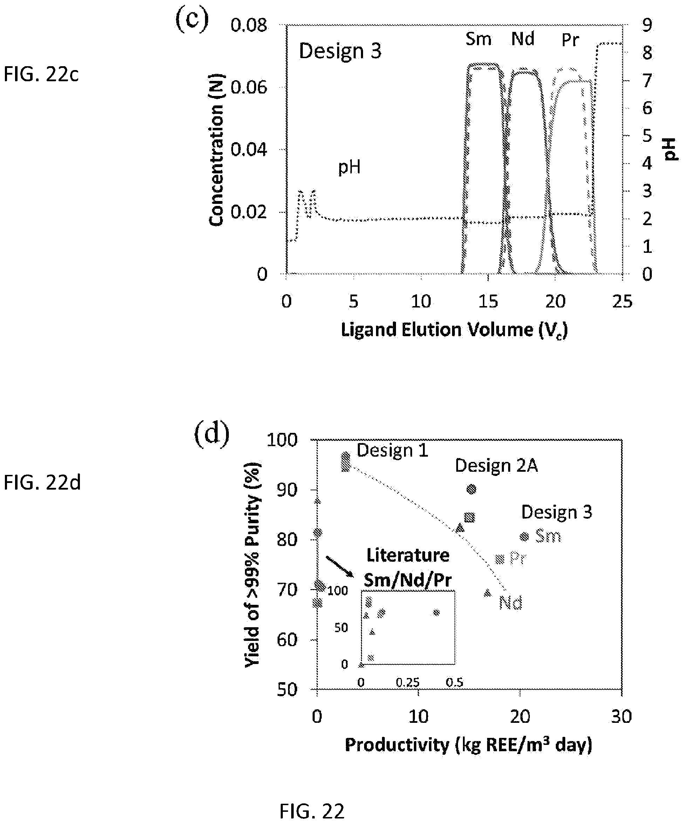

In Fig. 22d, the yields and productivities of Sm, Nd, and Pr from the experimental results were compared with the yield-productivity curve of Nd calculated from the design method. Since the yields of Sm and Pr were higher than that of Nd in the same train, the productivities of Sm and Pr were higher than that of Nd in each case. The yields and productivities of Nd from the experimental results were close to the yield-productivity curve (dotted line in Fig. 22d). Both experimental results and the theoretical curve show a trade-off between yield and productivity.

The reason for the trade-off relationship is that increasing the minimum target yield requires a reduction in the mass transfer zone lengths. The mass transfer zone length in Fig. 22a is smaller than those in Fig. 9b and 9c. The required value of $k_f^*$ for Fig. 22a is larger than those for Fig. 22b and 22c (Table 5). Increasing $k_f^*$ reduces the flow rate, which results in a lower productivity of all component.

The productivity results based on the constant-pattern design method were compared with those in the literature in Fig. 22d. For the similar purity and yields of Sm, Nd, and Pr, the experimental productivities based on the constant-pattern design method are two orders of magnitude higher than those in the literature (F.H. Spedding, et al., J. Am. Chem. Soc. 1950, 72, 2354-2361).

### 4.1.2. Effects of effective ligand concentration on the yield and productivity

According to Eq. (41), the operating conditions required to achieve a target yield are independent of the ligand concentration unless the solubility limit or band width limit is reached. Therefore, higher ligand concentrations can be used without penalty to the yield of a system. To verify that the yield is independent of the ligand concentration, an additional experiment with a minimum target yield 80% for >99% product purity was tested. Operating conditions were the same as those used for Design 2A (Fig. 22b), with the exception that the ligand concentration was doubled. The resulting chromatogram is shown in Fig. 23a and a summary of the results can be found in Table 5. The chromatogram showed that the system reached a constant-pattern state with doubled band concentrations compared to Fig. 22b. The minimum target yield for the controlling component, Nd, was reached within 1% and the yields of the other two components exceeded 80%. Additionally, the purity of all components was >99% in Fig. 23a.

The productivity of Nd was nearly doubled as a result of the reduced elution time, as predicted in the yield-productivity curve in Fig. 23b. Both the theory and the experimental data suggest that using a higher ligand concentration results in more concentrated products and increases productivities without a penalty to yield. However, for designing a separation process, one should consider the ligand solubility limit and the maximum ligand concentration that can result in flat-top bands, Eq. (48), in the constant-pattern state, which is discussed in the following section.

The total productivity of Nd, Sm, and Pr for the same purity and similar yields was 839 times higher than those in the literature. This large improvement in productivity is a result of the cumulative effects of the following design differences: (1) a more efficient ligand EDTA and a higher ligand concentration resulted in 6 times higher productivity, (2) about 5 times smaller sorbent particle size resulted in about 25 times higher productivity, (3) about 13 % higher loading fraction, and (4) about 5 times higher linear velocity results in 5 times higher productivity. Such large improvement in productivity is unlikely using a trial and error approach in selecting the key design parameters. Each experimental trial may take days or weeks. This example explains clearly why the design method is essential for designing efficient processes for large scale production. The 839 times increase in sorbent productivity indicates that the column volume can be 839 times smaller, resulting in significant reduction in footprint, capital expenditure, chemical costs, and solvent costs.

The productivity of liquid-liquid extraction was estimated to be about 3 kg REE/$m^3$/day (J. Zhang, et al., Separation hydrometallurgy of rare earth elements, Springer, 2016). The productivity in our LAD (90 kg REEs/$m^3$/day) is 30 times higher, and the amount of ligand in LAD was 25 times lower than that was used in liquid-liquid extraction. Most of the ligand (EDTA) and water can be recycled in our processes. Hundreds to thousands of mixer-settler units can be replaced by a few chromatography columns, resulting in an order of magnitude smaller footprint, capital cost, and chemical costs.

### 4.1.3 Design to recover for a single component

One special case of ternary separation is the separation of one component from two impurities. To demonstrate the viability of the design method in this scenario, a different feed composition of Sm, Nd, and Pr, similar to one mineral source of REEs (1:2.7:1.3), was tested in Design 4 with the same target yield and purity of Nd as Design 2A case (J.C. Hower, et al., Coal Combust. Gasif. Prod. 2013, 5, 39-47). With this new composition, Nd had the highest value of $\gamma$, however the goal in this scenario was to separate Nd from the other two components, thus it was treated as the target component. The resulting chromatogram is shown in Fig. 24a.

To maintain the same target yield of Nd, for a larger value of $x_i$ compared to the equimolar case (Design 2A), lower values of $L_f$ and $k_f^*$ were required. Thus, a higher flowrate was used than that in the equimolar case, resulting in a higher productivity of Nd (Fig. 24b). However, the minor components, Sm and Pr, had lower yield and productivity than those of Nd (Table 5, Design 4). Therefore, a single component can be targeted with the design method to successfully reach a target yield, at the expense of the recovery of the other components. They are either collected as waste or must be sent to a secondary separation process.

**4.2. Effects of pressure drop limit and band concentration limit on the productivity for the target yield**

Although the design method is scalable using dimensionless groups, for a minimum target yield and purity requirement, using a long column and a high ligand concentration can increase productivity. Fig. 25a is based on Design 2A and Fig. 25b is based on Design 4, where the productivity of Nd for a given yield (80%) is plotted as a function of column length and effective ligand concentration according to Eq. (45).

As illustrated in Fig. 24 the productivity curves rapidly increase with increasing column length, but then level off eventually. Since the value of $k_f^*$ is a constant for a fixed target yield and purity, using a longer column allows a higher flowrate to keep the same $k_f^*$ value. According to Eq. (35a), the $Pe_b$ term is independent of the linear velocity so that the linear velocity will be raised at a slightly higher rate than the column length to maintain the same $k_f^*$. Since productivity is affected by column length and linear velocity as seen in Eq. (45), the productivity for the given yield increases slightly as the column length increases. Eventually the column length and velocity increase to the point of the maximum allowable pressure. The maximum productivity is achieved at the maximum column length (Eq. (50)) when the pressure drop limit is reached.

As shown in Fig. 25, the productivity for the target yield and purity is proportional to the effective ligand concentration if the shapes of constant-pattern isotachic bands are maintained according to Eq. (48). Depending on the feed composition, it is possible to reach the solubility limits of a system before the band width limit is reached. It is recommended that the highest possible ligand concentration should be used, as there is no penalty to yield for high ligand concentrations as long as the assumptions are met.

**4.3. Effects of the lowest effective sorbent selectivity on the productivity for the target yield**

For Design 2A, if $x_i$, $\alpha_{i,j}^e$, $Y_i$, $\beta$ are fixed, the values of $L_f$, $k_f^*$ and $\phi_{min}$ are affected by the lowest effective sorbent selectivity. Thus, the lowest $\alpha^e$ pair determines the operating conditions to reach constant-pattern and limits the productivity for the given yield and purity. Figs. 26a-26b show the effects of the lowest $\alpha^e$ on $L_f$, $k_f^*$, and the productivity for a minimum target yield of 80% if the lowest $\alpha^e$ is varied from 1.3 to 2.8. When the lowest $\alpha^e$ increases, the feed is more easily separated so that the maximum loading fraction increases. For a given yield and purity, the value of $L_f k_f^*$ decreases as the lowest $\alpha^e$ increases. Because the loading fraction increases when the value of the lowest $\alpha^e$ increases, the value of $k_f^*$ decreases as a result (Fig. 26a). Thus, when the lowest $\alpha^e$ increases, the productivity for the target yield is increased by reducing $k_f^*$ and increasing $L_f$ as illustrated in Fig. 26b.

**4.4. Effects of feed composition on the yield and productivity**

While the separation of equimolar mixtures was useful for the development and verification of the design method, many natural mixtures of REEs have varied compositions that include both major and minor components. In the previous section, a range of $\gamma$ (0.061-0.159) were studied. In this section, a wider range of $\gamma$ and $k_f^*$ values were studied. The effects of the feed mixture composition were investigated in three cases using rate model simulations. Studies on low selectivity or small $\gamma$ cases showed that film resistances in the high $k_f^*$ region (e.g. Case A) are no longer negligible. For this reason, the design method including film resistances (Eq. (34a)) was used in the case studies in this section.

In all cases, the total feed concentration was 0.5 N.

In Case A, all three components of a mixture were targeted as desired products. In Case B, only the two major components of a ternary mixture are targeted as products and the minor impurity is collected as waste. In Case C, a single major component is purified from two minor components. A summary of the results of the case study can be found in Table 6.

In Case A, mixtures with ratios of Sm:Nd:Pr of 1:5:5, 5:1:5, 5:5:1, and 10:1:1 were separated. The minimum target yield for this case study was 80%, and the rest of the simulation parameters can be found in Table 4. Because the effects of composition are considered in the $\gamma$ term in the design method, the design algorithm can be used with no modifications for the separation of both equimolar and non-equimolar mixtures. The low values of $\gamma$ caused by the minor components in the mixtures lead to large values of $k_f^*$. As shown in Table 4, all target yields were achieved or exceeded in Case A, demonstrating that the design method is effective regardless of the composition of the feed mixture. The total productivity correlates well with a higher value of the controlling $\gamma$ value because the most difficult separation determines the velocity and loading fraction.

In Case A, the controlling $\gamma$ for each case was always a minor component of the mixture because of its small mole fraction (Eq. (41e)). If the minor component is not desired as a product, the minor component can be ignored in the design. By ignoring the smallest $\gamma$, the corresponding value of $L_f k_f^*$ is decreased. The lower values of $k_f^*$ correspond with higher productivities. In other words, by sacrificing the minor component, the overall productivity of the system is increased significantly. This is demonstrated in Case B. In Case B, mixtures of Sm, Nd, and Pr with composition ratios of 1:5:5, 5:1:5, and 5:5:1, respectively, were separated while ignoring the minor component. The minimum target yields were reached and exceeded by the design method for the two components of interest. The total productivities in Case B were more than double the total productivity in the Case A with the same composition. This confirms that the productivity is limited by the component with the smallest $\gamma$.

Another alternative case is the separation of a single major component from two impurities. In this case, the controlling $\gamma$ and the minimum $\alpha^e$ correspond to the only target component. This case is demonstrated in Case C in Table 6. The minimum target yield is reached only for the target component. The other components are collected as a waste. By sacrificing the minor components, the total productivity of the system is increased in a similarly as in Case B. Both Case A4 and Case C1 show the separation of a feed mixture with a composition of Sm, Nd, and Pr of 10:1:1. The total productivity is much higher in Case C1 where only Sm is targeted. This suggests that there is a significant productivity sacrifice to separate minor components with very small $\gamma$ values.

**Table 6**. Yield, purity, and productivity of each component obtained from rate model simulations for different feed composition cases. The parameters used for the design and simulations were listed in Table 2. Total feed concentration in all cases was 0.5 N. Dead volume in all cases was 2% of column volume. The unit of productivity ($P_R$) is kilogram per bed volume ($m^3$) per day.

| Composition Sm:Nd:Pr | Target Yield (%) | Controlling Component | Controlling $\gamma$ | $L_f$ | kf* | Sm Yield (%) | Sm Purity (%) | $P_R$ | Nd Yield (%) | Nd Purity (%) | $P_R$ | Pr Yield (%) | Pr Purity (%) | $P_R$ | Total $P_R$ |
|---|---|---|---|---|---|---|---|---|---|---|---|---|---|---|---|
| **Case A. Target All 3 Components with Minimum Target Yield 0.8** | | | | | | | | | | | | | | | |
| **A1 (1:5:5)** | 80 | Sm | 0.027 | 0.45 | 613 | 80 | 99.6 | 1.6 | 94 | 99.9 | 9.8 | 95 | 99.9 | 9.1 | **20.5** |
| **A2 (5:1:5)** | 80 | Nd | 0.017 | 0.45 | 973 | 97 | 99.96 | 7.0 | 81 | 99.5 | 1.2 | 98 | 99.9 | 6.7 | **14.9** |
| **A3 (5:5:1)** | 80 | Pr | 0.018 | 0.49 | 821 | 96 | 99.98 | 7.2 | 96 | 99.9 | 7.4 | 85 | 99.6 | 1.2 | **15.8** |
| **A4 (10:1:1)** | 80 | Nd | 0.015 | 0.65 | 730 | 99 | 99.98 | 21.0 | 81 | 99.6 | 1.8 | 85 | 99.7 | 1.7 | **24.5** |
| **Case B. Target 2 of 3 Components with Minimum Target Yield 0.8** | | | | | | | | | | | | | | | |
| **B1 (1:5:5)** | 80 | Nd | 0.084 | 0.38 | 230 | - | - | - | 81 | 99.6 | 26.9 | 82 | 99.6 | 25.0 | **51.9** |
| **B2 (5:1:5)** | 80 | Pr | 0.091 | 0.41 | 198 | 88 | 99.8 | 29.2 | - | - | - | 81 | 99.6 | 25.4 | **54.6** |
| **B3 (5:5:1)** | 80 | Nd | 0.084 | 0.42 | 210 | 88 | 99.8 | 28.0 | 81 | 99.6 | 26.3 | - | - | - | **54.3** |
| **Case C. Target Only 1 Major Component with Minimum Target Yield 0.8** | | | | | | | | | | | | | | | |
| **C1 (10:1:1)** | 80 | Sm | 0.24 | 0.44 | 68 | 81 | 99.6 | 161.0 | - | - | - | - | - | - | **161.0** |
| **C2 (1:10:1)** | 80 | Nd | 0.15 | 0.29 | 166 | - | - | - | 81 | 99.6 | 43.4 | - | - | - | **43.4** |
| **C3 (1:1:10)** | 80 | Pr | 0.17 | 0.28 | 158 | - | - | - | - | - | - | 81 | 99.6 | 40.9 | **40.9** |

To conclude, a design method of general applicability was developed for an efficient separation process. This method is particularly useful in the isolation and purification of rare earth elements (REE) using a ligand-assisted displacement (LAD) chromatographic separation process. While it works for the separation of a mixture of any multivalence cations using a LAD, this method may find applications in the separation of any multicomponent mixtures using either a displacement chromatography or a LAD. Using the concept of the constant pattern mass transfer zone, the design method disclosed herein is to find the minimum required dimensionless groups using a general map to develop a constant pattern isotachic train in a LAD. From dimensionless groups, the column length, linear velocity, the maximum ligand concentration, feed loading volume or inner diameter may be obtained for the specific target yields without appealing to the method of trial and error. The developed method may also be applied develop a continuous process. The multi-zone LAD process is useful to improve the yield and productivity for high purity REE, especially, when the REE concentrations are orders of magnitude different in the feed.

In other words, there are two key elements in the design method. First, we developed a general correlation to enable one to design a displacement system to reach the constant-pattern state for systems with significant mass transfer effects (or non-ideal systems). Two key dimensionless groups were first developed by strategic combinations of the various parameters to reduce the multidimensional design space into two dimensions. Systematic rate model simulations were used to find the transition points from non-constant-pattern states to the constant-pattern states. The transition points were connected to form a curve, which divided the multi-dimensional design parameter space into two regions: the constant pattern region and the transient region. This curve was represented using a simple exponential correlation, which can be used to find the minimum column length to reach the constant pattern state for a given feed mixture and operating conditions (loading fraction and linear velocity). Operating in the constant pattern state using the minimum column length can maximize sorbent productivity and the yield of high purity product.

The second key element of the design method is a yield equation. To ensure specific product purity and yield can be achieved in a separation process, an equation for the yield of the target component was derived as a function of the key dimensionless groups controlling the constant pattern mass transfer zone length. One can achieve the desired yields and the constant pattern state by solving the minimum column length and the linear velocity from the yield equation and the general correlation. A selectivity weighted composition factor was developed to allow the design method to specify a minimum target yield for one or multiple components. The design method was verified using simulations and experiments for different target yields, ligand concentrations, and feed compositions. The targeted yields were achieved or exceeded in all cases tested. The minimum column length required to achieve a constant pattern-state and the productivity of LAD are limited by the lowest selectivity or by a minority component with a low concentration in the feed, even when it does not have the lowest selectivity. Sacrificing the yields of minor components can increase the total productivity significantly. The productivities achieved using this design method are 839 times higher than the literature LAD results for ternary separations with the same purity and similar yields.

Those skilled in the art will recognize that numerous modifications can be made to the specific implementations described above. The implementations should not be limited to the particular limitations described. Other implementations may be possible.

**Claims**

1. A method for designing an efficient separation process comprising the steps of:

    a. analyzing compositions of a feed mixture;
    b. selecting a sorbent, a displacer, and a presaturant;
    c. testing for intrinsic parameters of said sorbent and effective selectivity between any two components of said feed mixture;
    d. optimizing separation parameters using an algorithm based on the intrinsic parameters of selected sorbent, effective selectivity, components of said feed mixture, targeted yield and purity; and
    e. conducting said efficient separation process according to the optimized separation parameters,

wherein said algorithm for obtaining optimized parameters for said effective separation process comprises the steps of:

    a. collecting column radius, particle size, column capacity, bed void, particle porosity, displacer concentration, diffusivity coefficients, feed concentration and composition, selectivity, target yield, pressure limit, and purity cut;
    b. calculating an overall mass transfer coefficient;
    c. determining a nonideal factor from an empirical correlation;
    d. calculating a loading fraction based said nonideal factor;

e. calculating a flow rate for a plurality of column lengths based on said mass transfer coefficient;

f. verifying that said flow rate is permissible under a specified pressure limit;

g. determining productivity and selecting the highest productivity system; and

h. generating a set of optimized parameters for said efficient separation process.

**2.** The method of claim 1, further comprising a step of computational simulation for verification of the optimized separation parameters before conducting said efficient separation process of step e; wherein said computational simulation is a versatile reaction and separation (VERSE) model simulation.

**3.** The method of claim 1,
wherein testing for intrinsic parameters of said sorbent and effective selectivity between any two components of said feed mixture is carried out using a testing column of said sorbent; wherein said intrinsic parameters for the testing column comprises particle radius, particle porosity, bed void fraction, phase ratio, intra-particle diffusion coefficient, axial dispersion coefficient, interstitial velocity, viscosity, and column capacity.

**4.** The method of claim 1,
wherein said efficient separation process according to the optimized separation parameters is carried out using a column of specific inner diameter (ID) and length packed with said sorbent.

**5.** The method of claim 1,
wherein said composition analysis of a feed mixture comprises concentration of individual components, feeding volume, pH, and mole ratio of individual components.

**6.** The method of claim 1,
wherein said optimized separation parameters comprises feed loading volume, column length, linear velocity, and maximum displacer concentration.

**7.** The method of claim 1,
wherein said efficient separation process is a displacement chromatographic separation process, especially wherein said displacement chromatographic separation process is a ligand assisted displacement chromatographic separation process.

**8.** The method of claim 1,
wherein said efficient separation process is a binary or ternary chromatographic separation process.

**9.** The method of claim 1,
wherein said efficient separation process is a multicomponent chromatographic separation process.

**10.** The method of claim 1,
wherein said efficient separation process is a ligand assisted displacement chromatographic separation process.

**11.** The method of claim 1, wherein said efficient separation process is a batch wise process or wherein said efficient separation process is a continuous process.

**12.** The method of claim 1,
wherein said efficient separation is a multi-zone process, wherein major components of said feed mixture are separated and purified with a first column and minor components of the feed mixture are separated and purified with a second column.

**13.** The method of claim 1,
wherein said efficient separation is a two-step process, wherein major components of the feed mixture are separated and purified with a first column and minor components of the feed mixture are separated and purified with a second column.

**14.** The method of claim 1,
wherein said efficient separation is a multi-step preparation process, wherein components of said feed mixture are divided into a plurality of groups with components of each group having a similar concentration, and components of each group are separated and purified together with one preparation column using said optimized separation parameters; or wherein said efficient separation process is a multi-zone process, wherein components of similar concentrations are grouped and separated on one column using said optimized separation parameters.

15. A manufacture process incorporating the method of claims 1 - 14 in isolation and purification of a material of industrial importance.

**Patentansprüche**

1. Verfahren zum Betreiben eines effizienten Trennprozesses, das die folgenden Schritte umfasst:

a. Analysieren von Zusammensetzungen einer Eingangsmischung;
b. Auswählen eines Sorptionsmittels, eines Verdrängers und eines Vorbehandlungsmittels;
c. Prüfen auf intrinsische Parameter des Sorptionsmittels und der effektiven Selektivität zwischen zwei beliebigen Komponenten der Eingangsmischung;
d. Optimierung der Trennparameter unter Verwendung eines Algorithmus, der auf den intrinsischen Parametern des ausgewählten Sorptionsmittels, der effektiven Selektivität, den Komponenten der Eingangsmischung, der angestrebten Ausbeute und Reinheit basiert; und
e. Durchführen des effizienten Trennprozesses gemäß den optimierten Trennparametern,

wobei der Algorithmus zur Gewinnung optimierter Parameter für den effektiven Trennprozess die folgenden Schritte umfasst:

a. Sammeln von Säulenradius, Partikelgröße, Säulenkapazität, Bettleerraum, Partikelporosität, Verdrängerkonzentration, Diffusionskoeffizienten, Eingangskonzentration und Zusammensetzung des Einsatzmaterials, Selektivität, Zielausbeute, Druckgrenze und Reinheitsgrad;
b. Berechnung eines Gesamt-Massentransferkoeffizienten;
c. Bestimmung eines nicht-idealen Faktors aus einer empirischen Korrelation;
d. Berechnung eines Belastungsanteils auf der Grundlage des nicht-idealen Faktors;
e. Berechnung einer Durchflussmenge für eine Vielzahl von Säulenlängen auf der Grundlage des Massentransferkoeffizienten;
f. Überprüfung der Zulässigkeit der Durchflussmenge unter einem bestimmten Druckgrenzwert;
g. Ermittlung der Produktivität und Auswahl des Systems mit der höchsten Produktivität; und
h. Erzeugen eines Satzes von optimierten Parametern für den effizienten Trennprozess.

2. Verfahren nach Anspruch 1, das ferner einen Schritt der rechnerischen Simulation zur Überprüfung der optimierten Trennparameter vor der Durchführung des effizienten Trennprozesses von Schritt e umfasst, wobei die rechnerische Simulation eine vielseitige Reaktions- und Trennmodellsimulation (VERSE) ist.

3. Verfahren nach Anspruch 1,
wobei das Prüfen der intrinsischen Parameter des Sorptionsmittels und der effektiven Selektivität zwischen zwei beliebigen Komponenten der Eingangsmischung unter Verwendung einer Testsäule des Sorptionsmittels durchgeführt wird; wobei die intrinsischen Parameter für die Testsäule den Partikelradius, die Partikelporosität, den Bettleerraumanteil, das Phasenverhältnis, den Intrapartikeldiffusionskoeffizienten, den axialen Dispersionskoeffizienten, die interstitielle Geschwindigkeit, die Viskosität und die Säulenkapazität umfassen.

4. Verfahren nach Anspruch 1,
wobei der effiziente Trennprozess gemäß den optimierten Trennparametern unter Verwendung einer Säule mit einem bestimmten Innendurchmesser (ID) und einer bestimmten Länge, die mit dem Sorptionsmittel gefüllt ist, durchgeführt wird.

5. Verfahren nach Anspruch 1,
wobei die Analyse der Zusammensetzung einer Eingangsmischung die Konzentration der einzelnen Komponenten, das Eingangsvolumen, den pH-Wert und das Molverhältnis der einzelnen Komponenten umfasst.

6. Verfahren nach Anspruch 1,
wobei die optimierten Trennparameter das Eingangsvolumen, die Säulenlänge, die lineare Geschwindigkeit und die maximale Verdrängerkonzentration umfassen.

**7.** Verfahren nach Anspruch 1,
wobei das effiziente Trennverfahren ein verdrängungschromatographisches Trennverfahren ist, insbesondere wobei das verdrängungschromatographische Trennverfahren ein ligandenunterstütztes verdrängungschromatographisches Trennverfahren ist.

**8.** Das Verfahren nach Anspruch 1,
wobei das effiziente Trennverfahren ein binäres oder ternäres chromatographisches Trennverfahren ist.

**9.** Verfahren nach Anspruch 1,
wobei das effiziente Trennverfahren ein mehrkomponentiges chromatographisches Trennverfahren ist.

**10.** Verfahren nach Anspruch 1,
wobei das effiziente Trennverfahren ein ligandenunterstütztes verdrängungschromatographisches Trennverfahren ist.

**11.** Verfahren nach Anspruch 1, wobei der effiziente Trennprozess ein chargenweiser Prozess ist oder wobei der effiziente Trennprozess ein kontinuierlicher Prozess ist.

**12.** Verfahren nach Anspruch 1,
wobei es sich bei der effizienten Trennung um ein Mehrzonenverfahren handelt, bei dem Hauptbestandteile der Eingangsmischung mit einer ersten Säule abgetrennt und gereinigt werden und Nebenbestandteile der Eingangsmischung mit einer zweiten Säule abgetrennt und gereinigt werden.

**13.** Verfahren nach Anspruch 1,
wobei die effiziente Trennung ein zweistufiges Verfahren ist, bei dem die Hauptkomponenten der Eingangsmischung mit einer ersten Säule und die Nebenkomponenten der Eingangsmischung mit einer zweiten Säule getrennt und gereinigt werden.

**14.** Verfahren nach Anspruch 1,

wobei die effiziente Trennung ein mehrstufiger Aufbereitungsprozess ist, bei dem die Komponenten des Eingangsgemisches in eine Vielzahl von Gruppen aufgeteilt werden, wobei die Komponenten jeder Gruppe eine ähnliche Konzentration aufweisen, und die Komponenten jeder Gruppe zusammen mit einer Aufbereitungssäule unter Verwendung der optimierten Trennparameter getrennt und gereinigt werden; oder
wobei das effiziente Trennverfahren ein Mehrzonenverfahren ist, bei dem Komponenten ähnlicher Konzentrationen gruppiert und auf einer Säule unter Verwendung der optimierten Trennparameter getrennt werden.

**15.** Herstellungsverfahren, bei dem das Verfahren nach den Ansprüchen 1 bis 14 zur Isolierung und Reinigung eines Materials von industrieller Bedeutung angewendet wird.

**Revendications**

**1.** Méthode de conception d'un processus de séparation efficace comprenant les étapes suivantes :

a. l'analyse des compositions d'un mélange d'aliments pour animaux ;
b. la sélection d'un absorbant, d'un déplaceur et d'un présaturant ;
c. l'analyse des paramètres intrinsèques dudit sorbant et de la sélectivité effective entre les deux composants du mélange d'alimentation ;
d. optimiser les paramètres de séparation à l'aide d'un algorithme basé sur les paramètres intrinsèques du sorbant sélectionné, la sélectivité effective, les composants dudit mélange d'alimentation, le rendement et la pureté visés ; et
e. conduire ce processus de séparation efficace en fonction des paramètres de séparation optimisés,

dans lequel ledit algorithme permettant d'obtenir des paramètres optimisés pour ledit processus de séparation efficace comprend les étapes suivantes :

a. collecte du rayon de la colonne, de la taille des particules, de la capacité de la colonne, du vide du lit, de la porosité des particules, de la concentration du déplaceur, des coefficients de diffusivité, de la concentration et de la composition de l'alimentation, de la sélectivité, du rendement cible, de la limite de pression et de la coupure de pureté ;

b. le calcul d'un coefficient global de transfert de masse ;

c. la détermination d'un facteur non idéal à partir d'une corrélation empirique ;

d. calculer une fraction de chargement sur la base dudit facteur non idéal ;

e. calculer un débit pour plusieurs longueurs de colonne sur la base du coefficient de transfert de masse ;

f. vérifier que ce débit est admissible dans une limite de pression spécifiée ;

g. déterminer la productivité et sélectionner le système le plus productif ; et

h. générer un ensemble de paramètres optimisés pour ledit processus de séparation efficace.

2. La méthode de la revendication 1, comprenant en outre une étape de simulation informatique pour la vérification des paramètres de séparation optimisés avant d'effectuer le processus de séparation efficace de l'étape e ; dans laquelle ladite simulation informatique est une simulation de modèle de réaction et de séparation polyvalent (VERSE).

3. La méthode de la revendication 1,
Dans ce cas, les paramètres intrinsèques de la colonne d'essai comprennent le rayon des particules, la porosité des particules, la fraction de vide du lit, le rapport de phase, le coefficient de diffusion intra-particulaire, le coefficient de dispersion axiale, la vitesse interstitielle, la viscosité et la capacité de la colonne.

4. La méthode de la revendication 1,
dans lequel le processus de séparation efficace selon les paramètres de séparation optimisés est réalisé à l'aide d'une colonne d'un diamètre intérieur (DI) et d'une longueur spécifiques, garnie de ce sorbant.

5. La méthode de la revendication 1,
l'analyse de la composition d'un mélange d'aliments comprend la concentration des différents composants, le volume d'alimentation, le pH et le rapport molaire des différents composants.

6. La méthode de la revendication 1,
Les paramètres de séparation optimisés comprennent le volume d'alimentation, la longueur de la colonne, la vitesse linéaire et la concentration maximale du déplaceur.

7. La méthode de la revendication 1,
dans lequel ledit processus de séparation efficace est un processus de séparation chromatographique par déplacement, en particulier dans lequel ledit processus de séparation chromatographique par déplacement est un processus de séparation chromatographique par déplacement assisté par ligand.

8. La méthode de la revendication 1,
dans lequel ledit procédé de séparation efficace est un procédé de séparation chromatographique binaire ou ternaire.

9. La méthode de la revendication 1,
dans lequel ledit procédé de séparation efficace est un procédé de séparation chromatographique multicomposant.

10. La méthode de la revendication 1,
dans lequel ledit processus de séparation efficace est un processus de séparation chromatographique par déplacement assisté par ligand.

11. La méthode de la revendication 1, dans laquelle le processus de séparation efficace est un processus discontinu ou dans laquelle le processus de séparation efficace est un processus continu.

12. La méthode de la revendication 1,
dans lequel ladite séparation efficace est un processus multizone, dans lequel les composants majeurs dudit mélange d'alimentation sont séparés et purifiés dans une première colonne et les composants mineurs du mélange d'alimentation sont séparés et purifiés dans une deuxième colonne.

13. La méthode de la revendication 1,
dans lequel ladite séparation efficace est un processus en deux étapes, dans lequel les composants majeurs du mélange d'alimentation sont séparés et purifiés dans une première colonne et les composants mineurs du mélange d'alimentation sont séparés et purifiés dans une deuxième colonne.

14. La méthode de la revendication 1,

dans lequel ladite séparation efficace est un processus de préparation en plusieurs étapes, dans lequel les composants dudit mélange d'alimentation sont divisés en plusieurs groupes, les composants de chaque groupe ayant une concentration similaire, et les composants de chaque groupe sont séparés et purifiés ensemble avec une colonne de préparation en utilisant lesdits paramètres de séparation optimisés ; ou
dans lequel ce processus de séparation efficace est un processus multizone, dans lequel les composants de concentrations similaires sont regroupés et séparés sur une colonne à l'aide des paramètres de séparation optimisés.

15. Procédé de fabrication incorporant la méthode des revendications 1 à 14 dans l'isolation et la purification d'un matériau d'importance industrielle.

(A)

FIG. 1A

FIG. 1B

FIG. 2a

FIG. 2b

## Parameters

| | | | |
|---|---|---|---|
| $C_{f,i}$ | Feed concentration of component i | $R_p$ | Particle Radius |
| $V_f$ | Feed loading volume | $\mu$ | Viscosity |
| $\alpha_{i,j}^{sorbent}$ | Sorbent selectivity | $\Delta P_{max}$ | Pressure limit |
| $q_{max}$ | Column capacity | $L_f/L_{f,ideal}$ | Loading factor/ Ideal maximum feed loading factor |
| $C_D$ | Ligand concentration | $L_{MTZ,T}$ | Transient pattern mass transfer zone length |
| $\alpha_{i,j}^{ligand}$ | Ligand selectivity | $L_{MTZ,CP}$ | Constant pattern mass transfer zone length |
| $E_b$ | Axial dispersion coefficient | $Y_i$ | Yield of component i |
| $\varepsilon_b$ | Bed void Fraction | $\theta$ | Mass transfer zone boundary cut |
| $\varepsilon_p$ | Particle Porosity | $K_d$ | Dimensionless group related to the retention time of displacer |
| $D_p$ | Intra-particle Diffusivity | $N_D$ | Dimensionless group (intraparticle diffusion rate/convection rat) |
| $L_c$ | Column Length | $Pe_b$ | Peclet number in axial direction |
| $u_0$ | Interstitial Velocity | $L_{feed}$ | Column length occupied with feed loaded |

FIG. 3

FIG. 4

FIG. 5

FIG. 6

FIG. 7

FIG. 8

FIG. 9A

FIG. 9B

FIG. 10a

(a)

FIG. 10b

FIG. 10c

FIG. 10d

FIG. 11a

FIG. 11b

FIG. 11c

FIG. 11d

FIG. 12b

FIG. 12a

(a)

Major Components    Minor Components

Column 1

(b)

Major Components separated in column 1

Column 1

Minor components sent to column 2

Column 2

(c)

Begin collecting major component product

Column 1

Minor Components separated in column 2

Column 2

(d)

Collect major component product

Column 1

Begin collecting minor component product

Column 2

FIG. 13

FIG. 14a

FIG. 14b

FIG. 14c

FIG. 15

FIG. 16a

(a)

FIG. 16b

(b)

FIG. 17a

FIG. 17b

FIG. 18a

(a)

FIG. 18b

(b)

FIG. 18

FIG. 19a

(a)

Comp 3    Comp 2    Comp 1

$V_i$

Elution Volume (mL)

FIG. 19b

(b)

Comp 3    Comp 2    Comp 1

$V_x$

$V_i$

Elution Volume (mL)

FIG. 20

Given:
$$Y_i, x_i, \alpha_{i,j}^e, \theta, \varepsilon_b, \varepsilon_p, R_p,$$
$$K_{se}, q_{max}, D_b, D_p, \mu, ID$$

Calculate $\gamma_i$ for all components using Eq. (20e)

Choose the lowest $\gamma_i$ for yield requirements of all target components

Use Yield Equation to solve for $L_f k_{f,i}^*$ (Eq. (20b))

h-transformations to find $L_{f,max,id}$ for target components (Eq. 5-6)

Choose the lowest $\alpha^e$ among target components and calculate $\phi_{min,i}$ using Eq. (17)

Use $\phi_{min,i}$ and $L_{f,max,id}$ to solve for $L_f$ (Eq. (16))

Use $L_{f,max}$ to solve for $k_{f,i}^*$

$L_c = L_c^{(0)}$

Use $k_f^*$ to calculate $u_0$ using Eqs. (12-14)

Check $\Delta P_{max}$ using Eq. (28)

Pressure drop limit?

No → Increase $L_c$ $(L_c^{(1)} = L_c^{(0)} + \Delta L_c)$

Yes

Choose maximum $P_{R,i}$ case?

No → Choose specific $L_c$ and corresponding $u_0$ (Eq. (13-14))

Yes

Choose $L_{max}$ and corresponding $u_0$ (Eq. (13-14))

Use $L_{f,max}$ to solve for $V_f$

Check $c_{d,max}$ using Eq. (27)

$L_c, u_0, c_{d,max}, V_f$

FIG. 21

FIG. 22a

(a)

FIG. 22b

(b)

FIG. 22c

(c)

Design 3

Sm   Nd   Pr

pH

Concentration (N)

Ligand Elution Volume (V$_c$)

FIG. 22d

(d)

Design 1

Design 2A

Design 3

Sm

Pr

Nd

Literature
Sm/Nd/Pr

Yield of >99% Purity (%)

Productivity (kg REE/m$^3$ day)

FIG. 22

FIG. 23a   (a)

FIG. 23b   (b)

FIG. 24a  (a)

FIG. 24b  (b)

FIG. 25a

(a)

FIG. 25b

(b)

FIG. 26a    (a)

FIG. 26b    (b)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ABRAHAM, DS.** The Elements of Power: Gadgets, Guns, and the Struggle for a Sustainable Future in the Rare Metal Age. Yale University Press, 2015
- **LING, L et al.** *J. Chromatogr. A,* 2015, vol. 1389, 28-38
- **XIE F. et al.** *Miner. Eng.,* 2014, vol. 56, 10-28
- **POWELL, JE et al.** *Trans. Metall. Soc. AIME,* 1959, vol. 215, 457-463
- **SPEDDING, FH et al.** *J. Am. Chem. Soc.,* 1947, vol. 69, 2786-2792
- **SPEDDING, FH et al.** *J. Am. Chem. Soc.,* 1947, vol. 69, 2812-2818
- **SPEDDING, FH et al.** *J. Am. Chem. Soc.,* 1950, vol. 72, 2349-2354
- **SPEDDING, FH et al.** *J. Am. Chem. Soc.,* 1950, vol. 72, 2354-2361
- **JAMES DB et al.** *Inorg. Nucl. Chem.,* 1961, vol. 19, 133-141
- **SPEDDING FH et al.** *J. Am. Chem. Soc.,* 1956, vol. 1503, 34-37
- **LINDSTROM RE.** Separation of Rare-earth Elements in Bastnasite by Ion Exchange. University of Michigan Library, 1959
- **MOORE BW et al.** Rapid Separation of Heavy Rare-earth Elements. U.S. Dept. Of the Interior, Bureau of Mines, 1995
- **JEN S. et al.** *Theory of optimization of ideal displacement chromatography of binary mixtures*
- **LING LEI et al.** *Ligand-assisted elution chromatography for separation of lanthanides*
- **HOON CHOI ; DAVID HARVEY ; YI DING ; NIEN-HWA LINDA WANG.** Key parameters controlling the development of constant-pattern isotachic trains of two rare earth elements in ligand-assisted displacement chromatography. *J. Chromatogr. A,* 2018, vol. 1563, 47-61
- **HOON CHOI ; DAVID HARVEY ; YI DING ; NIEN-HWA LINDA WANG.** Constant-pattern design method for the separation of ternary mixtures of rare earth elements using ligand-assisted displacement chromatography. *Journal of Chromatography A,* 2018, https://doi.Org/10.1016/j.chroma.2018.09.056
- **A. TISELIU.** *Ark. Kemi. Mineral Geol.,* 1943, vol. 16A, 1-18
- **C.S. HORVATH et al.** *J. Chromatogr.,* 1981, vol. 218, 365-393
- **S. F. CHUNG ; C. Y. WEN.** *AIChE Journal,* 1968, vol. 14 (6), 857-866
- **E. J. WILSON ; C. J. GEANKOPLIS.** *Industrial & Engineering Chemistry Fundamentals,* 1966, vol. 5 (1), 9-14
- **BERNINGER et al.** *Computers and Chemical Engineering,* 1991, vol. 11 (11), 749-768
- **SPEDDING, FH et al.** *J. Am. Chem. Soc.,* 1951, vol. 73, 4840-4847
- **HELFFERICH F et al.** *J. Chromatogr.,* 1970, vol. 46, 1-28
- **ZHU, J et al.** *Biotechnol. Prog.,* 1993, vol. 9, 421-428
- **BERNINGER ; R. D. WHITLEY ; X. ZHANG ; N.-H. L. WANG.** *Computers and Chemical Engineering,* 1991, vol. 11 (11), 749-768
- **C.K. GUPTA ; N. KRISHNAMURTHY.** Extractive metallurgy of rare earths. CRC Press, 2005
- **HOWER et al.** *Coal Combustion and Gasification Products,* 2013, vol. 5, 73-78
- **H. CHOI et al.** *J. Chromatogr. A.,* 2018, vol. 1563, 47-61
- **F. HELFFERICH et al.** *J. Chromatogr.,* 1970, vol. 46, 1-28
- **H.K. RHEE et al.** *Chem. Eng. Sci.,* 1974, vol. 29, 2049-2060
- **J. ZHU et al.** *J. Chromatogr. A.,* 1994, vol. 659, 15-25
- **L. LING et al.** *J. Chromatogr. A.,* 2014, vol. 1355, 86-99
- **S. ERGUN.** *J. Chem. Eng. Prog.,* 1952, vol. 48, 89-94
- **F.H. SPEDDING et al.** *J. Am. Chem. Soc.,* 1950, vol. 72, 2354-2361
- **J. ZHANG et al.** Separation hydrometallurgy of rare earth elements. Springer, 2016
- **J.C. HOWER et al.** *Coal Combust. Gasif. Prod.,* 2013, vol. 5, 39-47